Europäisches Patentamt

European Patent Office

Office européen des brevets

(19)

(11) EP 0 919 048 B1

(12) EUROPEAN PATENT SPECIFICATION

(45) Date of publication and mention
of the grant of the patent:
**25.08.2004 Bulletin 2004/35**

(51) Int Cl.⁷: $G07F\ 19/00$, $G07F\ 17/00$

(21) Application number: **97933142.8**

(22) Date of filing: **17.06.1997**

(86) International application number:
**PCT/US1997/010405**

(87) International publication number:
**WO 1997/049074 (24.12.1997 Gazette 1997/55)**

(54) **A SYSTEM, METHOD AND ARTICLE OF MANUFACTURE FOR MULTIPLE-ENTRY POINT VIRTUAL POINT OF SALE ARCHITECTURE**

SYSTEM, VERFAHREN UND HERGESTELLTER GEGENSTAND FÜR DIE ARCHITEKTUR VIRTUELLER VERKAUFSPUNKTE MIT MEHREREN EINGANGSPUNKTEN

SYSTEME, PROCEDE ET ARTICLE MANUFACTURE POUR ARCHITECTURE DE POINT DE VENTE VIRTUEL A PLUSIEURS POINTS D'ENTREE

(84) Designated Contracting States:
**DE FR GB IE**

(30) Priority: **17.06.1996 US 672346**
            **17.06.1996 US 664824**

(43) Date of publication of application:
**02.06.1999 Bulletin 1999/22**

(73) Proprietor: **Hewlett-Packard Company**
**Fort Collins, CO 80527-2400 (US)**

(72) Inventors:
• **WEBER, Jay, C.**
  **Menlo Park, CA 94025 (US)**
• **BERGER, David, A.**
  **San Mateo, CA 94403 (US)**
• **ARORA, Atul**
  **San Jose, CA 95131 (US)**

(74) Representative: **Garratt, Peter Douglas et al**
**Mathys & Squire**
**100 Grays Inn Road**
**London WC1X 8AL (GB)**

(56) References cited:
**EP-A- 0 501 697        EP-A- 0 658 862**
**WO-A-96/13013**

• **BELLARE M ET AL: "IKP - A FAMILY OF SECURE ELECTRONIC PAYMENT PROTOCOLS" PROCEEDINGS OF THE USENIX WORKSHOP OF ELECTRONIC COMMERCE, 11 July 1995, pages 89-106, XP000579445**
• **MAO W: "ON TWO PROPOSALS FOR ON-LINE BANKCARD PAYMENTS USING OPEN NETWORKS: PROBLEMS AND SOLUTIONS" PROCEEDINGS IEEE SYMPOSIUM ON SECURITY AND PRIVACY, 6 May 1996, pages 201-210, XP000600082**

**EP 0 919 048 B1**

## Description

### Field Of The Invention

The present invention relates to the secure, electronic payment in exchange for goods and services purchased over a communication network, and more specifically, to a system, method and article of manufacture for securely transmitting payment information from a customer to a merchant to a payment gateway and returning a certification, including a credit confidence factor to allow a merchant to determine whether to accept or reject payment information utilizing a flexible, extensible architecture.

The present invention relates to an electronic graphical representation of a monetary system for implementing electronic money payments as an alternative medium of economic exchange to cash, checks, credit and debit cards, and electronic funds transfer. The Electronic-Monetary System is a hybrid of currency, check, card payment systems, and electronic funds transfer systems, possessing many of the benefits of these systems with few of their limitations. The system utilizes electronic representations of money which are designed to be universally accepted and exchanged as economic value by subscribers of the monetary system.

Today, approximately 350 billion coin and currency transactions occur between individuals and institutions every year. The extensive use of coin and currency transactions has limited the automation of individual transactions such as purchases, fares, and bank account deposits and withdrawals. Individual cash transactions are burdened by the need to have the correct amount of cash or providing change therefor. Furthermore, the handling and managing of paper cash and coins is inconvenient, costly and time consuming for both individuals and financial institutions.

Although checks may be written for any specific amount up to the amount available in the account, checks have very limited transferability and must be supplied from a physical inventory. Paper-based checking systems do not offer sufficient relief from the limitations of cash transactions, sharing many of the inconveniences of handling currency while adding the inherent delays associated with processing checks. To this end, economic exchange has striven for greater convenience at a lower cost, while also seeking improved security.

Automation has achieved some of these qualities for large transactions through computerized electronic funds transfer ("EFT") systems. Electronic funds transfer is essentially a process of value exchange achieved through the banking system's centralized computer transactions. EFT services are a transfer of payments utilizing electronic "checks," which are used primarily by large commercial organizations.

The Clearing House (ACH) where a user can enter a pre-authorized code and download information with billing occurring later, and a Point Of Sale (POS) system where a transaction is processed by connecting with a central computer for authorization for the transaction granted or denied immediately are examples of EFT systems that are utilized by retail and commercial organizations. However, the payments made through these types of EFT systems are limited in that they cannot be performed without the banking system. Moreover, ACH transactions usually cannot be performed during off business hours.

Home Banking bill payment services are examples of an EFT system used by individuals to make payments from a home computer. Currently, home banking initiatives have found few customers. Of the banks that have offered services for payments, account transfers and information over the telephone lines using personal computers, less than one percent of the bank's customers are using the service. One reason that Home Banking has not been a successful product is because the customer cannot deposit and withdraw money as needed in this type of system.

Current EFT systems, credit cards, or debit cards, which are used in conjunction with an on-line system to transfer money between accounts, such as between the account of a merchant and that of a customer, cannot satisfy the need for an automated transaction system providing an ergonomic interface. Examples of EFT systems which provide non-ergonomic interfaces are disclosed in US Patents Numbers 5,476,259; 5,459,304; 5,452,352; 5,448,045; 5,478,993; 5,455,407; 5,453,601; 5,465,291; and 5,485,510.

To implement an automated, convenient transaction that can dispense some form of economic value, there has been a trend towards off-line payments. For example, numerous ideas have been proposed for some form of "electronic money" that can be used in cashless payment transactions as alternatives to the traditional currency and check types of payment systems. See U.S. Pat. No. 4,977,595, entitled "METHOD AND APPARATUS FOR IMPLEMENTING ELECTRONIC CASH," and U.S. Pat. No. 4,305,059, entitled "MODULAR FUNDS TRANSFER SYSTEM."

The more well known techniques include magnetic stripe cards purchased for a given amount and from which a prepaid value can be deducted for specific purposes. Upon exhaustion of the economic value, the cards are thrown away. Other examples include memory cards or so called smart cards which are capable of repetitively storing information representing value that is likewise deducted for specific purposes.

It is desirable for a computer operated under the control of a merchant to obtain information offered by a customer and transmitted by a computer operating under the control of the customer over a publicly accessible packet-switched network (e.g., the Internet) to the computer operating under the control of the merchant, without risking the exposure of the information to interception by third parties that have access to the network, and to assure that the

2

information is from an authentic source. It is further desirable for the merchant to transmit information, including a subset of information provided by the customer, over such a network to a payment gateway computer system that is designated, by a bank or other financial institution that has the responsibility of providing payment on behalf of the customer, to authorize a commercial transaction on behalf of such a financial institution, without the risk of exposing that information to interception by third parties. Such institutions include, for example, financial institutions offering credit or debit card services.

One such attempt to provide such a secure transmission channel is a secure payment technology such as Secure Electronic Transaction (hereinafter "SET'), jointly developed by the Visa and MasterCard card associations, and described in *Visa and MasterCard's Secure Electronic Transaction (SET) Specification*, February 23, 1996, hereby incorporated by reference. Other such secure payment technologies include Secure Transaction Technology ("STT"), Secure Electronic Payments Protocol ("SEPP"), Internet Keyed Payments ("iKP"), Net Trust and Cybercash Credit Payment Protocol. One of ordinary skill in the art readily comprehends that any of the secure payment technologies can be substituted for the SET protocol without undue experimentation. Such secure payment technologies require the customer to operate software that is compliant with the secure payment technology, interacting with third-party certification authorities, thereby allowing the customer to transmit encoded information to a merchant, some of which may be decoded by the merchant, and some which can be decoded only by a payment gateway specified by the customer.

Reference is directed in the same connection to Mao W: *"On Two Proposals for On-line Bankcard Payments using Open Networks: Problems and Solutions"* Proceedings IEEE Symposium on Security and Privacy, 6 May 1996, pages 201-210, XP000600082.

It discloses a typical buyer-seller-acquirer constellation in an online electronic payment environment using cryptographic technologies. The seller sends any sales information to the buyer which confirms his purchase order to the seller together with payment instructions PI. Thereafter, the seller requests authorisation for this session form the acquirer. Having received any appropriate responses, a confirmation is send to the buyer. Then, the buyer sends his payment key K - together with a timestamp - as a response to be verified by the seller. The seller will now verify this signature.

Another such attempt to provide such a secure transmission channel is a general-purpose secure communication protocol such as Netscape, Inc.'s Secure Sockets Layer (hereinafter "SSL") , as described in Freier, Karlton & Kocher (hereinafter "Freier"), *The SSL* Protocol *Version 3.0,* March 1996, and hereby incorporated by reference. SSL provides a means for secure transmission between two computers. SSL has the advantage that it does not require special-purpose software to be installed on the customer's computer because it is already incorporated into widely available software that many people utilize as their standard Internet access medium, and does not require that the customer interact with any third-party certification authority. Instead, the support for SSL may be incorporated into software already in use by the customer, e.g., the Netscape Navigator World Wide Web browsing tool. However, although a computer on an SSL connection may initiate a second SSL connection to another computer, a drawback to the SSL approach is each SSL connection supports only a two-computer connection. Therefore, SSL does not provide a mechanism for transmitting encoded information to a merchant for retransmission to a payment gateway such that a subset of the information is readable to the payment gateway but not to the merchant. Although SSL allows for robustly secure two-party data transmission, it does not meet the ultimate need of the electronic commerce market for robustly secure three-party data transmission. Other examples of general-purpose secure communication protocols include Private Communications Technology ("PCT") from Microsoft, Inc., Secure Hyper-Text Transport Protocol ("SHTTP") from Terisa Systems, Shen, Kerberos, Photuris, Pretty Good Privacy ("PGP") which meets the IPSEC criteria. One of ordinary skill in the art readily comprehends that any of the general-purpose secure communication protocols can be substituted for the SSL transmission protocol without undue experimentation.

Banks desire an Internet payment solution that emulates existing Point of Sale (POS) applications that are currently installed on their host computers, and require minimal changes to their host systems. This is a critical requirement since any downtime for a banks host computer system represents an enormous expense. Currently, VeriFone supports over fourteen hundred different payment-related applications. The large number of applications is necessary to accommodate a wide variety of host message formats, diverse methods for communicating to a variety of hosts with different dial-up and direct-connect schemes, and different certification around the world. In addition, there are a wide variety of business processes that dictate how a Point of Sale (POS) terminal queries a user for data and subsequently displays the data. Also, various vertical market segments, such as hotels, car rental agencies, restaurants, retail sales, mail sales / telephone sales require interfaces for different types of data to be entered, and provide different discount rates to merchants for complying with various data types. Moreover, a plethora of report generation mechanisms and formats are utilized by merchants that banking organisation work with.

Banks are unwilling to converge on "standards" since convergence would facilitate switching from one acquiring bank to another by merchants. In general, banks desire to increase the cost that a merchant incurs in switching from one acquiring bank to another acquiring bank. This is accomplished by supplying a merchant with a terminal that only communicates utilizing the bank's proprietary protocol, and by providing other value-added services that a merchant may not be able to obtain at another bank.

Internet-based payment solutions require additional security measures that are not found in conventional POS terminals. This additional requirement is necessitated because Internet communication is done over publicly-accessible, unsecured communication line in stark contrast to the private, secure, dedicated phone or leased line service utilized between a traditional mechant and an acquiring bank. Thus, it is critical that any solution utilizing the Internet for a communication backbone, employ some form of cryptography.

As discussed above, the current state-of-the-art in Internet based payment processing is a protocol referred to as SET. Since the SET messages are uniform across all implementations, banks cannot differentiate themselves in any reasonable way. Also, since SET is not a proper superset of all protocols utilized today, there are bank protocols which cannot be mapped or translated into SET because they require data elements for which SET has no placeholder. Further, SET only handles the message types directly related to authorizing and capturing credit card transactions and adjustments to these authorizations or captures. In a typical POS terminal in the physical world, these messages comprise almost the entire volume of the total number of messages between the merchant and the authorizing bank, but only half of the total number of different message types.

These message types, which are used infrequently, but which are critical to the operation of the POS terminal must be supported for proper transaction processing.

## SUMMARY OF THE INVENTION

In accordance with one aspect of the present invention, there is provided a method for communicating between a server and a payment gateway, comprising the steps of:

receiving data into the server, the server processing data for two or more storefronts, each storefront corresponding to a particular merchant;
parsing the data and determining which of the two or more merchants is associated with the data;
generating a formatted transaction in accordance with a predefined syntax;
encrypting the formatted transaction digital credentials associated with the merchant associated with the data;
establishing a communication link between the server and the payment gateway; and transmitting the encrypted transaction across the communication link from the server to the payment gateway.

In another aspect, the present invention consists in apparatus for communicating between a server and a payment gateway comprising:

a means for receiving data into the server, the server processing data for two or more storefronts, each storefront corresponding to a particular merchant;
a means for parsing the data and determining which of the two merchants is associated with the data;
a means for generating a formatted transaction in accordance with a predefined syntax;
a means for encrypting the formatted transaction using digital credentials associated with the merchant associated with the data;
a means for establishing a communication link between the server and the payment gateway; and
a means for transmitting the encrypted transaction across the communication link from the server to the payment gateway.

## DESCRIPTION OF THE DRAWINGS

The foregoing and other objects, aspects and advantages are better understood from the following detailed description of a preferred embodiment of the invention with reference to the drawings, in which:-

Figure 1A is a block diagram of the representative hardware environment in accordance with a preferred embodiment;
Figure 1B depicts an overview in accordance with a preferred embodiment;
Figure 1C is a block diagram of the system in accordance with a preferred embodiment;
Figure 2 depicts a more detailed view of a customer computer system in communication with merchant system under the Secure Sockets Layer protocol in accordance with a preferred embodiment;
Figure 3 depicts an overview of the method of securely supplying payment information to a payment gateway in order to obtain payment authorization in accordance with a preferred embodiment;
Figure 4 depicts the detailed steps of generating and transmitting a payment authorization request in accordance with a preferred embodiment;

Figures 5A and 5F depict views of the payment authorization request and its component parts in accordance with a preferred embodiment;

Figures 6A and 68 depict the detailed steps of processing a payment authorization request and generating and transmitting a payment authorization request reponse in accordance with a preferred embodiment;

Figures 7A through 7J depict views of the payment authorization response and its component parts in accordance with a preferred embodiment;

Figure 8 depicts the detailed steps of processing a payment authorization response in accordance with a preferred embodiment;

Figure 9 depicts an overview of the method of securely supplying payment capture information to a payment gateway in accordance with a preferred embodiment;

Figure 10 depicts the detailed steps of generating and transmitting a payment capture request in accordance with a preferred embodiment;

Figures 11A through 11F depict views of the payment capture request and its component parts in accordance with a preferred embodiment;

Figures 12A and 12B depict the detailed steps of processing a payment capture request and generating and transmitting a payment capture request response in accordance with a preferred embodiment;

Figures **13A** through **13F** depict views of the payment capture response and its component parts in accordance with a preferred embodiment;

Figure **14** depicts the detailed steps of processing a payment capture response in accordance with a preferred embodiment;

**Figure 15A & 15B** depicts transaction processing of merchant and consumer transactions in accordance with a preferred embodiment;

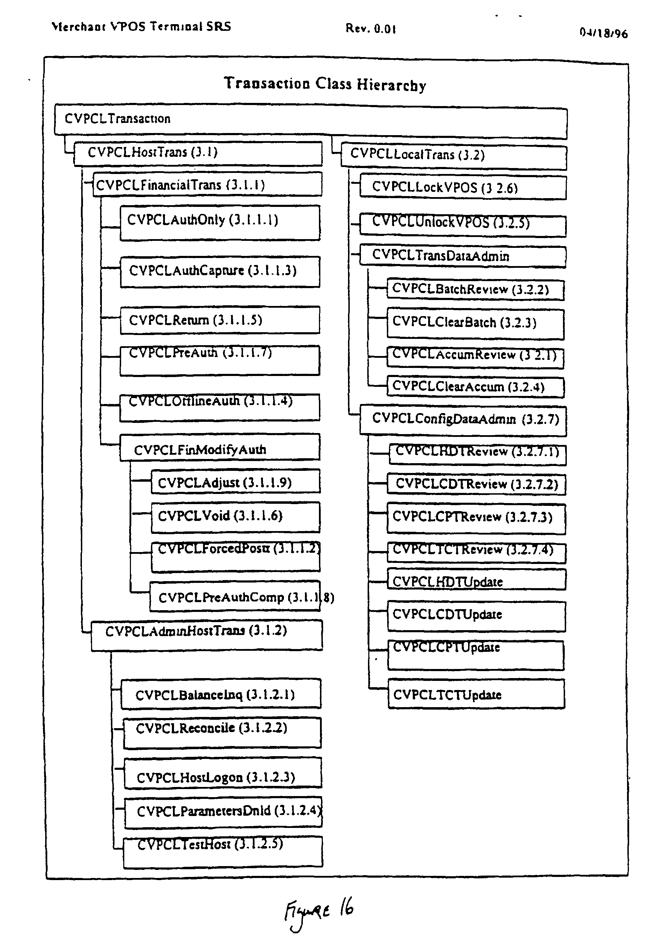

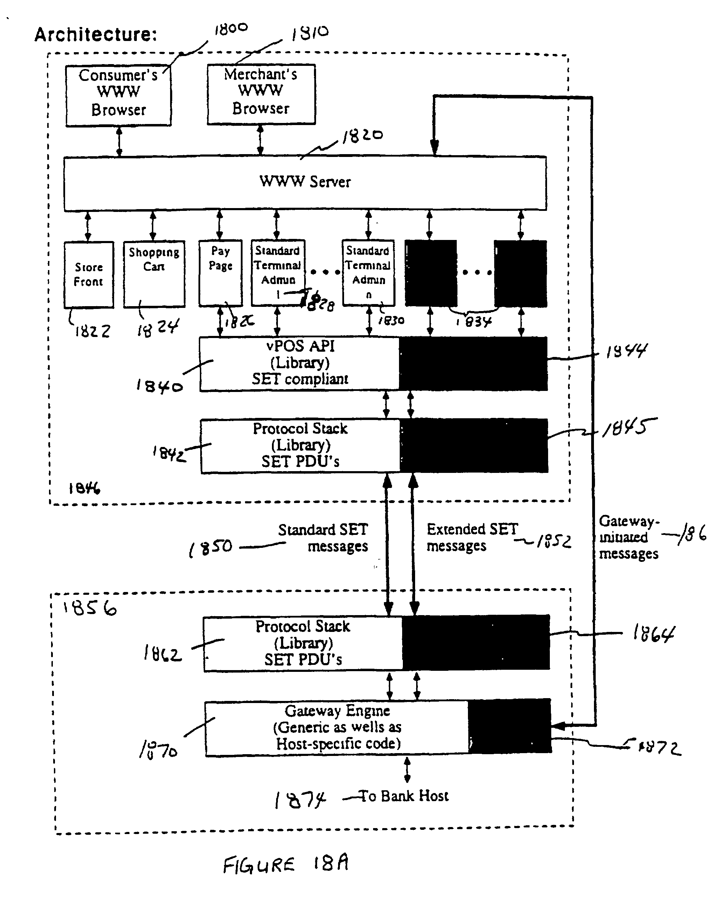

Figure **16** illustrates a transaction class hierarchy block diagram in accordance with a preferred embodiment;

Figure **17** shows a typical message flow between the merchant, vPOS terminal and the Gateway in accordance with a preferred embodiment;

Figures **18A-E** are block diagrams of the extended SET architecture in accordance with a preferred embodiment;

Figure **19** is a flowchart of vPOS merchant pay customization in accordance with a preferred embodiment;

Figures **20A-20H** are block diagrams and flowcharts setting forth the detailed logic of thread processing in accordance with a preferred embodiment;

Figure **21** is a detailed diagram of a multithreaded gateway engine in accordance with a preferred embodiment;

Figure **22** is a flow diagram in accordance with a preferred embodiment;

Figure **23** illustrates a Gateway's role in a network in accordance with a preferred embodiment;

Figure **24** is a block diagram of the Gateway in accordance with a preferred embodiment;

Figure **25** is a block diagram of the vPOS Terminal Architecture in accordance with a preferred embodiment;

Figure **26** is an architecture block diagram in accordance with a preferred embodiment;

Figure **27** is a block diagram of the payment manager architecture in accordance with a preferred embodiment;

Figure **28** is a Consumer Payment Message Sequence Diagram in accordance with a preferred embodiment of the invention;

Figure **29** is an illustration of a certificate issuance form in accordance with a preferred embodiment;

Figure **30** illustrates a certificate issuance response in accordance with a preferred embodiment;

Figure **31** illustrates a collection of payment instrument holders in accordance with a preferred embodiment;

Figure **32** illustrates the default payment instrument bitmap in accordance with a preferred embodiment;

Figure **33** illustrates a selected payment instrument with a fill in the blanks for the cardholder in accordance with a preferred embodiment;

Figure **34** illustrates a coffee purchase utilizing the newly defined VISA card in accordance with a preferred embodiment of the invention;

Figure **35** is a flowchart of conditional authorization of payment in accordance with a preferred embodiment;

Figures **36-48** are screen displays in accordance with a preferred embodiment;

Figure **49** shows how the vPOS authenticates an incoming response to a request in accordance with a preferred embodiment;

Figure **50** is a flowchart for the merchant interaction with the Test Gateway in accordance with a preferred embodiment;

Figures **51-61** are flowcharts depicting the detailed logic of the gateway in accordance with a preferred embodiment;

Figure **62** is the main administration display for the Gateway in accordance with a preferred embodiment;

Figure **63** is a configuration panel in accordance with a preferred embodiment.

Figure **64** is a host communication display for facilitating communication between the gateway and the acquirer payment host m accordance with a preferred embodiment;

Figure **65** is a Services display in accordance with a preferred embodiment; and
Figure **66** is a graphical representation of the gateway transaction database in accordance with a preferred embodiment.

## DETAILED DESCRIPTION

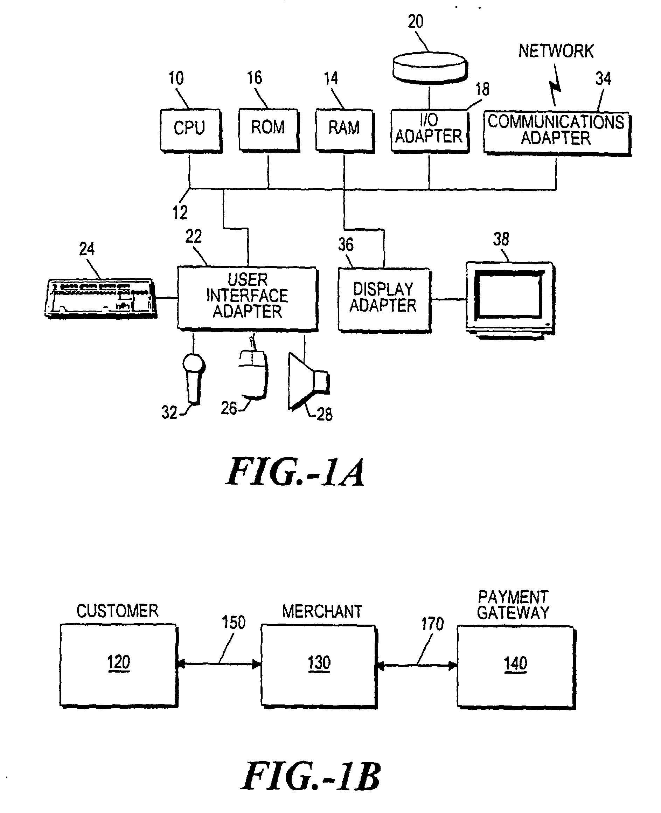

A preferred embodiment of a system in accordance with the present invention is preferably practiced in the context of a personal computer such as the IBM PS/2, Apple Macintosh computer or UNIX based workstation. A representative hardware environment is depicted in Figure **1A**, which illustrates a typical hardware configuration of a workstation in accordance with a preferred embodiment having a central processing unit **10,** such as a microprocessor, and a number of other units interconnected via a system bus **12.** The workstation shown in Figure **1A** includes a Random Access Memory (RAM) **14,** Read Only Memory (ROM) **16,** an I/O adapter **18** for connecting peripheral devices such as disk storage units **20** to the bus **12**, a user interface adapter **22** for connecting a keyboard **24**, a mouse **26**, a speaker **28**, a microphone **32**, and/or other user interface devices such as a touch screen (not shown) to the bus **12**, communication adapter **34** for connecting the workstation to a communication network (e.g., a data processing network) and a display adapter **36** for connecting the bus **12** to a display device **38**. The workstation typically has resident thereon an operating system such as the Microsoft Windows NT or Windows/95 Operating System (OS), the IBM OS/2 operating system, the MAC OS, or UNIX operating system. Those skilled in the art will appreciate that the present invention may also be implemented on platforms and operating systems other than those mentioned.

A preferred embodiment is written using JAVA, C, and the C++ language and utilizes object oriented programming methodology. Object oriented programming (OOP) has become increasingly used to develop complex applications. As OOP moves toward the mainstream of software design and development, various software solutions require adaptation to make use of the benefits of OOP. A need exists for these principles of OOP to be applied to a messaging interface of an electronic messaging system such that a set of OOP classes and objects for the messaging interface can be provided.

Thus, as object-oriented programming solutions are applied to various problems and programming tasks, significant reductions in the design and development effort for software can be achieved. A preferred embodiment of the invention utilizes HyperText Markup Language (HTML) to implement documents on the Internet together with a general-purpose secure communication protocol for a transport medium between the client and the merchant. HTTP or other protocols could be readily substituted for HTML without undue experimentation. Information on these products is available in T. Berners-Lee, D. Connoly, "RFC 1866: Hypertext Markup Language - 2.0" (Nov. 1995); and R. Fielding, H, Frystyk, T. Berners-Lee, J. Gettys and J.C. Mogul, "Hypertext T ransfer Protocol -- HTTP/1.1: HTTP Working Group Internet Draft" (May 2, 1996). HTML is a simple data format used to create hypertext documents that are portable from one platform to another. HTML documents are SGML documents with generic semantics that are appropriate for representing information from a wide range of domains. HTML has been in use by the World-Wide Web global information initiative since 1990. HTML is an application of ISO Standard 8879:1986 Information Processing Text and Office Systems; Standard Generalized Markup Language (SGML). Sun's JAVA allows developers to create robust User Interface (UI) components. Custom "widgets" (e.g. real-time stock tickers, animated icons, etc.) can be created, and client-side performance is improved. Unlike HTML, Java supports the notion of client-side validation, offloading appropriate processing onto the client for improved performance. Dynamic, real-time Web pages can be created. Using the above-mentioned custom UI components, dynamic Web pages can also be created.

Sun's Java language has emerged as an industry-recognized language for "programming the Internet." Sun defines Java as: "a simple, object-oriented, distributed, interpreted, robust, secure, architecture-neutral, portable, high-performance, multithreaded, dynamic, buzzword-compliant, general-purpose programming language. Java supports programming for the Internet in the form of platform-independent Java applets." Java applets are small, specialized applications that comply with Sun's Java Application Programming Interface (API) allowing developers to add "interactive content" to Web documents (e.g. simple animations, page adornments, basic games, etc.). Applets execute within a Java-compatible browser (e.g. Netscape Navigator) by copying code from the server to client. From a language standpoint, Java's core feature set is based on C++. Sun's Java literature states that Java is basically "C++, with extensions from Objective C for more dynamic method resolution". Another technology that provides similar function to JAVA is provided by Microsoft and ActiveX Technologies, to give developers and Web designers wherewithal to build dynamic content for the Internet and personal computers. ActiveX includes tools for developing animation, 3-D virtual reality, video and other multimedia content. The tools use Internet standards, work on multiple platforms, and are being supported by over 100 companies. The group's building blocks are called ActiveX Controls, small, fast components that enable developers to embed parts of software in hypertext markup language (HTML) pages. ActiveX Controls work with a variety of programming languages including Microsoft Visual C++, Borland Delphi, Microsoft Visual Basic programming system and, in the future, Microsoft's development tool for Java, code named "Jakarta." ActiveX Technologies also includes ActiveX Server Framework, allowing developers to create server applications. One of ordinary skill in the art readily recognizes that ActiveX could be substituted for JAVA without undue experimentation to practice the invention. Figure **1B** depicts an overview of the present invention. Customer computer system **120** is in communication with merchant computer system **130.** The customer-merchant session **150** operates under a general-purpose secure communication protocol such as the SSL protocol. Merchant computer system **130** is additionally in communication with payment gateway computer system **140**. A payment gateway is a system that provides electronic commerce services in support of a bank or other financial institution, and that interfaces to the financial institution to support the authorization and capture of transactions. The customer-institution session **170** operates under a variant of a secure payment technology such as the SET protocol, as described herein, referred to as Merchant-Originated Secure Electronic Transactions ("MOSET"), as is more fully described herein.

## Customer-to-Merchant Communication

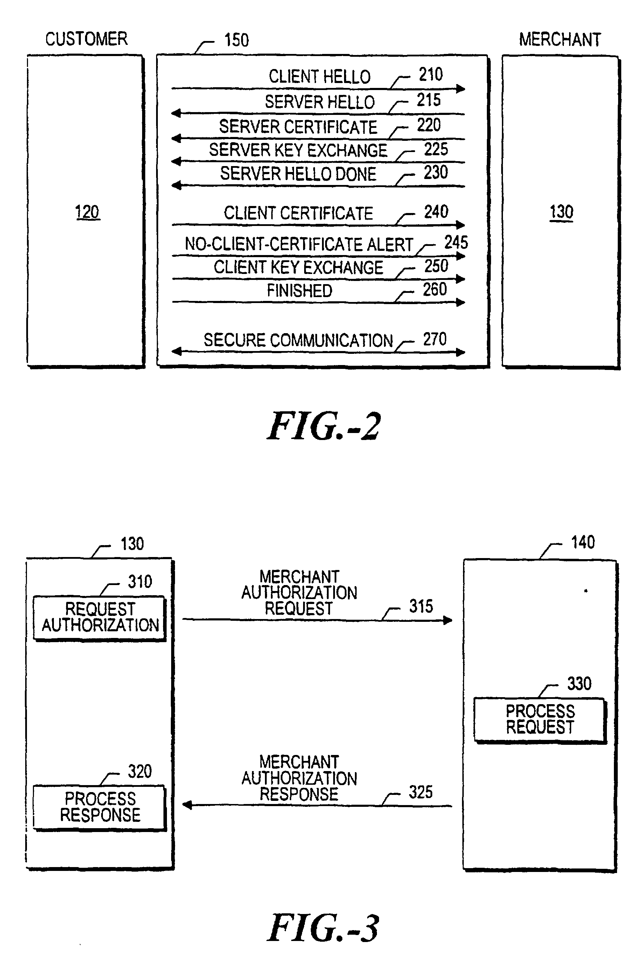

Figure **2** depicts a more detailed view of customer computer system **120** in communication with merchant system **130** using customer-merchant session **150** operating under the SSL protocol as documented in Freier and incorporated by reference. Customer computer system **120** initiates communication with merchant computer system **130** using any well-known access protocol, e.g., Transmission Control Protocol/Internet Protocol ("TCP/IP"). A description of TCP/IP is provided in Information Sciences Institute, "Transmission Control Protocol DARPA Internet Program Protocol Specification (RFC 793)" (September, 1981), and Information Sciences Institute, "Internet Protocol DARPA Internet Program Protocol Specification (RFC 791)" (September, 1981). In this implementation, customer computer system **120** acts as a client and merchant computer system **130** acts as a server.

Customer computer system **120** initiates communication by sending "client hello" message **210** to the merchant computer system **130**. When a client first connects to a server it is required to send the client hello message **210** as its first message. The client can also send a client hello message **210** in response to a hello request on its own initiative in order to renegotiate the security parameters in an existing connection. The client hello message includes a random structure, which is used later in the protocol. Specifically, the random structure includes the current time and date in standard UNIX 32-bit format according to the sender's internal clock and twenty-eight bytes of data generated by a secure random number generator. The client hello message **210** further includes a variable length session identifier. If not empty, the session identifier value identifies a session between the same client and server whose security parameters the client wishes to reuse. The session identifier may be from an earlier connection, the current connection, or another currently active connection. It is useful to specify the current connection if the client only wishes to update the random structures and derived values of a connection. It is useful to specify another currently active connection if the client wishes to establish several simultaneous independent secure connections to the same server without repeating the full handshake protocol. Client hello message **210** further includes an indicator of the cryptographic algorithms supported by the client in order of the client's preference, ordered according to client preference.

In response to client hello message **210**, if merchant computer system **130** wishes to correspond with customer computer system **120,** it responds with server hello message **215.** If merchant computer system **130** does not wish to communicate with customer computer system **120,** it responds with a message, not shown, indicating refusal to communication. Server hello message **215** includes a random structure, which is used later in the protocol. The random structure in server hello message **215** is in the same format as, but has contents independent of, the random structure in client hello message **210.** Specifically, the random structure includes the current time and date in standard UNIX 32-bit format according to the sender's internal clock and twenty-eight bytes of data generated by a secure random number generator. Server hello message **215** further includes a variable length session identifier. The session identifier value identifies a new or existing session between the same client and server. Server hello message **215** further includes an indicator of the cryptographic algorithms selected from among the algorithms specified by client hello message **210**, which is utilized in further encrypted communications.

Optionally, Merchant computer system **130** transmits a server certificate **220**. If transmitted, server certificate **130** enables customer computer system **120** to authenticate the identity of merchant computer system **130**. If merchant computer system **130** does not transmit a server certificate **220**, or if server certificate **220** is suitable only for authentication, it may optionally transmit a server key exchange message **225.** Server key exchange message **225** identifies a key that may be used by customer computer system **120** to decrypt further messages sent by merchant computer system **130.** After transmitting server hello message **215**, and optionally transmitting server certificate **220** or server key exchange message **225,** merchant computer system **130** transmits a server hello done message **230** and waits for a further response from customer computer system **120**.

Customer computer system **120** optionally transmits client certificate **240** to merchant computer system **130.** If transmitted, client certificate **240** enables merchant computer system **130** to authenticate the identity of customer computer system **120**. Alternatively, customer computer system **120** may transmit a no-client-certificate alert **245**, to indicate that the customer has not registered with any certification authority. If customer computer system **130** does not transmit a client certificate **240**, or if client certificate **240** is suitable only for authentication, customer computer system **130** may optionally transmit a client key exchange message **250**. Client key exchange message **250** identifies a key that may be used by merchant computer system **130** to decrypt further messages sent by customer computer system **120**. After optionally transmitting client certificate **240,** no-client-certificate alert **245,** and/or client key exchange message **250,** customer computer system **120** transmits a finished message **260.**

At this point, customer computer system **120** and merchant computer system 130 have:

1) negotiated an encryption scheme that may be commonly employed in further communications, and
2) have communicated to each other a set of encryption keys that may be used to decrypt further communications between the two computer systems.

Customer computer system **120** and merchant computer system **130** may thereafter engage in secure communications **270** with less risk of interception by third parties. Among the messages communicated by customer computer system **120** to merchant computer system **130** may be messages that specify goods or services to be ordered and payment information, such as a credit card number and related information, collectively referred to as "payment information," that may be used to pay for the goods and/or services ordered. In order to obtain payment, the merchant must supply this information to the bank or other payment gateway responsible for the proffered payment method. This enables the merchant to perform payment authorization and payment capture. Payment authorization is the process by which permission is granted by a payment gateway operating on behalf of a financial institution to authorize payment on behalf of the financial institution. This is a process that assesses transaction risk, confirms that a given transaction does not raise the account holder's debt above the account's credit limit, and reserves the specified amount of credit. Payment capture is the process that triggers the movement of funds from the financial institution to the merchant's account after settlement of the account.

**Payment Authorization**

Merchants utilize point-of-sale products for credit and debit transactions on a daily basis. An embodiment in accordance with the subject invention allows an acquirer processor to accept transactions from Internet storefronts without altering a current host environment. The system easily converts payment protocol messages and simultaneously manages transactions from a number of Internet merchant servers. As the number of transactions grows, the payment gateway can be scaled to handle the increased business, and it can be configured to work with specific business processes used by the acquirer/processor. Thus, the payment gateway supports Internet processing utilizing payment processing operations.

The payment gateway provides support for configuring and installing the Internet payment capability utilizing existing host point-of-sale technology. The payment gateway also provides an intuitive Graphical User Interface (GUI) with support built in to accommodate future payment instruments such as debit cards, electronic checks, electronic cash and micropayments. The payment gateway implements secure transactions using RSA public-key cryptography and the MasterCard/Visa Secure Electronic Transaction (SET) protocol. The gateway also provides full functionality for merchant payment processing including authorization, capture, settlement and reconciliation while providing monitor activity with reporting and tracking of transactions sent over the Internet. Finally, the payment gateway also implements Internet payment procedures that match current processor business models to ensure consistency for merchants. Handling Internet transactions is destined to become a necessary function for every payment procrocessing system. Today, merchants often transmit data received over the Internet inefficiently. Some fax the information or waste time keying data into a non-Internet system.

Figure **3** depicts an overview of the method of securely supplying payment information to a payment gateway in order to obtain payment authorization. In function block **310,** merchant computer system **130** generates a payment authorization request **315** and transmits it to payment gateway computer system **140**. In function block **330,** payment gateway system **140** processes the payment authorization request, generates a payment authorization response **325** and transmits it to merchant computer system **130**. In function block **320**, merchant computer system **130** processes payment authorization response **325** and determines whether payment for the goods or services sought to be obtained by the customer has been authorized.

**Payment Authorization Request Generation**

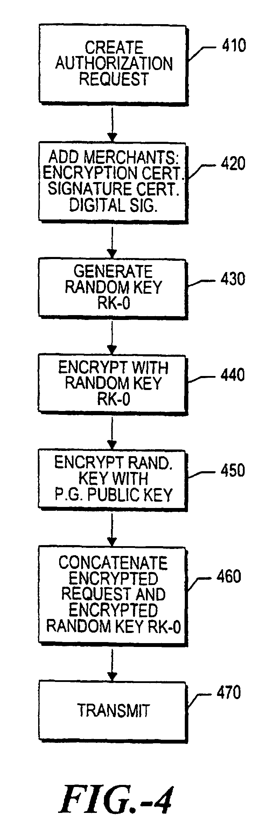

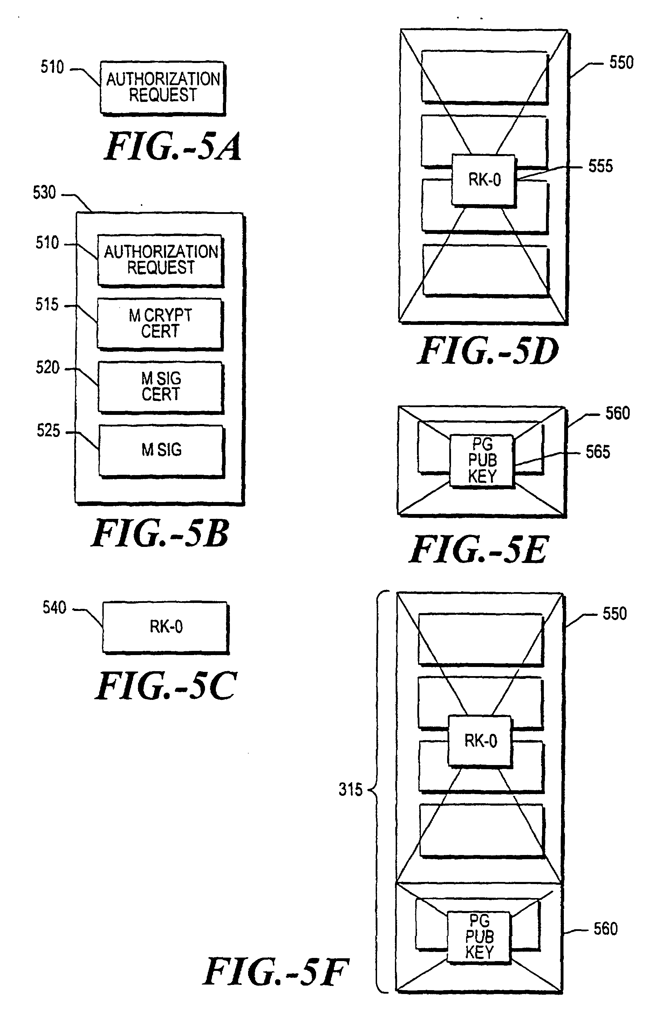

Figure **4** depicts the detailed steps of generating and transmitting a payment authorization request. Figures **5A** through **5F** depict views of the payment authorization request and its component parts. In function block **410**, merchant computer system **130** creates a basic authorization request **510**. The basic authorization request is a data area that includes all the information for determining whether a request should be granted or denied.

Specifically, it includes such information as the party who is being charged, the amount to be charged, the account number of the account to be charged, and any additional data, such as passwords, needed to validate the charge. This information is either calculated based upon prior customer merchandise selection, or provided by the customer over the secure link **270** established in the customer-merchant general-purpose secure communication protocol session. Fig **5A** depicts a basic authorization request **510**.

In function block **420**, merchant computer system **130** combines basic authorization request **510**, a copy of its encryption public key certificate **515** and a copy of its signature public key certificate **520**. Merchant computer system **130** calculates a digital signature **525** for the combined contents of the combined block **530** comprising basic authorization request **510**, the encryption public key certificate **515** and the signature public key certificate **520**, and appends it to the combination of the combined basic authorization request **510,** the encryption public key certificate **515** and the signature public key certificate **520**. The merchant computer system calculates digital signature **525** by first calculating a "message digest" based upon the contents of the combined basic authorization request **510**, the encryption public key certificate **515** and the signature public key certificate **520**. A message digest is the fixed-length result that is generated when a variable length message is fed into a one-way hashing function. Message digests help verify that a message has not been altered because altering the message would change the digest. The message digest is then encrypted using the merchant computer system's **130** digital signature private key, thus forming a digital signature.

Figure **5B** depicts the combined block **530** formed by function block **420** and containing basic authorization request **510,** the encryption public key certificate **515,** the signature public key certificate **520**, and digital signature **525**. In function block **430**, merchant computer system **130** generates a random encryption key RK-0 **540**, denoted as RK-0. Random encryption key RK-0 **540** is a symmetric encryption key. A symmetric encryption key is a key characterized by the property that a message encrypted with a symmetric key can be decrypted with that same key. This is contrasted with an asymmetric key pair, such as a public-key/private-key key pair, where a message encrypted with one key of the key pair may only be decrypted with the other key of the same key pair. Figure 5C depicts random encryption key RK-0 **540**.

In function block **440**, merchant computer system **130** encrypts combined block **530** using random encryption key RK-0 **540** to form encrypted combined block **550**. Figure 5D depicts encrypted combined block **550**. The encryption state of encrypted combined block **550** is graphically shown by random key lock **555,** which indicates that encrypted combined block **550** is encrypted using random key RK-0 **540**. In function block **450**, merchant computer system **130** encrypts random encryption key RK-0 **540** using the public key of payment gateway system **140** to form encrypted random key **560**. Figure **5E** depicts encrypted random key **560**. The encryption state of encrypted random key **560** is graphically shown by payment gateway public key lock **565**, which indicates that encrypted random key **560** is encrypted using the payment gateway public key. In function block **460**, merchant computer system **130** concatenates encrypted combined block **550** and encrypted random key 560 to form merchant authorization request **315**. Figure **5F** depicts merchant authorization request **315** comprising encrypted combined block **550** and encrypted random key **560.** In function block **470,** merchant computer system **130** transmits merchant authorization request **315** to payment gateway system **140**.

### Payment Authorization Request Processing

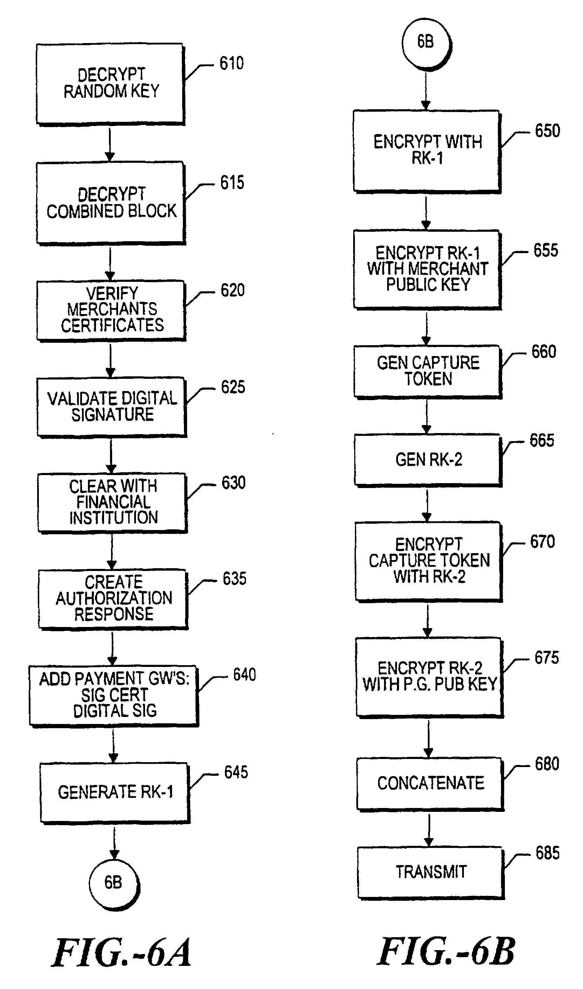

Figure **6** depicts the detailed steps of processing a payment authorization request and generating and transmitting a payment authorization request response. Function blocks **610** through **630** depict the steps of processing a payment authorization request, while function blocks **635** through **685** depict the steps of generating and transmitting a payment authorization request response. In function block **610,** payment gateway computer system **140** applies its private key to encrypted random key **560** contained within received merchant authorization request **315,** thereby decrypting it and obtaining a cleartext version of random key RK-0 **540**. In function block **615**, payment gateway computer system **140** applies random key RK-0 **540** to encrypted combined block **550**, thereby decrypting it and obtaining a cleartext version of combined block **530**. Combined block **530** comprises basic authorization request **510,** a copy of merchant computer system's **130** encryption public key certificate **515** and a copy of merchant computer system's **130** signature public key certificate **520,** as well as merchant digital signature **525.**

In function block **620**, payment gateway computer system **140** verifies merchant computer system's **130** encryption public key certificate **515** and merchant computer system's **130** signature public key certificate **520**. Payment gateway computer system **140** performs this verification by making a call to the certification authorities associated with each certificate. If verification of either certificate fails, payment gateway computer system **140** rejects the authorization request. In function block **625**, payment gateway computer system **140** validates merchant digital signature **525.** Payment gateway computer system **140** performs this validation by calculating a message digest over the contents of the combined basic authorization request **510**, the encryption public key certificate **515** and the signature public key certificate **520**. Payment gateway computer system **140** then decrypts digital signature **525** to obtain a copy of the equivalent message digest calculated by merchant computer system **130** in function block **420**. If the two message digests are equal, the digital signature **525** is validated. If validation fails, payment gateway computer system **140** rejects the authorization request. In function block **630**, payment gateway computer system **140** determines the financial institution for which authorization is required by inspection of basic authorization request **510**. Payment gateway computer system **140** contacts the appropriate financial institution using a secure means, e.g, a direct-dial modem-to-modem connection, or a proprietary internal network that is not accessible to third parties, and using prior art means, obtains a response indicating whether the requested payment is authorized.

**Payment Authorization Response Generation**

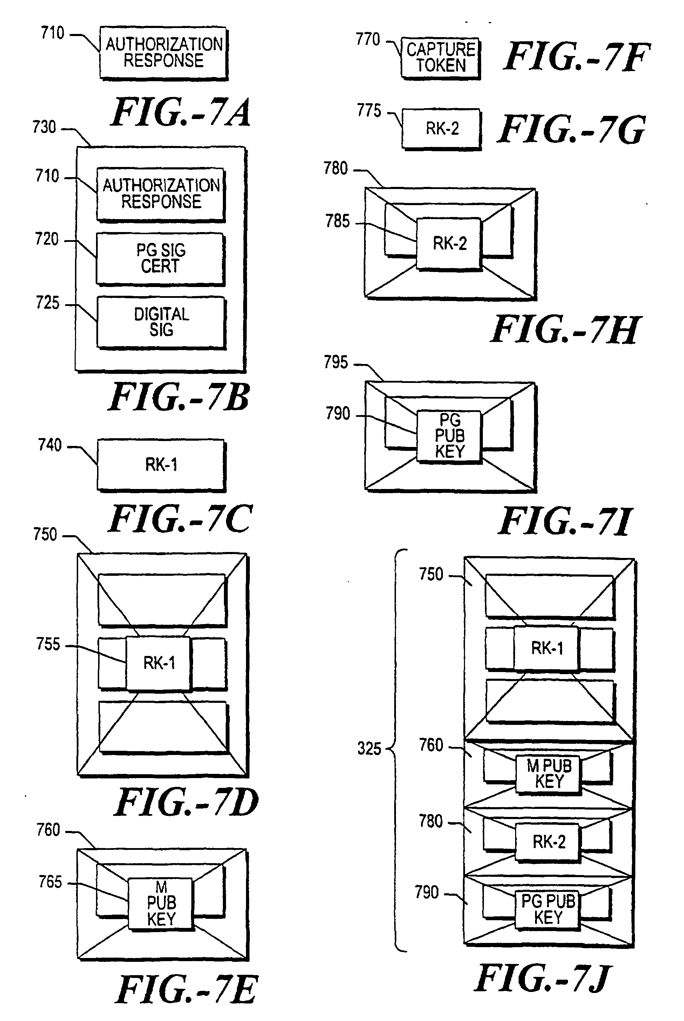

Function blocks **635** through **685** depict the steps of generating and transmitting a payment authorization request response. Figures **7A** through **7J** depict views of the payment authorization response and its component parts. In function block **635,** payment gateway computer system **140** creates a basic authorization response **710.** The basic authorization request is a data area that includes all the information to determine whether a request was granted or denied. Figure **7A** depicts basic authorization response **710**. In function block **640,** payment gateway computer system **140** combines basic authorization response **710**, and a copy of its signature public key certificate **720.** Payment computer system **140** calculates a digital signature **725** for the combined contents of the combined block **730** comprising basic authorization response **710** and the signature public key certificate **720,** and appends the signature to the combination of the combined basic authorization response **710** and the signature public key certificate **720.** The payment gateway computer system calculates digital signature **725** by first calculating a message digest based on the contents of the combined basic authorization response **710** and signature public key certificate **720.** The message digest is then encrypted using the merchant computer system's **140** digital signature private key, thus forming a digital signature.

Figure **7B** depicts the combined block **730** formed in function block **640** and containing basic authorization response **710**, the signature public key certificate **720**, and digital signature **725.** In function block **645,** payment gateway computer system **150** generates a first symmetric random encryption key **740,** denoted as RK-1. Figure **7C** depicts first random encryption key RK-1 **740**. In function block **650,** payment gateway computer system **140** encrypts combined block **730** using random encryption key RK-1 **740** to form encrypted combined block **750**. Figure **7D** depicts encrypted combined block **750.** The encryption state of encrypted combined block **750** is graphically shown by random key lock **755,** which indicates that encrypted combined block **750** is encrypted using random key RK-1 **740**. In function block **655,** payment gateway computer system **140** encrypts random encryption key RK-1 **740** using the public key of merchant computer system **130** to form encrypted random key RK **760**. Figure **7E** depicts encrypted random key RK-1 **760**. The encryption state of encrypted random key **760** is graphically shown by merchant public key lock **765,** which indicates that encrypted random key **760** is encrypted using the merchant public key. In function block **660,** payment gateway computer system **140** generates a random capture token **770.** Random capture token **770** is utilized in subsequent payment capture processing to associate the payment capture request with the payment authorization request being processed. Figure **7F** depicts capture token **775**. In function block **665,** payment gateway computer system **140** generates a second symmetric random encryption key **775,** denoted as RK-2. Figure **7G** depicts second random encryption key RK-2 **775**. In function block **670,** payment gateway computer system **140** encrypts capture token **770** using random encryption key RK-2 **770** to form encrypted capture token **780**. Figure **7H** depicts encrypted capture token **780**. The encryption state of encrypted capture token **780** is graphically shown by random key lock **785,** which indicates that encrypted capture token **780** is encrypted using random key RK-2 **770**. In function block **675,** payment gateway computer system **140** encrypts second random encryption key RK-2 **775** using its own public key to form encrypted random key RK-2 **790**. Figure **7I** depicts encrypted random key RK-2 **790**. The encryption state of encrypted random key **790** is graphically shown by payment gateway public key lock **795,** which indicates that encrypted random key **790** is encrypted using the payment gateway public key. In function block **680,** payment gateway computer system **140** concatenates encrypted combined block **750**, encrypted random key RK-1 **760**, encrypted capture token **780** and encrypted random key RK-2 **790** to form merchant authorization response **325.** Figure **7J** depicts merchant authorization response **325** comprising encrypted combined block **750**, encrypted random key RK-1 **760**, encrypted capture token **780** and encrypted random key RK-2 **790**. In function block **685,** payment gateway computer system **140** transmits merchant authorization response **325** to merchant system **130**.

**Payment Authorization Response Processing**

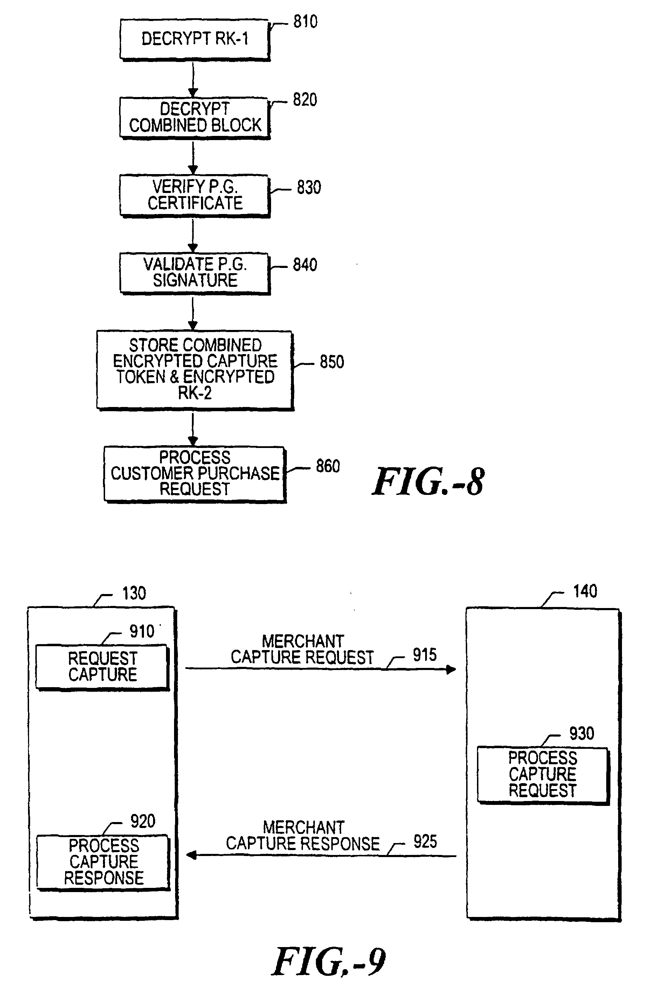

Figure **8** depicts the detailed steps of processing a payment authorization response. In function block **810**, merchant computer system **130** applies its private key to encrypted random key RK-1 **760** contained within received merchant authorization response **325,** thereby decrypting it and obtaining a cleartext version of random key RK-1 **740**. In function block **820,** merchant computer system **130** applies random key RK-1 **740** to encrypted combined block **750**, thereby decrypting it and obtaining a cleartext version of combined block **730**. Combined block **730** comprises basic authorization response **710**, a copy of payment gateway computer system's **140** signature public key certificate **720**, as well as payment gateway digital signature **725.** In function block **830**, merchant computer system **130** verifies payment gateway computer system's **140** signature public key certificate **720**. Merchant computer system **130** performs this verification by making a call to the certification authority associated with the certificate. If verification of the certificate fails, merchant computer system **130** concludes that the authorization response is counterfeit and treats it though the authorization request had been rejected. In function block **840,** merchant computer system **130** validates payment gateway digital signature **725**. Merchant computer system **130** performs this validation by calculating a message digest over the contents of the combined basic authorization request **710** and the signature public key certificate **720**. Merchant computer system **130** then decrypts digital signature **725** to obtain a copy of the equivalent message digest calculated by payment gateway computer system **140** in function block **640**. If the two message digests are equal, the digital signature **725** is validated. If validation fails, concludes that the authorization response is counterfeit and treats it though the authorization request had been rejected. In function block **850,** merchant computer system **130** stores encrypted capture token **780** and encrypted random key RK-2 **790** for later use in payment capture. In function block **860,** merchant computer system **130** processes the customer purchase request in accordance with the authorization response **710**. If the authorization response indicates that payment in authorized, merchant computer system **130** fills the requested order. If the authorization response indicates that payment is not authorized, or if merchant computer system **130** determined in function block **830** or **840** that the authorization response is counterfeit, merchant computer system **130** indicates to the customer that the order cannot be filled.

**Payment Capture**

Figure **9** depicts an overview of the method of securely supplying payment capture information to payment gateway **140** in order to obtain payment capture. In function block **910**, merchant computer system **130** generates a merchant payment capture request **915** and transmits it to payment gateway computer system **140**. In function block **930**, payment gateway system **140** processes the payment capture request **915,** generates a payment capture response **925** and transmits it to merchant computer system **130.** In function block **920**, merchant computer system **130** processes payment capture response 925 and verifies that payment for the goods or services sought to be obtained by the customer have been captured.

**Payment Capture Request Generation**

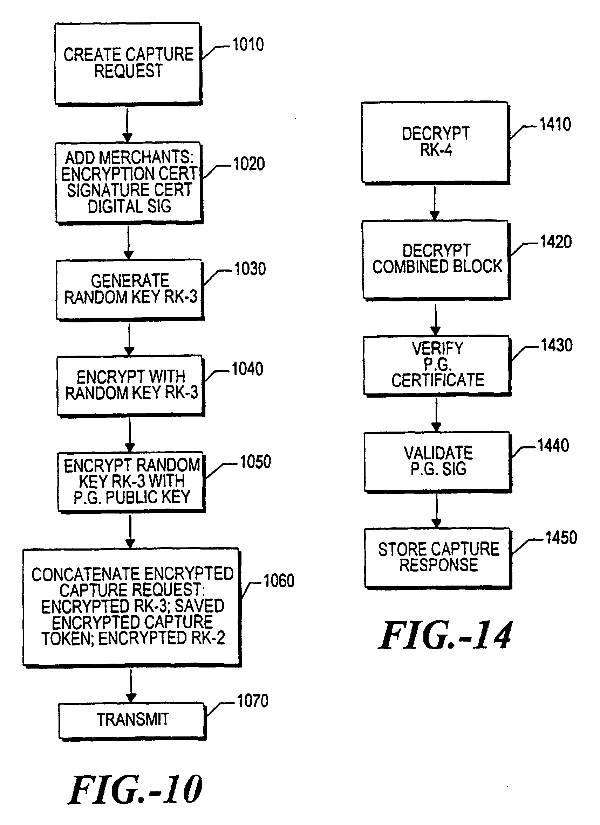

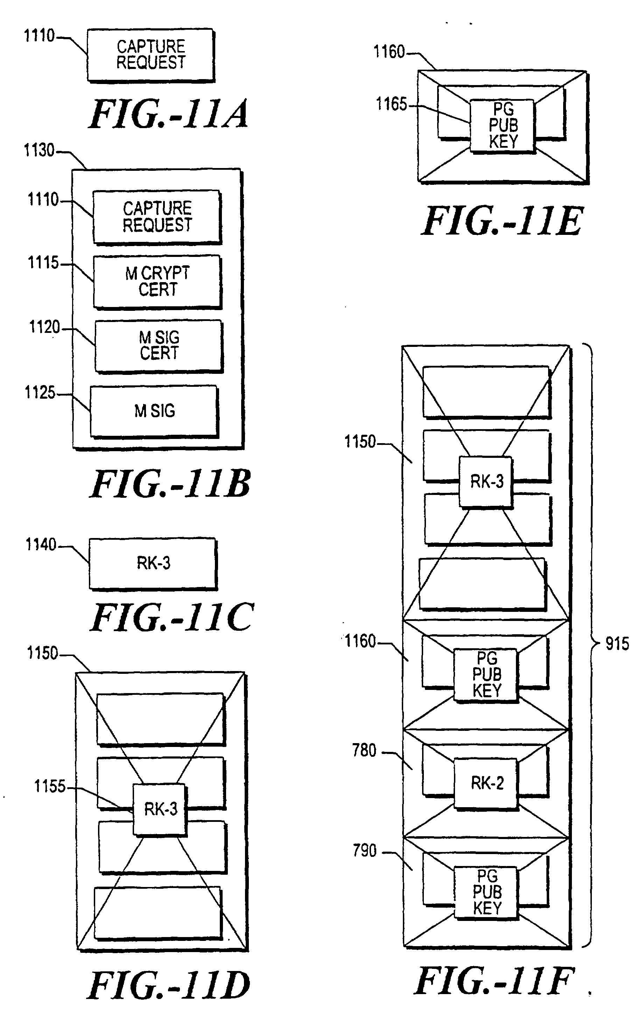

Figure **10** depicts the detailed steps of generating and transmitting a payment capture request. Figures **11A** through **11F** depict views of the payment capture request and its component parts. In function block **1010,** merchant computer system **130** creates a basic capture request **510.** The basic capture request is a data area that includes all the information needed by payment gateway computer system **140** to trigger a transfer of funds to the merchant operating merchant computer system **130.** Specifically, a capture request includes a capture request amount, a capture token, a date, summary information of the purchased items and a Merchant ID (MID) for the particular merchant. Figure **11A** depicts basic authorization request **1110.** In function block **1020,** merchant computer system **130** combines basic capture request **1110**, a copy of its encryption public key certificate **1115** and a copy of its signature public key certificate **1120.** Merchant computer system **130** calculates a digital signature **1125** for the combined contents of the combined block **1130** comprising basic capture request **1110,** the encryption public key certificate **1115** and the signature public key certificate **1120**, and appends it to the combination of the combined basic capture request **1110**, the encryption public key certificate **1115** and the signature public key certificate **1120.** The merchant computer system calculates digital signature **1125** by first calculating a message digest over the contents of the combined basic capture request **1110,** the encryption public key certificate **1115** and the signature public key certificate **1120.** The message digest is then encrypted using the merchant computer system's **130** digital signature private key, thus forming a digital signature.

Figure **11B** depicts the combined block **1130** formed by function block **1020** and containing basic capture request **1110**, the encryption public key certificate **1115**, the signature public key certificate **1120,** and digital signature **1125.** In function block **1030,** merchant computer system **130** generates a random encryption key **1140**, denoted as RK-3. Random encryption key RK-3 **1140** is a symmetric encryption key. Figure **11C** depicts random encryption key RK-3 **1140.** In function block **1040,** merchant computer system **130** encrypts combined block **1130** using random encryption key RK-3 **1140** to form encrypted combined block **1150.** Figure **11D** depicts encrypted combined block **1150.** The encryption state of encrypted combined block **1150** is graphically shown by random key lock **1155,** which indicates that encrypted combined block **1150** is encrypted using random key RK-3 **1140.** In function block **1050,** merchant computer system **130** encrypts random encryption key RK-3 **1140** using the public key of payment gateway system **140** to form encrypted random key **1160.** Figure **11E** depicts encrypted random key **1160.** The encryption state of encrypted random key **1160** is graphically shown by payment gateway public key lock **1165**, which indicates that encrypted random key RK-3 **1160** is encrypted using the payment gateway public key. In function block **1060,** merchant computer system **130** concatenates encrypted combined block **1150,** encrypted random key **1160,** and the encrypted capture token **780** and encrypted random key RK-2 **790** that were stored in function block **850** to form merchant capture request **915**. Figure **11F** depicts merchant capture request **915,** comprising encrypted combined block **1150,** encrypted random key **1160,** encrypted capture token **780** and encrypted random key RK-2 **790**. In function block **1070,** merchant computer system **130** transmits merchant capture request **915** to payment gateway system **140.**

**Payment Capture Request Processing**

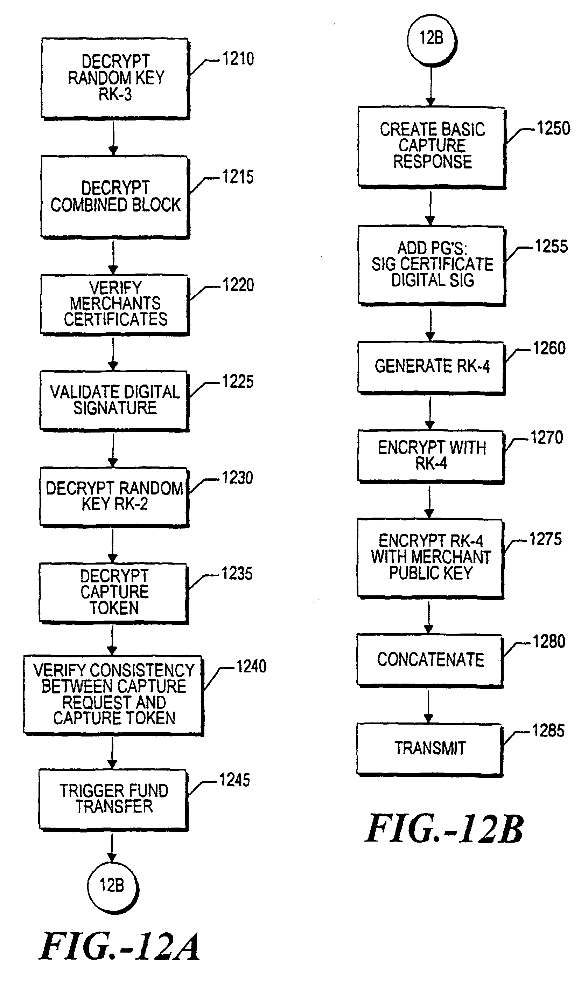

Figure **12** depicts the detailed steps of processing a payment capture request and generating and transmitting a payment capture request response. Function blocks **1210** through **1245** depict the steps of processing a payment capture request, while function blocks **1250** through **1285** depict the steps of generating and transmitting a payment capture request response. In function block **1210**, payment gateway computer system **140** applies its private key to encrypted random key **1160** contained within received merchant capture request **915**, thereby decrypting it and obtaining a cleartext version of random key RK-3 **1140**. In function block **1215,** payment gateway computer system **140** applies random key RK-3 **1140** to encrypted combined block **1150,** thereby decrypting it and obtaining a cleartext version of combined block **1130**. Combined block **1130** comprises basic capture request **1110**, a copy of merchant computer system's **130** encryption public key certificate **1115** and a copy of merchant computer system's **130** signature public key certificate **1120**, as well as merchant digital signature **1125.** In function block **1220**, payment gateway computer system **140** verifies merchant computer system's **130** encryption public key certificate **1115** and merchant computer system's **130** signature public key certificate **1120**. Payment gateway computer system **140** performs this verification by making a call to the certification authorities associated with each certificate. If verification of either certificate fails, payment gateway computer system **140** rejects the capture request. In function block **1225**, payment gateway computer system **140** validates merchant digital signature **1125**. Payment gateway computer system **140** performs this validation by calculating a message digest over the contents of the combined basic capture request **1110**, the encryption public key certificate **1115** and the signature public key certificate **1120**. Payment gateway computer system **140** then decrypts digital signature **1125** to obtain a copy of the equivalent message digest calculated by merchant computer system **130** in function block **1020**. If the two message digests are equal, the digital signature **1125** is validated. If validation fails, payment gateway computer system **140** rejects the capture request. In function block **1230,** payment gateway computer system **140** applies its private key to encrypted random key RK-2 **790** contained within received merchant capture request **915**, thereby decrypting it and obtaining a cleartext version of random key RK-2 **775.** In function block **1235,** payment gateway computer system **140** applies random key RK-2 **775** to encrypted capture token **780**, thereby decrypting it and obtaining a cleartext version of capture token **770**. In function block **1240,** payment gateway computer system **140** verifies that a proper transaction is being transmitted between capture token **780** and capture request **1110**. A capture token contains data that the gateway generates at the time of authorization. When the authorization is approved, the encrypted capture token is given to the merchant for storage. At the time of capture, the merchant returns the capture token to the gateway along with other information required for capture. Upon receipt of the capture token, the gateway compares a message made of the capture request data and the capture token data and transmits this information over a traditional credit/debit network. If an improperly formatted transaction is detected, payment gateway computer system **140** rejects the capture request. In function block **1245**, payment gateway computer system **140** determines the financial institution for which capture is requested by inspection of basic capture request **1110**. Payment gateway computer system **140** contacts the appropriate financial institution using a secure means, e. g, a direct-dial modem-to-modem connection, or a proprietary internal network that is not accessible to third parties, and using prior art means, instructs a computer at the financial institution to perform the requested funds transfer after settlement.

**Payment Capture Response Generation**

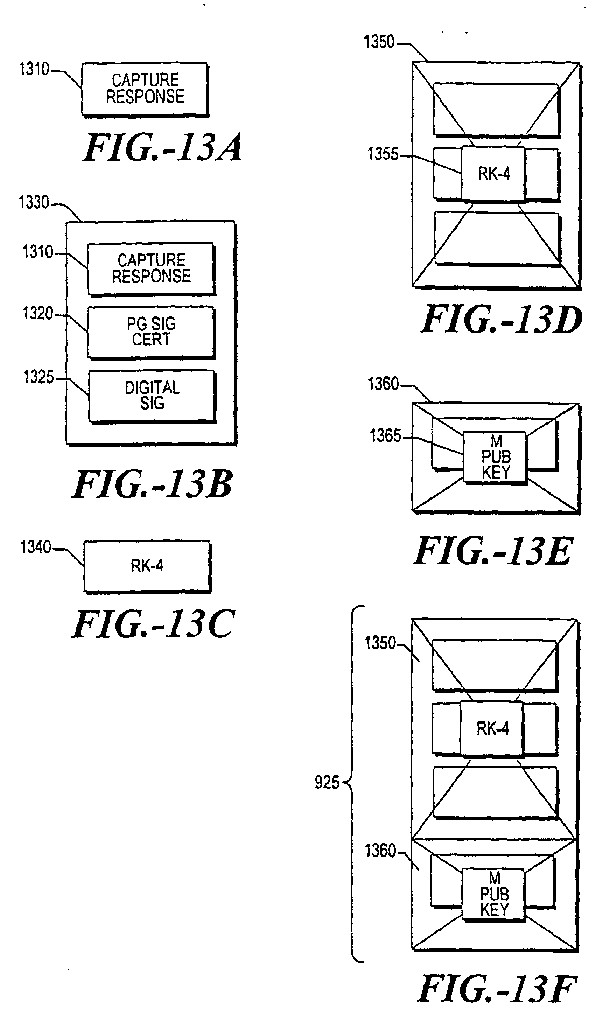

Function blocks **1250** through **1285** depict the steps of generating and transmitting a payment capture request response. Figures **13A** through **13F** depict views of the payment capture response and its component parts. In function block **1250,** payment gateway computer system **140** creates a basic capture response **710**. The basic capture request is a data area that includes all the information to indicate whether a capture request was granted or denied. Figure **13A** depicts basic authorization request **1310**. In function block **1255,** payment gateway computer system **140** combines basic capture response **1310**, and a copy of its signature public key certificate **1320**. Payment computer system **140** calculates a digital signature **1325** for the combined contents of the combined block **1330** comprising basic capture response **1310** and the signature public key certificate **1320,** and appends the signature to the combination of the combined basic authorization request **1310** and the signature public key certificate **1320**. The payment gateway computer system calculates digital signature **1325** by first calculating a message digest over the contents of the combined basic capture response **1310** and signature public key certificate **720**. The message digest is then encrypted using the merchant computer system's **140** digital signature private key, thus forming a digital signature.
Figure **13B** depicts the combined block **1330** formed by function block **1255** and containing basic capture request **1310,** the signature public key certificate **1320,** and digital signature **1325**. In function block **1260,** payment gateway computer system **140** generates a symmetric random encryption key **1340,** denoted as RK-4. Figure **13C** depicts random encryption key RK-4 **1340**. In function block **1275,** payment gateway computer system **140** encrypts combined block **1330** using random encryption key RK-4 **1340** to form encrypted combined block **1350**. Figure **13D** depicts encrypted combined block **1350**. The encryption state of encrypted combined block **1350** is graphically shown by random key lock **1355**, which indicates that encrypted combined block **1350** is encrypted using random key RK-4 **1340**. In function block **1275,** payment gateway computer system **140** encrypts random encryption key RK-4 **1340** using the public key of merchant computer system **130** to form encrypted random key RK-4 **1360.** Figure **13E** depicts encrypted random key RK-4 **1360**. The encryption state of encrypted random key **1360** is graphically shown by merchant public key lock **1365**, which indicates that encrypted random key **1360** is encrypted using the merchant public key. In function block **1280,** payment gateway computer system **140** concatenates encrypted combined block **1350** and encrypted random key RK-4 **1360** to form merchant capture response **925**. Figure **13F** depicts merchant capture response **925** comprising encrypted combined block 1350 and encrypted random key RK-4 **1360**. In function block **1285**, payment gateway computer system **140** transmits merchant capture response **925** to merchant system **130**.

**Payment Capture Response Processing**

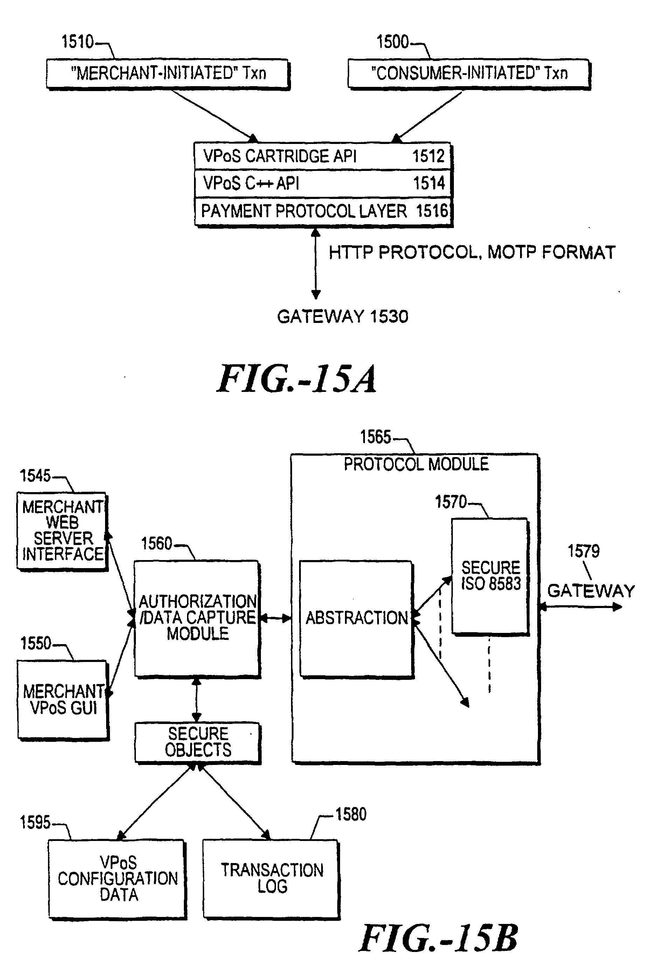

Figure **14** depicts the detailed steps of processing a payment capture response. In function block **1410**, merchant computer system **130** applies its private key to encrypted random key RK-4 **1360** contained within received merchant capture response **925**, thereby decrypting it and obtaining a cleartext version of random key RK-4 **1340**. In function block **1420**, merchant computer system **130** applies random key RK-4 **1340** to encrypted combined block **1350**, thereby decrypting it and obtaining a cleartext version of combined block **1330**. Combined block **1330** comprises basic capture response **1310**, a copy of payment gateway computer system's **140** signature public key certificate **1320**, as well as payment gateway digital signature **1325**. In function block **1430**, merchant computer system **130** verifies payment gateway computer system's **140** signature public key certificate **1320**. Merchant computer system **130** performs this verification by making a call to the certification authority associated with the certificate. If verification of the certificate fails, merchant computer system **130** concludes that the capture response is counterfeit and raises an error condition. In function block **1440,** merchant computer system **130** validates payment gateway digital signature **1325.** Merchant computer system **130** performs this validation by calculating a message digest over the contents of the combined basic authorization request **1310** and the signature public key certificate **1320.** Merchant computer system **130** then decrypts digital signature **1325** to obtain a copy of the equivalent message digest calculated by payment gateway computer system **140** in function block **1255**. If the two message digests are equal, the digital signature **1325** is validated. If validation fails, merchant computer system **130** concludes that the authorization response is counterfeit and raises an error condition. In function block **1450**, merchant computer system **130** stores capture response for later use in by legacy system accounting programs, e.g. to perform reconciliation between the merchant operating merchant computer system **130** and the financial institution from whom payment was requested, thereby completing the transaction. The system of the present invention permits immediate deployment of a secure payment technology architecture such as the SET architecture without first establishing a public-key encryption infrastructure for use by consumers. It thereby permits immediate use of SET-compliant transaction processing without the need for consumers to migrate to SET-compliant application software.

**VIRTUAL POINT OF SALE (vPOS) DETAILS**

A Virtual Point of Sale (vPOS) Terminal Cartridge is described in accordance with a preferred embodiment. The vPOS Terminal Cartridge provides payment functionality similar to what a VeriFone PoS terminal ("gray box") provides for a merchant today, allowing a merchant to process payments securely using the Internet. It provides full payment functionality for a variety of payment instruments.

**Payment Functionality**

Figure **15A** illustrates a payment processing flow in accordance with a preferred embodiment. The payment functionality provided by the vPOS terminal is divided into two main categories: "Merchant-Initiated" **1510** and "Consumer-Initiated" **1500.** Some payment transactions require communication with the Acquirer Bank through the Gateway **1530**. The normal flow of a transaction is via the vPOS Cartridge API **1512** to the vPOS C++ API **1514** into the payment protocol layer **1516** which is responsible for converting into the appropriate format for transmission to the Gateway for additional processing and forwarding to existing host payment authorization systems. Host legacy format refers to an existing authorization system for credit card approval currently utilized with the VeriFone Point of Sale (POS) gray terminals. The output from the payment protocol layer **1516** is transmitted to the authorization processing center via the gateway **1530.** These transactions are referred to as "Online Transactions" or "Host Payments." The transactions that can be done locally by the merchant without having to communicate with the Acquirer Bank are referred to as "Local Functions and Transactions." To support different types of payment instruments, the vPOS Terminal payment functionality is categorized as set forth below.

- **Host Payment Functionality:** These transactions require communication with the final host, either immediately or at a later stage. For example, an Online Authorization-Only transaction, when initiated, communicates with the host immediately. However, an Off-line Authorization-Only transaction is locally authorized by the vPOS terminal without having to communicate with the host, but at a later stage this off-line authorization transaction is sent to the host. Within the Host Payment Functionality some transactions have an associated Payment Instrument, while others do not. These two kinds of transactions are:

  - **Host Financial Payment Functionality:** These transactions have a Payment Instrument (Credit Card, Debit Card, E-Cash, E-Check, etc.) associated with them. For example, the "Return" transaction, which is initiated upon returning a merchandise to the merchant.
  - **Host Administrative Payment Functionality:** These transactions do not require a payment instrument, and provide either administrative or inquiry functionality. Examples of these transactions are "Reconcile" or the "Batch Close."
  - **Local Functions and Transactions:** These transactions do not require communication with the host at any stage, and provide essential vPOS terminal administrative functionality. An example of this is the vPOS terminal configuration function, which is required to set up the vPOS terminal. Another example is the "vPOS Batch Review" function, which is required to review the different transactions in the vPOS Batch or the Transaction Log.

## *Payment Instruments*

A preferred embodiment of a vPOS terminal supports various Payment Instruments. A consumer chooses a payment based on personal preferences. Some of the Payment Instruments supported include:

Credit Cards
Debit Cards
Electronic Cash
Electronic Checks
Micro-Payments (electronic coin)
Smart Cards

### URL Table

The table below enumerates the URLs corresponding to the transactions supported by the vPOS Terminal Cartridge. Note that the GET method is allowed for all transactions; however, for transactions that either create or modify information on the merchant server, a GET request returns an HTML page from which the transaction is performed via a POST method.

| Transaction | URL | POST | Access Control |
|---|---|---|---|
| **HOST FINANCIAL PAYMENT FUNCTIONALITY** | | | |
| auth capture | /vPOSt/mi/authcaptur e/ | allowed | merchant login/password |
| auth capture | /vPOSt/ci/authcapture / | allowed | no access control |
| auth only | /vPOSt/mi/authonly/ | allowed | merchant login/password |
| auth only | /vPOSt/ci/authonly/ | allowed | no access control |
| adjust | /vPOSt/mi/adjust/ | allowed | merchant login/password |
| forced post | /vPOSt/mi/forcedpost/ | allowed | merchant login/password |
| offline auth | /vPOSt/mi/offlineauth/ | allowed | merchant login/password |
| offline auth | /vPOSt/ci/offlineauth/ | allowed | no access control |
| pre auth | /vPOSt/mi/preauth/ | allowed | merchant login/password |
| pre auth comp | /vPOSt/mi/preauthcom p/ | allowed | merchant login/password |

(continued)

| Transaction | URL | POST | Access Control |
|---|---|---|---|
| **HOST FINANCIAL PAYMENT FUNCTIONALITY** | | | |
| return | /vPOSt/mi/return | allowed | merchant login/password |
| return | /vPOSt/ci/retum/ | allowed | no access control |
| void | /vPOSt/mi/void/ | allowed | merchant login/password |
| **HOST ADMINISTRATIVE PAYMENT FUNCTIONALITY** | | | |
| balance inquiry | /vPOSt/mi/bi/ | not allowed | merchant login / password |
| host logon | /vPOSt/mi/hostlogon/ | allowed | merchant login /password |
| parameter download | /vPOSt/mi/parameters dnld/ | not allowed | merchant login/password |
| reconcile | /vPOSt/mi/reconcile/ | allowed | merchant login/password |
| test host | /vPOSt/mi/testhost/ | not allowed | merchant login/password |
| **LOCAL FUNCTIONS & TRANSACTIONS** | | | |
| accum review | /vPOSt/mi/accum/revi ew/ | not allowed | merchant login/password |
| batch review | /vPOSt/mi/batch/revie w/ | not allowed | merchant login/password |
| cdt review | /vPOSt/mi/cdt/review/ | not allowed | merchant login/password |
| cdt update | /vPOSt/mi/cdt/update / | allowed | merchant login/password |
| cpt review | /vPOSt/mi/cpt/review | not allowed | merchant login/password |
| cpt update | /vPOSt/mi/cpt/update / | allowed | merchant login/password |
| clear accum | /vPOSt/accum/clear/ | allowed | merchant login/password |
| clear batch | /vPOSt/mi/batch/clear / | allowed | merchant login/password |
| hdt review | /vPOSt/mi/hdt/review/ | not allowed | merchant login/password |
| hdt update | /vPOSt/mi/hdt/update / | allowed | merchant login/password |
| lock vPOS | /vPOSt/mi/lock/ | allowed | merchant login/password |
| query txn | /vPOSt/ci/querytxn/ | not allowed | no access control |
| query txn | /vPOSt/mi/querytxn/ | not allowed | merchant login/password |
| tct review | /vPOSt/mi/tct/review/ | not allowed | merchant login/password |
| tct update | /vPOSt/mi/tct/update/ | allowed | merchant login/password |
| unlock vPOS | /vPOSt/mi/unlock/ | allowed | merchant login/password |

### URL Descriptions

This section describes the GET and POST arguments that are associated with each transaction URL. It also describes the results from the GET and POST methods. For URLs that produce any kind of results, the following fields are present in the HTML document that is returned by the vPOS Terminal Cartridge:

txnDate        Date of the transaction (mm/dd/yy or dd/mm/yy)
txnTime        Time of the transaction (hh:mm:ss GMT or hh:mm:ss local time)
merchantId     Merchant ID of the merchant using the vPOS terminal
terminalId     vPOS Terminal Id
txnNum         Transaction number of the given transaction
txnType        Type of transaction

For URLs that deal with financial transactions, the following fields are present in the HTML document that is returned by the vPOS terminal cartridge:

txnAmount      Transaction amount that is being authorized, forced posted, voided, etc.
poNumber       Purchase order number
authidentNum   Authorization ID number for the transaction
retRefNum      Retrieval reference number for the given transaction
piInfo         Payment instrument information. This varies for different payment instruments. For example, in the case of credit cards, the credit card number (piAcctNumber) and expiration date (piExpDate) are returned.

## Accumulate Review

**URL Functionality:** This is a local information inquiry function that retrieves the local (merchant's) transaction totals (accumulators).
GET Arguments: None.
GET Results: Retrieves the transaction totals for the merchant. Currently, the total is returned as an HTML document. The transaction totals currently returned are:

| | |
|---|---|
| creditAmt | Total Credit Amount since the last settlement logged in the vPOS terminal |
| creditCnt | Total Credit Count since the last settlement logged in the vPOS terminal |
| debitAmt | Total Debit Amount since the last settlement logged in the vPOS terminal |
| debitCnt | Total Debit Count since the last settlement logged in the vPOS terminal |

Note: Accum Review is a local function, as opposed to Balance Inquiry which is done over the Internet with the host.

## Adjust

**URL Functionality:** Corrects the amount of a previously completed transaction.
**GET Arguments:** None
**GET Results:** Because the Adjust transaction modifies data on the merchant server, the POST method should be used. Using the GET method returns an HTML form that uses the POST method to perform the transaction.
**POST Arguments:**

| | |
|---|---|
| pvsTxnNum | Previous transaction number |
| txnAdjustedAmount | The adjusted transaction amount. Note that the original transaction amount is easily retrievable from the previous transaction number. |

**POST Results:** On success, pvsTxnNum and txnAdjustedAmount are presented in the HTML document, in addition to the transaction fields described above.

## Auth Capture

**URL Functionality:** This transaction is a combination of Auth Only (Authorization without capture) and Forced Post transactions.
**GET Arguments:** None
**GET Results:** Because the Auth Capture transaction modifies data on the merchant server side, the POST method should be used. Using the GET method returns an HTML form that uses the POST method to perform the transaction.
**POST Arguments:**

| | |
|---|---|
| piAcctNumber | Payment Instrument account number, e.g., Visa credit card number |
| piExpDate | Expiration date |
| txnAmt | Transaction amount |

POST Results: On success, an HTML document that contains the transaction fields described above is returned. On failure, an HTML document that contains the reason for the failure of the transaction is returned. The transaction is logged into a vPOS Terminal transaction log for both instances.

**Auth Only**

**URL Functionality:** Validates the cardholder's account number for a Sale that is performed at a later stage. The transaction does not confirm the sale to the host, and there is no host data capture. The vPOS captures this transaction record and later forwards it to confirm the sale in the Forced Post transaction request.
**GET Arguments:** None.
**GET Results:** Because the Auth Only transaction modifies data on the merchant server side, the POST method should be used. Using the GET method returns an HTML form that uses the POST method to perform the transaction.
**POST Arguments:**

| | |
|---|---|
| piAcctNumber | Payment Instrument account number, e.g., Visa credit card number |
| piExpDate | Expiration date |
| txnAmt | Transaction amount |

**POST Results:** On success, an HTML document that contains the transaction fields is returned. On failure, an HTML document that contains the reason for the failure of the transaction is returned. The transaction is logged into vPOS Terminal transaction log for both instances.
**NOTE:** The /vPOSt/ci/authonly/ URL should be used for customer-initiated transactions. /vPOSt/mi/authonly/ should be used for merchant-initiated transactions.

**Balance Inquiry**

**URL Functionality:** Performs an on-line inquiry or the merchant's balance.
**GET Arguments:** None
**GET Results:**

| | |
|---|---|
| MrchtBlnceAmt | Merchant balance amount for a given merchant. The balance amount at any given time is the difference between the credit and debit amount since the last settlement between the merchant and the acquirer. |

**Batch Review**

**URL Functionality:** Retrieves all records from the transaction log or the batch.
**GET Arguments:** None
**GET Results:** The GET method retrieves the transactions that have been batched in the vPOS terminal for future reconciliation. The batch can be cleared from the vPOS terminal after a manual reconciliation between the acquirer and the vPOS. The batch data is retrieved as a set of records and is formatted as a table in the HTML document. The following fields are present in a typical record:

| | |
|---|---|
| NTransType | Transaction type |
| NPurchOrderNo | Purchase order number |
| SzAcctNum | Customer's payment instrument account number |
| SzExpDate | Customer's payment instrument expiration date |
| SzTransAmt | Transaction amount |
| SzTransDate | Transaction date |
| SzTransTime | Transaction time |
| SzRetrievalRefNum | Transaction's retrieval reference number |
| SzAuthId | Authorization ID for the transaction |
| SzOrigAmt | Original transaction amount |
| SzBatchNum | Batch number for the given transaction |
| NCurrencyType | Currency in which the transaction was done |

LnTransNum          Transaction number

**CDT Review**

**URL Functionality:** Displays the vPOS terminal configuration data corresponding to the Card Definition Table (CDT).
**GET Arguments:** None
**GET Results:** The GET method returns a default HTML form that contains the current configuration values. The form can be modified and posted using the /vPOSt/mi/cdt/update/ URL to update the card definition table. Not all fields in the card definition table are editable. The following fields are returned in a form to the user:

| | |
|---|---|
| NHostIndex | Index into the Host Definition Table or the Acquirer that maps to this card issuer. |
| SzPANLo | Low end of the PAN (Primary Account Number) range |
| SzPANHi | High end of the PAN range |
| NMaxPANDigit | Maximum number of digits in the PAN for this acquirer. |
| NMinPANDigit | Minimum number of dits in the PAN for the acquirer |
| SzCardLabel | Card Issuer's name |
| Transactions | Specifies if a particular transaction is allowed for a given |
| Available bit vector | card range. |

**CDT Update**

**URL Functionality:** Updates the vPOS terminal configuration data corresponding to the Card Definition Table (CDT).
**GET Arguments:** None
**GET Results:** The GET method returns a default HTML form that contains the current configuration values. The form can be filled out and posted using the /vPOSt/mi/cdt/update URL to update the card definition table.
**POST Arguments:** (Editable CDT fields need to be decided.)
**POST Results:** (Depends on editable CDT fields, and therefore needs to be decided.)

**Clear Accumulator**

**URL Functionality:** Zeroes out the accumulator totals currently resident in the vPOS terminal.
**GET Arguments:** None.
**GET Results:** Presents a form that uses the POST method to zero the accumulators.
**POST Arguments:** None.
**POST Results:** Zeroes the accumulators/transaction totals in the vPOS terminal.

**Clear Batch**

**URL Functionality:** Zeroes out the transaction logs currently batched in the vPOS terminal. **GET Arguments:** None.
**GET Results:** Presents a form that uses the POST method to clear the batch.
**POST Arguments:** None.
**POST Results:** Zeroes the transactions that comprise the batch in the vPOS terminal.

**Forced Post**

**URL Functionality:** Confirms to the host the completion of a sale, and requests for data capture of the transaction. This is used as a follow-up transaction after doing an Authorization (Online or Off-line) transaction.
**GET Arguments:** None.
**GET Results:** Returns the HTML form for performing the Forced Post transaction.
**POST Arguments:**

pvsTxnNum    the previous transaction number from an auth only transaction

**POST Results:** On success, pvsTxnNum is presented in the HTML document. On failure, an HTML document is returned that contains the reason for the failure of the transaction.

**HDT Review**

**URL Functionality:** Displays the vPOS terminal configuration data corresponding to the Host Definition Table (HDT).
**GET Arguments:** None
**GET Results:** The GET method returns a default HTML form that contains the current configuration values. The form can be modified and posted using the /vPOSt/mi/hdt/update URL to update the hosts definition table. Not all fields in the host definition table are editable. The following fields are returned in a form to the user:

| | |
|---|---|
| szTermId | Terminal ID for this vPOS terminal |
| szMerchId | Merchant ID for this vPOS terminal |
| szCurrBatchNum | Current batch number existing on the vPOS |
| szTransNum | Reference number for the next transaction in the vPOS transaction log/batch. This is generated by vPOS and is not editable by the merchant. |
| szTPDU | Transport Protocol Data Unit. Required for building the ISO 8583 packet. |
| InSTAN | System trace number; message number of the next transaction to be transmitted to this acquirer. |
| szNII | Network International Number. Required for building the ISO 8583 packet. |
| szHostName | Name for identifying the host. |
| nHostType | Host type |
| nNumAdv | Number of off-line transactions that can be piggy-backed at the end of an on-line transaction. |
| Data Capture Required Bit vector: | Specifies for which transactions data capture is required. |

**HDT Update**

**URL Functionality:** Updates the vPOS terminal configuration data corresponding to the Host Definition Table (HDT).
**GET Arguments:** None
**GET Results:** The GET method returns a default HTML form that contains the current configuration values. The form can be filled out and posted to the merchant server using the /vPOSt/mi/hdt/ugdate URL to update the host definition table

**Unlock vPOS**

**URL Functionality:** Local function that starts the vPOS at the start of the day.

**GET Arguments:** None.
**GET Results:** Returns an HTML form that uses the POST method to perform this transaction.
**POST Arguments:** None.
**POST Results:** Resets a Boolean flag on the merchant server that enables transactions to be accepted by the vPOS terminal.

**Offline Auth**

**URL Functionality:** This transaction is same as the "Authorization Only" transaction, except that the transaction is locally captured by the vPOS terminal without having to communicate with the host. A Forced Post operation is done as a follow-up operation of this transaction.
**GET Arguments:** None.
**GET Results:** Because the Offline Auth transaction modifies data on the merchant server side, the POST method should be used. Using the GET method returns an HTML form for using the POST method to perform the transaction.
**POST Arguments:**

| | |
|---|---|
| piAcctNumber | Payment Instrument account number, e.g., Visa credit card number |
| piExpDate | Expiration date |
| txnAmt | Transaction amount |

**POST Results:** On success, an HTML document that contains the transaction fields described in Section 4.1 is returned. On failure, an HTML document that contains the reason for the failure of the transaction is returned. The transaction is logged into vPOS terminal transaction log for both instances.

**Parameter Download**

**URL Functionality:** Downloads the vPOS configuration information from the host and sets up the vPOS in the event of the configuration data being changed.
**GET Arguments:** None
**GET Results:** Retrieves an HTML form that uses the POST method for the parameter download transaction.
**POST Arguments:** None.
**POST Results:** Downloads the following parameters from the host and uploads them into the vPOS terminal configuration table.
card/issuer definition table (CDT)
host/acquirer definition table (HDT)
communications parameter table (CPT)
terminal configuration table (TCT)

The various configuration parameters can be reviewed and modified using the URLs for the desired functionality.

**Pre Auth**

**URL Functionality:** Used in lodging and hotel establishments to pre-authorize a charge that is completed some time in future.
**GET Arguments:** None
**GET Results:** Retrieves the HTML form for posting the pre-authorizaton transaction.
**POST Arguments:**

| | |
|---|---|
| piAcctNumber | Payment Instrument account number, e.g., Visa credit card number |
| piExpDate | Expiration date |

**Pre Auth Comp**

**URL Functionality:** Completes a pre-authorization transaction.
**GET Arguments:** None
**GET Results:** Retrieves the HTML form for posting the pre-authorization completion transaction.
**POST Arguments:**

pvsTxnNum    Previous transaction number from an auth only transaction

**POST Results:** On success, pvsTxnNum is presented in the HTML document. On failure, an HTML document is returned that contains the reason for the failure of the transaction.

**Reconcile**

**URL Functionality:** This transaction is done at the end of the day to confirm to the host to start the settlement process for the transactions captured by the host for that particular vPOS batch.
**GET Arguments:** None
**GET Results:** Retrieves the HTML form for posting the Reconcile transaction.
**POST Arguments:** None.
**POST Results:** On success, the reconcile function prints any discrepancies in the merchant's batch of transactions and totals vis-a-vis the host's batch of transactions in totals. The output format is a combination of the output of the Batch Review and Accum Review transactions.

**Return**

**URL Functionality:** Credits the return amount electronically to the consumer's account when previously purchased merchandise is returned. The vPOS terminal captures the transaction record for this transaction.
**GET Arguments:** None
**GET Results:** Retrieves the HTML form for posting the Return transaction.
**POST Arguments:**

PrevTxnNum    Reference to the previous transaction number

The previous transaction has access to the following fields:

TxnAmount    Transaction amount
PiAccountNum    Payment instrument account number
PiExpDate    Payment instrument expiration date

**POST Results:** On success, pvsTxnNum is presented in the HTML document, in addition to

**Test Host**

**URL Functionality:** Checks the presence of the host and also the integrity of the link from the vPOS to the host.
**GET Arguments:** None.
**GET Results:** On success, an HTML document is returned that reports success in connecting to the host. On failure, an HTML document is returned that reports the error encountered in testing the host.

**Lock vPOS**

**URL Functionality:** This local function locks or stops the vPOS terminal from accepting any transactions.
**GET Arguments:** None.
**GET Results:** Returns an HTML form that posts the locking of the vPOS terminal.
**POST Arguments: None.**
**POST Results:** On success, an HTML document is returned that contains the status that vPOS terminal was successfully. On failure, an HTML document is returned that reports the cause of failure of the operation, e.g., access denied, the vPOS terminal is already locked or is presently processing a transaction, etc.

**Void**

**URL Functionality:** Cancels a previously completed draft capture transaction.
**GET Arguments:** None.
**GET Results:** Retrieves an HTML form for posting the Void transaction.
**POST Arguments:**

pvsTxnNum     Transaction number from a previous Auth Only transaction.

**Host Logon**

**URL Functionality:** Administrative transaction used to sign-on the vPOS with the host at the start of the day, and also to download encryption keys for debit transactions.
**GET Arguments:** None
**GET Results:** Retrieves an HTML form for posting the Host Logon transaction.
**POST Arguments:** None.
**POST Results:** Currently, debit card based transactions are not supported. The result is an HTML document indicating the success or failure of the host logon operation.

**CPT Review**

**URL Functionality:** Returns the vPOS terminal configuration data corresponding to the Communications Parameter Table (CPT).
**GET Arguments:** None
**GET Results:** The GET method returns a default HTML form that contains the current configuration values corresponding to the vPOS terminal's communication parameters. The form can be filled out and posted to the merchant server using the /vPOSt/mi/cpt/update URL to update the communications parameter table. The following fields are returned in a form to the user:

SzAcqPriAddress     Primary Host address
SzAcqSecAddress     Secondary Host address
SzActTerAddress     Tertiary Host address
NRespTimeOut        Time-out value (in seconds) before which the vPOS should receive a response from the host

**CPT Update**

**URL Functionality:** Updates the vPOS terminal configuration data corresponding to the Communications Parameter Table (CPT).

**GET Arguments:** None
**GET Results:** The GET method returns a default HTML form that contains the current configuration values. The form can be modified and posted to update the communication parameter table.
**POST Arguments:**

| | |
|---|---|
| SzAcqPriAddress | Primary Host address |
| SzAcqSecAddress | Secondary Host address |
| SzActTerAddress | Tertiary Host address |
| NRespTimeOut | Time-out value (in seconds) before which the vPOS should receive a response from the host |

**POST Results:** On success, the HTML document returned by the vPOS contains the values set by the merchant. On failure, the HTML document contains the reason for the failure of the invocation of the URL.

**TCT Review**

**URL Functionality:** Returns the vPOS terminal configuration data corresponding to the Terminal Configuration Table (TCT).
**GET Arguments:** None.
**GET Results:** The GET method returns a default HTML form that contains the current configuration values. The form can be filled out and posted using the /vPOSt/mi/tct/update URL to update the terminal configuration table. The following fields are returned in a form to the user:

| | |
|---|---|
| SzMerchName | Merchant name |
| SzSupervisorPwd | Supervisor password |
| FvPOSLock | 1= vPOS locked, 0 = vPOS unlocked |
| SzAuthOnlyPwd | Password for initiating auth-only transaction |
| SzAuthCaptPwd | Password for initiating auth with capture transaction |
| SzAdjustPwd | Password for adjust transaction |
| SzRefundPwd | Password for refund transaction |
| szForcedPostPwd | Password for forced post transaction |
| szOfflineAuthPwd | Password for offline auth transaction |
| szVoidPwd | Password for void transaction |
| szPreAuthPwd | Password for pre-authorization transaction |
| szPreAuthCompPwd | Password for pre-authorization completion |

**TCT Update**

**URL Functionality:** Updates the vPOS terminal configuration data corresponding to the Terminal Configuration Table (TCT).
**GET Arguments:** None
**GET Results:** The GET method returns a default HTML form that contains the current configuration values. The form can be filled out and posted using the /vPOSt/mi/tct/update URL to update the terminal configuration table.
**POST Arguments:** All arguments in TCT Review functionality are the returned values from the /vPOSt/mi/tct/ update the URL.

| | |
|---|---|
| szMerchName | Merchant name |
| szSupervisorPwd | Supervisor password |
| fvPOSLock | 1= vPOS locked, 0 = vPOS unlocked |
| szAuthOnlyPwd | Password for initiating auth-only transaction |
| szAuthCaptPwd | Password for initiating auth with capture transaction |
| szAdjustPwd | Password for adjust transaction |
| szRefundPwd | Password for refund transaction |
| szForcedPostPwd | Password for forced post transaction |
| szOfflineAuthPwd | Password for offline auth transaction |

| szVoidPwd | Password for void transaction |
| szPreAuthPwd | Password for pre-authorization transaction |
| szPreAuthCompPwd | Password for pre-authorization completion |

**POST Results:** On success, the POST modifies values of the terminal configuration table parameters. On failure, the HTML document contains the reason for the failure of the transaction.

**Query Transactions**

**URL Functionality:** Permits the merchant and customer to query a given transaction corresponding to a transaction number.
**GET Arguments:**

| txnNum | Transaction number |

**GET Results:** For a given transaction, the URL returns an HTML document. If a transaction refers to an older transaction, the transaction's entire history is made available.

*URL results*

Depending upon the method (GET/POST) as well as the success or failure of the HTTP request, different documents are returned to the user. The vPOS terminal provides a framework whereby different documents are returned based upon a number of preferences. Currently the language and content-type are supported as preferences. A simple framework is proposed here. Each of the transaction has a set of documents associated with it: form for the payment transaction, GET success, GET failure, POST success, and POST failure.
In the directory structure defined below, documents are stored corresponding to the preferences. The top level of the directory structure is the content-type, the next level is language (for NLS support). For example, to create text/html content in US English & French, the directory structure given below would contain the HTML documents for each of the transactions. The vPOS terminal cartridge has a configuration file that allows the user to specify the content-type as well as the language to be used for a cartridge. The first release of the vPOS terminal cartridge supports one content-type and language for each server.

**Data Structures & Functions**

*Functions*

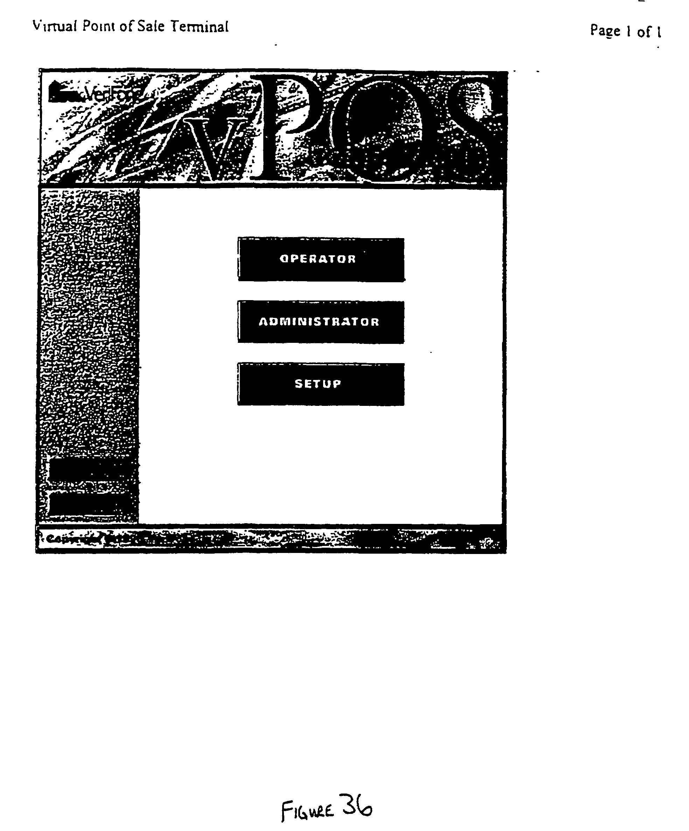

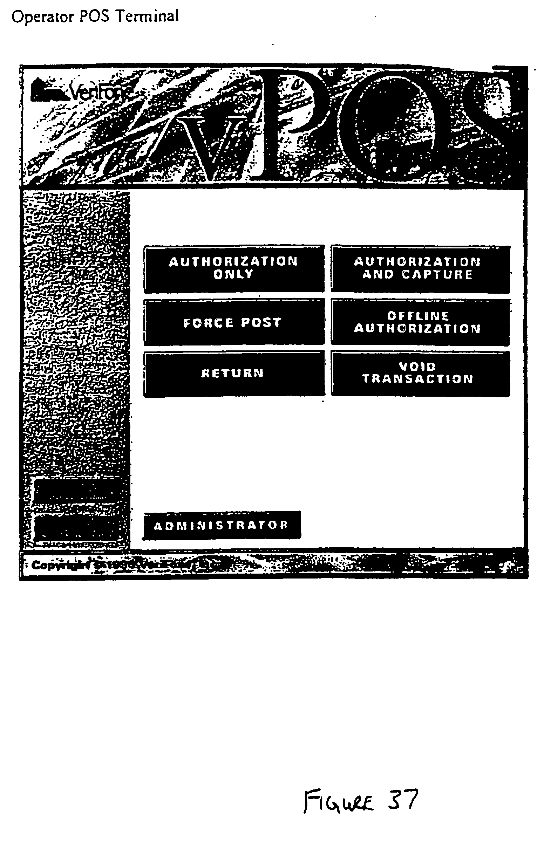

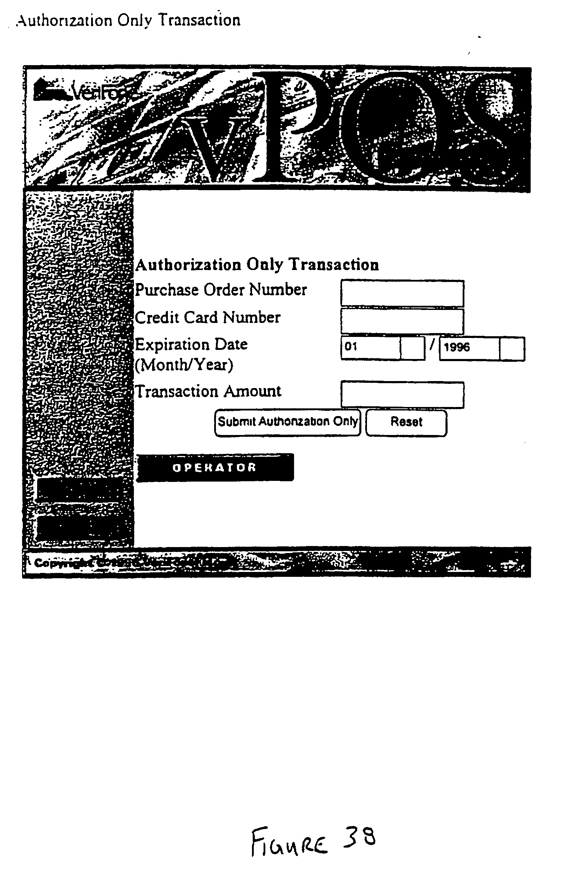

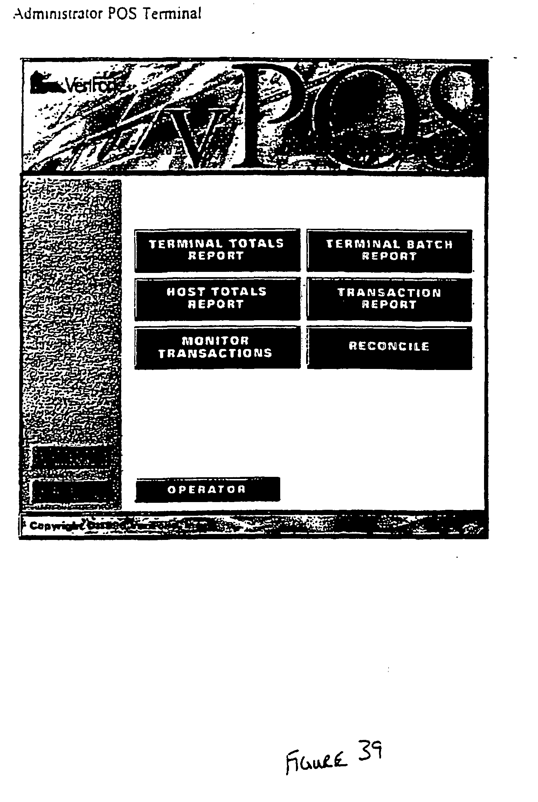

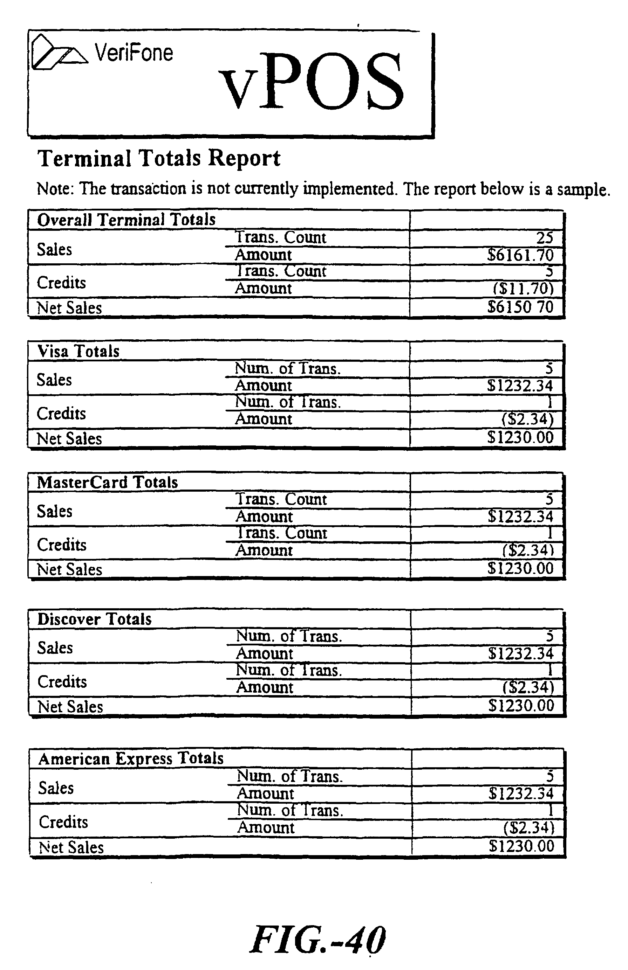

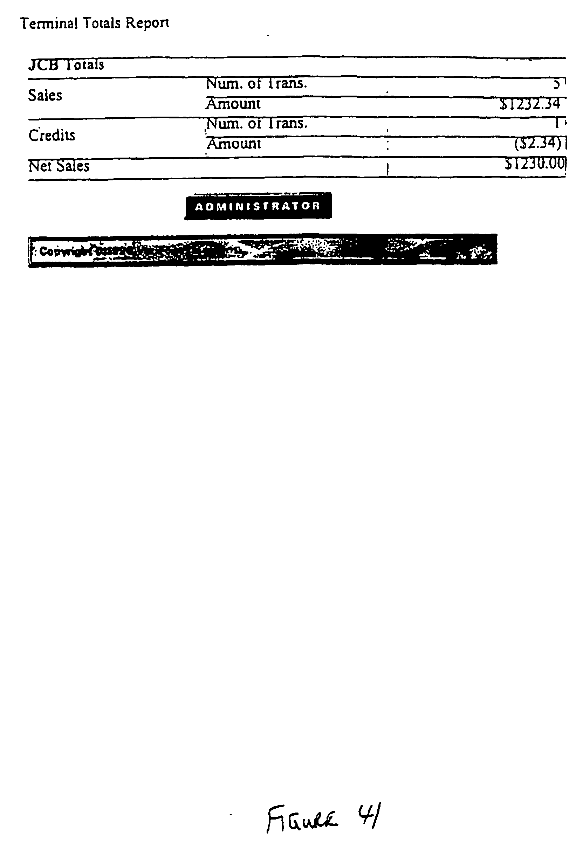

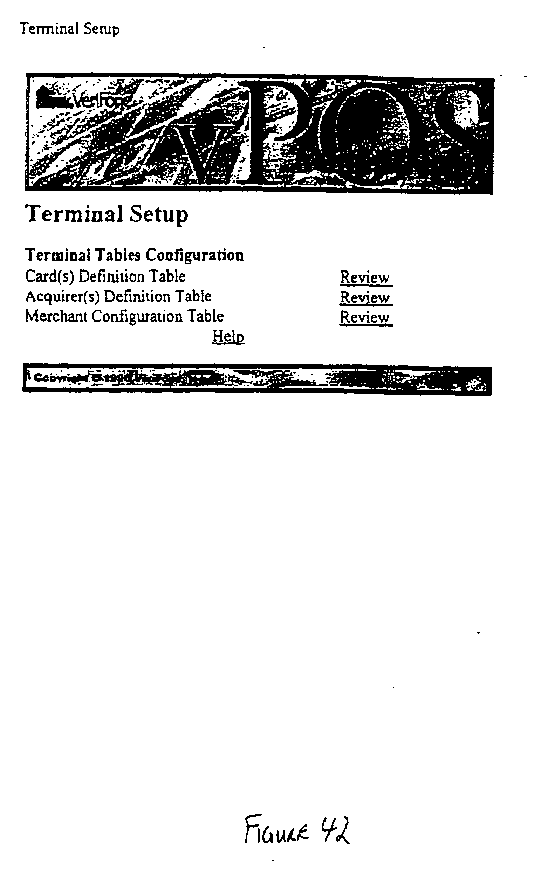

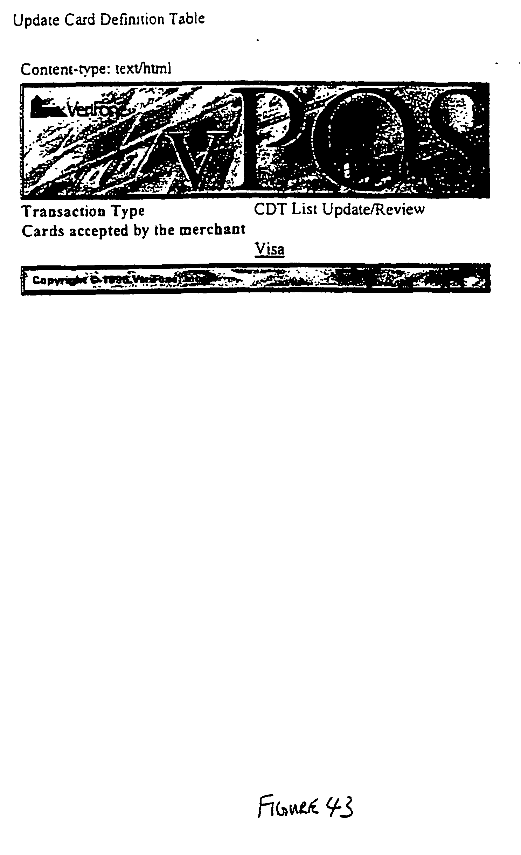

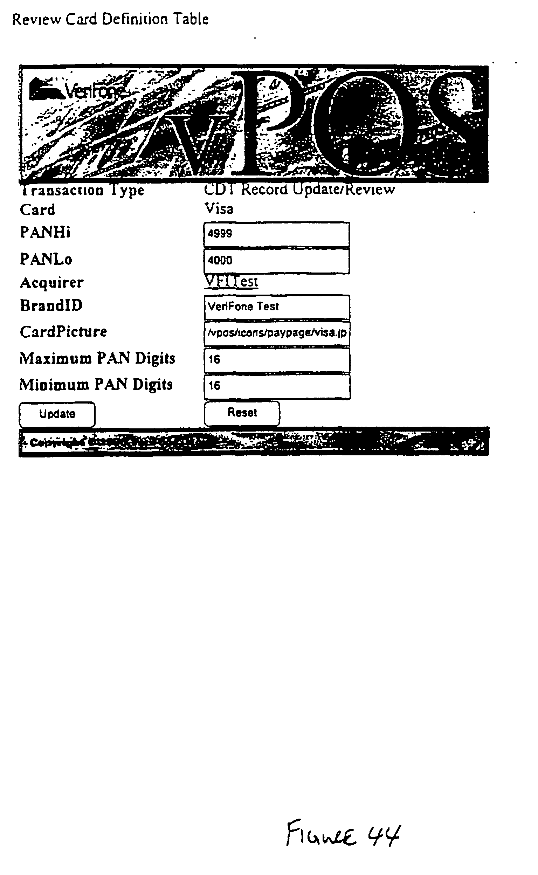

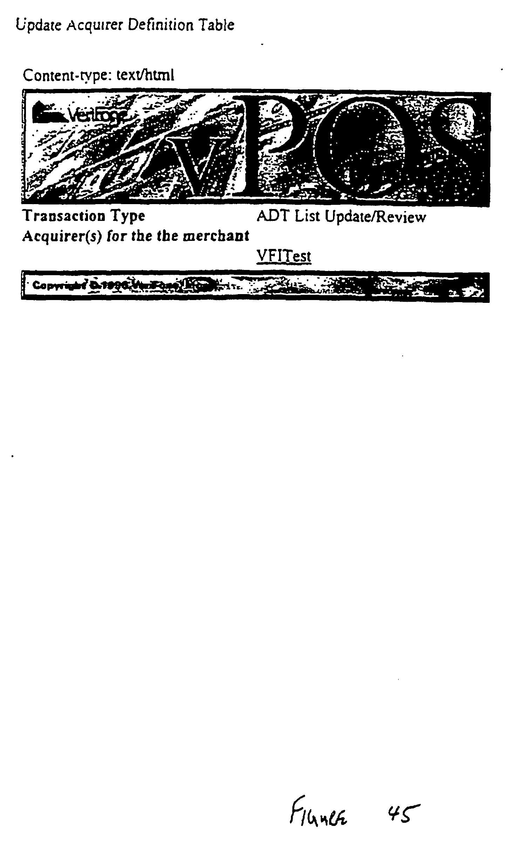

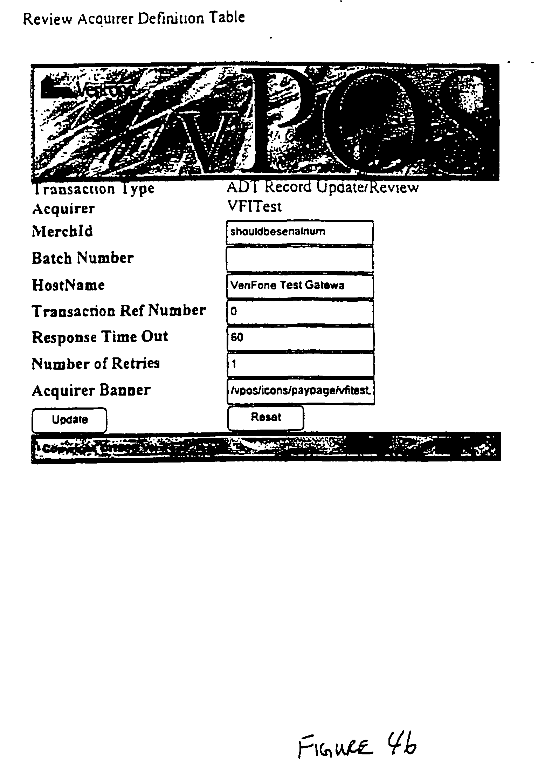

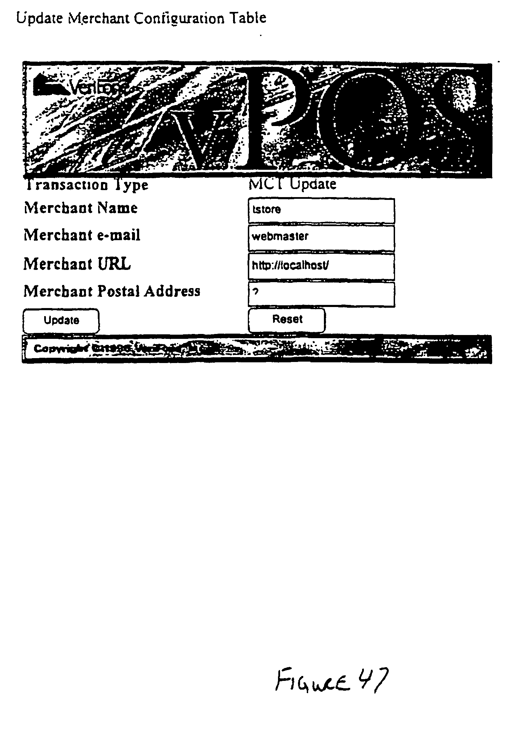

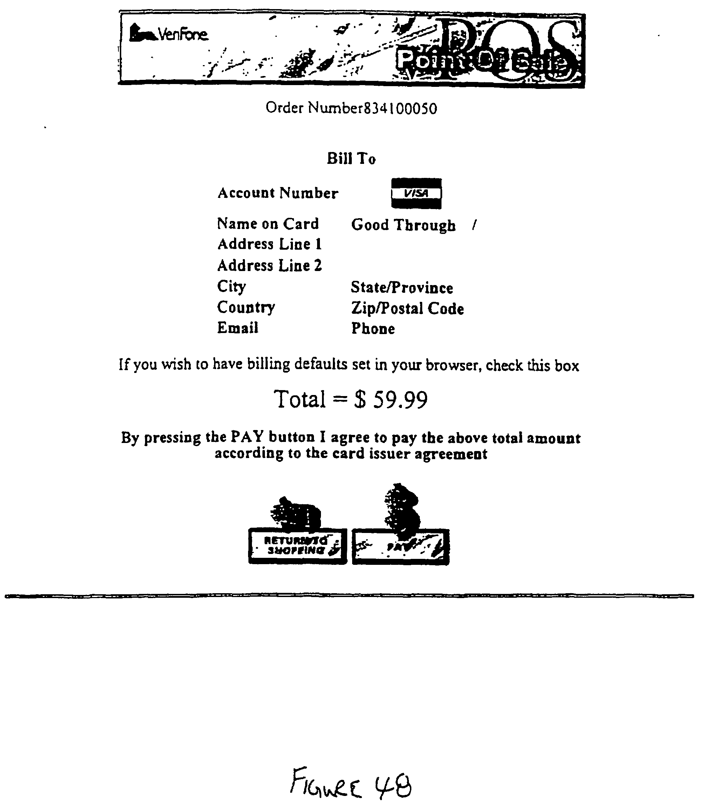

A brief description of the Virtual Point of Sale Terminal cartridge functions are provided below. vPOSTInit(), vPOSTExec() and vPOSTShut() are the entry points required for each cartridge in accordance with a preferred embodiment. The other functions implement some of the key vPOST cartridge functionality. In the block diagram shown in Figure **15B**, the vPOS provides an interface for transactions which are initiated both by the consumer and the merchant. The merchant initiates a transaction from a Graphical User Interface (GUI) **1550** and all the transactions that are initiated by the consumer are routed by the Merchant WEB Server **1545**.
The Authorization/Data Capture Module **1560** processes the requests originated by the merchant or the consumer and routes them to the Protocol Module **1565**. The Protocol Module is responsible for building the payment protocol request packet (e.g., an SSL-encapsulated ISO **8583** packet) **1570** before sending the request to the Gateway **1579.** Then, the Gateway **1579** awaits a response from the Protocol Module **1565**, and upon receiving the response, the Gateway **1579** parses the data and provides unwrapped data to the Authorization/Data-Capture Module **1560**. The Authorization/Data-Capture Module **1560** analyzes the response and updates the Transaction Log **1580.** The Transaction Log **1580** contains information concerning any successfully completed transactions and the accumulators or the transaction totals. The vPOS terminal creates and maintains the Transaction Log **1580,** and the vPOS Configuration Data **1585** contains information which is used to configure the behavior of the vPOS. The entire vPOS functionality is thread-safe and hence using the vPOS in a multi-threaded environment does not require any additional interfacing requirements. Figures **36-48** are vPOS screen displays in accordance with a preferred embodiment.

**Payment Functionality**

As discussed above, the different Payment Functionality provided by the vPOS terminal can be divided into two main categories as "Merchant Initiated" and "Consumer Initiated." Some of these transactions require communication with the Gateway and these transactions are referred to as "Online Transactions." The transactions which can be done locally to the merchant without having to communicate are referred to as "Local Functions/Transactions." In order to provide support for many different types of Payment Instruments, the vPOS Payment Functionality have been categorized. Host payment functionality and transactions require communication with the host either immediately or at a later stage. Each of the host financial payment transactions come to this category and require a Payment Instrument. These transactions can be initiated with different types of Payment Instruments which the vPOS terminal supports.

An authorization without capture transaction is used to validate the card holder's account number for a sale that needs to be performed at a later stage. The transaction does not confirm a sale's completion to the host, and there is no host data capture in this event. The vPOS captures this transaction record and later forwards it to the host to confirm the sale in a forced post transaction request. An authorization without capture transaction can be initiated both by the consumer and the merchant. A forced post transaction confirms to a host computer that a completion of a sale has been accomplished and requests data capture of the transaction. The forced post transaction is used as a follow-up transaction after doing an authorization (Online or Off-line) transaction. The transaction can be initiated only by the merchant. The authorization with post transaction is a combination of authorization without capture and forced post transactions. This transaction can be initiated both by the consumer and the merchant.

The offline post transaction is identical to the "authorization without capture" transaction, except that the transaction is locally captured by the vPOS without initiating communication with a host. A forced post operation is done as a follow-up operation of this transaction. This transaction can be initiated by both the consumer and the merchant. The return transaction is used to credit the return amount electronically to the consumer's account when a purchased merchandise is returned. The vPOS captures the return transaction record when the merchandise is returned, and this transaction can be initiated only by the merchant. The void transaction cancels a previously completed draft capture transaction. The vPOS GUI provides an interface for retrieving a transaction record required to be voided from the batch and passes it to the Authorization/Data-Capture module after confirmation. The batch record is updated to reflect the voided transaction after getting an approval from the gateway. This transaction can be initiated only by the merchant.

The pre-authorization transaction is identical to the authorization without capture transaction, but the consumers' "open-to-buy" amount is reduced by the pre-authorization amount. An example of this type of transaction is the "check-in" transaction in a hotel environment. A check-in transaction sends a pre-authorization request to the host, so that an amount required for the customers' stay in the hotel is reserved. The pre-authorization transaction is followed by a pre-authorization complete transaction. This transaction can be initiated both by the consumer and the merchant.

The pre-authorization complete transaction is done as a follow-up to the pre-authorization transaction. This transaction informs the host of the actual transaction amount. The pre-authorization complete transaction amount could be more or less than the pre-authorization amount. An example is the "check-out" transaction in a hotel environment. The check-out amount can be less than or more than the check-in amount. This transaction can only be initiated by a merchant.

The adjust transaction is initiated to make a correction to the amount of a previously completed transaction. The adjust transaction can be initiated only by the merchant. The host administrative transactions do not require any payment instrument. The balance inquiry transaction is used for on-line inquiry into the balance of the merchant's account. The batch data or the configuration data is not affected by this transaction. The reconciliation or close transaction is processed at the end of the day to start the settlement process for the transactions captured by the host for that particular vPOS. The host log-on transaction is an administrative transaction which is used to synchronize the vPOS with the host at the start of the day and also initiate a fresh batch at the vPOS terminal.

The parameters download transaction is used to download the vPOS configuration information from the host and set-up the vPOS in the event of any change in the configuration data. A test transaction is used to detect the presence of a host and the status of a link from the vPOS to the host. Local transactions or functions are initiated by a merchant and do not require communication with the gateway. These transactions can only be initiated by a merchant. The totals or accumulators review is a local information inquiry function and is used to retrieve the local (merchant's) totals. The detail transaction or the batch review function is used to retrieve all the records from the transaction log or the batch. The clear batch function is used to start a fresh batch. This transaction is utilized to electronically reconcile the vPOS with the host and to manually reconcile the vPOS with the host. After completing the manual reconciliation processing, the merchant can initiate this transaction to start a fresh batch. The clear accumulator function is similar to the clear batch functionality and resets all vPOS terminal accumulators to zero. This function is required when the merchant is not able to reconcile the vPOS with the host electronically. The vPOS unlock or start transaction is a local function used to start the vPOS at the start of the day. The vPOS lock or stop function is used to Lock or stop the vPOS from accepting any transactions. The vPOS configuration setup function is used to setup the vPOS configuration data. The vPOS configuration data is divided into different tables, for example, the Card/Issuer Definition Table (CDT), the Host/Acquirer Definition Table (HDT), the Communications Parameters Table (CPT) and the Terminal Configuration Table (TCT). The following sections explain each of these configuration tables in detail.

**Host Definition Table (HDT)**

The table contains information specific to the acquirer.

| Field | Attributes/ Bytes | Field Description/Comments |
|---|---|---|
| Terminal Identifier | ANS(20) | Terminal ID for this acquirer/host |
| Merchant Identifier | ANS(20) | Merchant ID for this acquirer/host |
| Current Batch Number | N(6) | Batch Number for the batch currently existing on the vPOS |
| Transaction Number | I(2) | Reference Number for next transaction in the vPOS transaction log/ batch (vPOS generated) |
| TPDU | AN(10) | Transport Protocol Data Unit - Required for building the ISO 8583 packet. |
| STAN | L(4) | Systems Trace Number - Message Number of the transaction to be transmitted next for this acquirer. |
| NII | N(3) | Network International Identifier - Required for building the ISO 8583 packet. |
| Host Name or Label | ANS(20) | Name for identifying the host, e.g., "AMEX-SIN". This is only a text string and is used for the purpose of identifying the host. |
| No. of advice messages | I(2) | No. of off-line transactions (advice messages) that can be piggy-backed at the end of an on-line transaction. If set to zero then piggy-backing is disabled. |

The following fields specify whether Data Capture is required for a particular transaction for this acquirer.

| Field | Attributes/ Bytes | Field Description/Comments |
|---|---|---|
| Host Protocol Type | I(2) | Host Protocol type, e.g., ISO 8583, SET, etc., |
| Host Protocol Sub-Type | I(2) | Sub protocol type, e.g., AMEX-ISO8583, MOSET, etc., |
| Auth Only DC Flag | Bit(1 bit) | 1 = REQUIRED, 0 = NOT REQUIRED |
| Auth Capture DC Flag | Bit(1 bit) | 1 = REQUIRED, 0 = NOT REQUIRED |
| Adjust DC Flag | Bit(1 bit) | 1 = REQUIRED, 0 = NOT REQUIRED |
| Refund DC Flag | Bit(1 bit) | 1 = REQUIRED, 0 = NOT REQUIRED |
| Cash Advance DC Flag | Bit(1 bit) | 1 = REQUIRED, 0 = NOT REQUIRED |
| Cash Back DC Flag | Bit(1 bit) | 1 = REQUIRED, 0 = NOT REQUIRED |
| Off-line Auth DC Flag | Bit(1 bit) | 1 = REQUIRED, 0 = NOT REQUIRED |
| Void DC Flag | Bit(1 bit) | 1 = REQUIRED, 0 = NOT REQUIRED |
| Pre-Auth DC Flag | Bit(1 bit) | 1 = REQUIRED, 0 = NOT REQUIRED |
| Pre-Auth Complete DC Flag | Bit(1 bit) | 1 = REQUIRED, 0 = NOT REQUIRED |

**Card Definition Table (CDT)**

This table contains information which are specific to the card issuer.

| Field | Attributes/ Bytes | Field Description/Comments |
|---|---|---|
| Host Index | I(2) | Index into the HDT or the acquirer which maps to this card issuer. |
| PAN Low Range | N(19) | Low end of the PAN range . |
| PAN High Range | N(19) | High end of the PAN range. |
| Minimum PAN digits | I(2) | The minimum number of digits in the PAN for this acquirer. |
| Maximum PAN digits | I(2) | The maximum number of digits in the PAN for this acquirer. |
| Card Label | ANS(20) | Card Issuer Name for identification, e.g., VISA. |

The following fields specify whether a particular transaction is allowed for a card range.

| Field | Attributes/ Bytes | Field Description/Comments |
|---|---|---|
| Auth Only Allowed | Bit(1 bit) | 1 = ALLOWED, 0 = NOT ALLOWED |
| Auth Capture Allowed | Bit(1 bit) | 1 = ALLOWED, 0 = NOT ALLOWED |
| Adjust Allowed | Bit(1 bit) | 1 = ALLOWED, 0 = NOT ALLOWED |
| Refund Allowed | Bit(1 bit) | 1 = ALLOWED, 0 = NOT ALLOWED |
| Cash Advance Allowed | Bit(1 bit) | 1 = ALLOWED, 0 = NOT ALLOWED |
| Cash Back Allowed | Bit(1 bit) | 1 = ALLOWED, 0 = NOT ALLOWED |
| Off-line Auth Allowed | Bit(1 bit) | 1 = ALLOWED, 0 = NOT ALLOWED |
| Void Allowed | Bit(1 bit) | 1 = ALLOWED, 0 = NOT ALLOWED |
| Pre-Auth Allowed | Bit(1 bit) | 1 = ALLOWED, 0 = NOT ALLOWED |
| Pre-Auth Complete Allowed | Bit(1 bit) | 1 = ALLOWED, 0 = NOT ALLOWED |

**Communications Parameter Table (CPT)**

This table contains communications parameters information specific to an acquirer. The HDT and this table have a one-to-one mapping between them.

| Field | Attributes/ Bytes | Field Description/Comments |
|---|---|---|
| Primary Address | AN(200) | Primary Host Address (Telephone number, IP address, etc.) |
| Secondary Address | AN(100) | Secondary Host Address to be used if the Primary Address is busy or not available. |
| Tertiary Address | AN(100) | Tertiary Host Address. |
| Response Time-out | I(2) | Time-out value (in seconds) before which the vPOS should receive a response from the host. |

**Terminal Configuration Table (TCT)**

This table contains information specific to a particular vPOS terminal.

| Field | Attributes/ Bytes | Field Description/Comments |
|---|---|---|
| Merchant Name | ANS(100) | Name of the merchant having the vPOS terminal. |
| vPOS Lock Flag | Bit (1 bit) | 1 = vPOS Locked, 0 = vPOS Unlocked |

**Payment Instruments**

As discussed above, the vPOS terminal supports different Payment Instruments and each of the Payment Functions described above can be initiated by these different Payment Instruments. The consumer making a purchase from a merchant provides a choice of payment methods depending upon their personal preference. The Payment Instrument Class Hierarchy which is used by the different vPOS terminal Payment Functions is described below.

**Message Sequence Diagram**

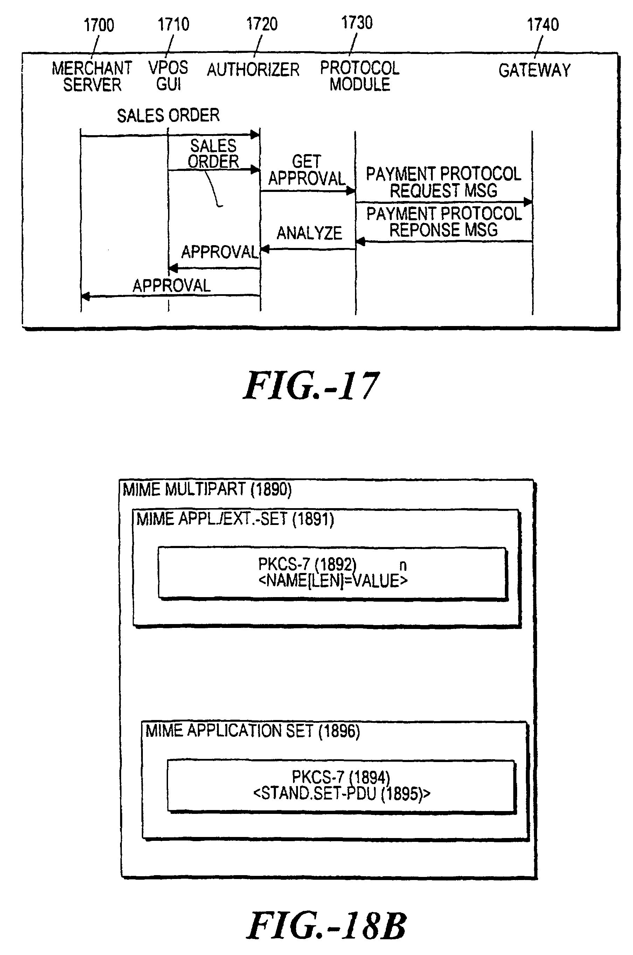

Figure **17** shows a typical message flow between the consumer, merchant, vPOS terminal and the Gateway. This section describes the different classes listed in the previous section, their data and members, and defines the type of the transaction that is to be performed. Processing commences at **1700** when a merchant server receives a sales order and passes it via the vPOS Graphical User Interfece (GUI) **1710** to an authorizer **1720** for approval and subsequent protocol processing **1730** and ultimately transmission via the gateway **1740** to the network.

**Class Name :**

**CVPCLTransaction**

**Data :**

Transaction Type (int)
Transaction Date and Time (CPCLDateTime)
Card Definition Table (CVPCL_CDT)
Host Definition Table (CVPCL_HDT)
Communications Parameters Table (CVPCL_CPT)
Terminal Configuration Parameters (CVPCL_TCT)
Batch Record (CVPCLBatch)
Accumulator Record (CVPCLAccum)

**Member Functions :**

CVPCLTransaction();
EStatus GetTransType();
EStatus GetTransDateTime(CPCLDateTime&);
EStatus SetTransType(const int);
virtual EStatus InitializeTrans(TvPOSParamsBlk *) = 0;
virtual EStatus ExecuteTrans(TvPOSResultsBlk *) = 0;
virtual EStatus ShutDown() = 0;

**Host Transaction Class Definitions**

This section contains all the host transaction class definitions.

**Host Transaction Class (CVPCLHostTrans)**

This is an abstract base class derived from the CVPCLTransaction class and is used for deriving transaction classes which need to communicate with the host either immediately or at a later stage.

**Class Name :**

**CVPCLHostTrans**

**Data :**

**Member Functions:**

CVPCLHostTrans();

**Financial Transaction Class (CVPCLFinancialTrans)**

This is an abstract base class derived from the CVPCLHostTrans. This class is used to derive transaction classes which require a payment instrument (e.g., a Credit Card) associated with them to perform the transaction.

**Class Name :**

**CVPCLFinancialTrans**

**Data :**

Transaction Amount (CVPCLAmt)
Purchase Order Number (char[][])
Transaction Number (char[])
Authorization Identification Number (char[])
Retrieval Reference Number (char[])
Batch (CVPCLBatch)
Accumulators (CVPCLAccumulators)

**Member Functions :**

CVPCLFinancialTrans();
EStatus GetTransAmt(CVPCLAmt&);
EStatus GetPurchOrderNum(char *);
EStatus GetTransRefNum(char *);
EStatus GetRetRefNum(char *);
EStatus GetAuthId(char *);
EStatus GetCurrencyType(EPCLCurrency *);
EStatus SetPurchOrderNum(const char *);
EStatus SetTransRefNum(const char *);
EStatus SetRetRefNum(const char *);
EStatus SetAuthId(const char *);
EStatus SetCurrencyType (const char *)

**Financial Credit Card Transaction Class (CVPCLFinCCTrans)**

This is the base abstract class for the financial host transaction which require a Credit Card payment instrument. This class is derived from the CVPCLFinancialTrans.

**Class Name :**

**CVPCLFinCCTrans**

**Data :**

Credit Card Payment Instrument (CPCLCreditCard)

**Member Functions :**

CVPCLFinCCTrans();

**Credit Card Authorization Only Transaction Class (CVPCL_CCAuthOnly)**

This is the class derived from the CVPCLFinCCTrans class and implements the Authorization Only Transaction.

**Class Name :**

**CVPCL_CCAuthOnly**

**Data :**
**Member Functions :**

```
CVPCL_CCAuthOnly();
EStatus InitializeTrans(TvPOSParamsBlk *);
EStatus ExecuteTrans(TvPOSResultsBlk *);
EStatus ShutDownTrans();
EStatus FormBatchRec();
```

**Credit Card Authorization with Capture Transaction Class (CVPCL_CCAuthCapt)** This is the class derived from the CVPCLFinCCTrans class and implements the Authorization with Data Capture Transaction.

**Class Name :**

**CVPCL_CCAuthCapt**
Data :
**Member Functions :**

```
CVPCL_CCAuthCapt();
EStatus InitializeTrans(TvPOSParamsBlk *);
EStatus ExecuteTrans(TvPOSResultsBlk *);
EStatus ShutDownTrans();
EStatus FormBatchRec();
```

**Credit Card Return Transaction Class (CVPCL_CCReturn)**

This is the class derived from the CVPCLFinCCTrans class and implements the Return Transaction.

**Class Name :**

**CVPCL_CCReturn**

**Data :**

**Member Functions:**

```
CVPCL_CCReturn();
EStatus InitializeTrans(TvPOSParamsBlk *);
EStatus ExecuteTrans(TvPOSResultsBlk *);
EStatus ShutDownTrans(};
EStatus FormBatchRec();
```

**Credit Card Pre-Authorization Transaction Class (CVPCL_CCPreAuth)**

This is the class derived from the CVPCLFinCCTrans class and implements the Pre-Authorization Transaction.

**Class Name :**

**CVPCL_CCPreAuth**

Data :
**Member Functions :**

```
CVPCL_CCPreAuth();
EStatus InitializeTrans(TvPOSParamsBlk *);
```

EStatus ExecuteTrans(TvPOSResultsBlk *);
EStatus ShutDownTrans();
EStatus FormBatchRec();

**Credit Card Off-line Authorization Only Transaction Class (CVPCL_CCOfflineAuth)**

This is the class derived from the CVPCLFinCCTrans class and implements the Offline Authorization Class Transaction.

**Class Name :**

**CVPCL_CCOfflineAuth**

**Data :**

**Member Functions :**
CVPCL_CCOfflineAuth();
EStatus InitializeTrans(TvPOSParamsBlk *);
EStatus ExecuteTrans(TvPOSResultsBlk *);
EStatus ShutDownTrans();
EStatus FormBatchRec();

**Credit Card Adjust Transaction Class (CVPCL_CCAdjust)**

This is the class derived from the CVPCLFinCCTrans class and implements the Adjust Transaction.

**Class Name :**

**CVPCL_CCAdjust**

**Data :**
**Member Functions :**

CVPCL_CCAdjust();
EStatus InitializeTrans(TvPOSParamsBlk *);
EStatus ExecuteTrans(TvPOSResultsBlk *);
EStatus ShutDownTrans();
EStatus FormBatchRec();

**Credit Card Void Transaction Class (CVPCL_CCVoid)**

This is the class derived from the CVPCLFinCCTrans class and implements the Void Transaction.

**Class Name :**

**CVPCL_CCVoid**

**Data :**

**Member Functions :**

CVPCL_CCVoid();
EStatus InitializeTrans(TvPOSParamsBlk *);
EStatus ExecuteTrans(TvPOSResultsBlk *);
EStatus ShutDownTrans();
EStatus FormBatchRec();

**Credit Card Forced Post Transaction Class (CVPCL_CCForcedPost)**

This is the class derived from the CVPCLFinCCTrans class and implements the Forced Post **Transaction.**

**Class Name :**

   **CVPCL_CCForcedPost**

**Data :**

**Member Functions :**

```
CVPCL_CCForcedPost();
EStatus InitializeTrans(TvPOSParamsBlk *);
EStatus ExecuteTrans(TvPOSResultsBlk *);
EStatus ShutDownTrans();
EStatus FormBatchRec();
```

**Pre-Authorization Complete Transaction Class (CVPCL_CCPreAuthComp)**

This is the class derived from the CVPCLFinCCTrans class and implements the Pre-Authorization Completion Transaction.

**Class Name :**

   **CVPCL_CCPreAuthComp**

**Data :**

**Member Functions :**

```
CVPCL_CCPreAuthComp();
EStatus InitializeTrans(TvPOSParamsBlk *);
EStatus ExecuteTrans(TvPOSResultsBlk *);
EStatus ShutDownTrans();
EStatus FormBatchRec();
```

**Credit Card Balance Inquiry Class (CVPCL_CCBalanceInq)**

This class is derived from the CVPCLFinCCTrans class and is used to perform the Merchant Balance Inquiry function.

**Class Name :**

   **CVPCL_CCBalanceInq**

**Data :**

**Member Functions :**

```
CVPCL_CCBalanceInq();
EStatus InitializeTrans(TvPOSParamsBlk *);
EStatus ExecuteTrans(TvPOSResultsBlk *);
EStatus ShutDownTrans();
```

**Administrative Host Transaction Class (CVPCLAdminHostTrans)**

This is an abstract base class derived from the CVPCLHostTrans class and is used to derive the administrative host transaction classes.

**Class Name :**

**CVPCLAdminHostTrans**

**Data :**

**Member Functions :**

```
CVPCLAdminHostTrans();
int GetHostIndex();
EStatus SetHostIndex (const int);
```

**Reconcile Transaction Class (CVPCLReconcile)**

This is the class derived from the CVPCLAdminHostTrans class and implements the Reconcile or Close functionality.

**Class Name :**

**CVPCLReconcile**

**Data :**

**Member Functions :**

```
CVPCLReconcile();
EStatus InitializeTrans(TvPOSParamsBlk *);
EStatus ExecuteTrans(TvPOSResultsBlk *);
EStatus ShutDownTrans();
```

**Host Log-on Transaction Class (CVPCLHostLogon)**

This is the class derived from the CVPCLAdminHostTrans class and implements the Host Log-on Transaction.

**Class Name :**

**CVPCLHostLogon**

**Data :**

**Member Functions :**

```
CVPCLHostLogon();
EStatus InitializeTrans(TvPOSParamsBlk *);
EStatus ExecuteTrans(TvPOSResultsBlk *);
EStatus ShutDownTrans();
```

**Parameters Download Transaction Class (CVPCLParamsDwnld)**

This is the class derived from the CVPCLAdminHostTrans class and implements the Parameters Download (vPOS configuration information from the host) functionality.

**Class Name :**

**CVPCLParamsDwnld**

**Data :**

**Member Functions :**

```
CVPCLParamsDwnld();
EStatus InitializeTrans(TvPOSParamsBlk *);
EStatus ExecuteTrans(TvPOSResultsBlk *);
EStatus ShutDownTrans();
```

**Test Transaction Class (CVPCLTestHost)**

This is the class derived from the CVPCLAdminHostTrans class and implements the Test functionality which is used to test the host and the link.

Class Name :

**CVPCLTestHost**

**Data :**

**Member Functions:**

```
CVPCLTestHost();
EStatus InitializeTrans(TvPOSParamsBlk *);
EStatus ExecuteTrans(TvPOSResultsBlk *);
EStatus ShutDownTrans();
```

**Local Transaction Class Definitions (CVPCLLocalTrans)**

This is the abstract base class for all the transactions that are performed locally to the vPOS.

**Class Name :**

**CVPCLLocalTrans**

**Data :**

```
Record Number (int)
Host Index (int)
```

**Member Functions :**

```
CVPCLocalTrans();
int GetRecNum();
int GetHostIndex()
EStatus SetRecNum(const int);
EStatus SetHostIndex(const int);
```

**Virtual POS Lock/Stop Class (CVPCLvPOSLock)**

This class implements the vPOS Lock or the Stop Local functionality. Under the locked state the vPOS does not accept any transaction requests. The class is derived from the CVPCLLocalTrans base class.

**Class Name :**

**CVPCLvPOSLock**

**Data :**

**Member Functions :**

```
CVPCLvPOSLock();
EStatus InitializeTrans(TvPOSParamsBlk *);
EStatus ExecuteTrans(TvPOSResultsBlk *);
EStatus ShutDownTrans();
```

**Virtual POS UnLock/Start Class (CVPCLvPOSUnlock)**

This class implements the vPOS UnLock or the Start Local functionality. The class is derived from the CVPCLLocalTrans base class.

**Class Name :**

**CVPCLvPOSUnLock**

**Data :**

**Member Functions :**

```
CVPCLvPOSUnlock();
EStatus InitializeTrans(TvPOSParamsBlk *);
EStatus ExecuteTrans(TvPOSResultsBlk *);
EStatus ShutDownTrans();
```

**Transaction Data Administration Class (CVPCLTransDataAdmin)**

This is an abstract base class used to derive the classes which are required to review/manage the transaction data which includes the batch data and the accumulator data. The class is derived from the CVPCLLocalTrans base class.

**Class Name :**

**CVPCLTransDataAdmin**

**Data :**
**Member Functions :**

```
CVPCLTransDataAdmin();
```

**Batch Review Class (CVPCLHatchReview)**

This class is derived from the CVPCLTransDataAdmin base class and implements the batch review functionality

**Class Name :**

**CVPCLBatchReview**

**Data :**

**Member Functions :**

```
CVPCLBatchReview();
EStatus InitializeTrans(TvPOSParamsBlk *);
EStatus ExecuteTransfTvPOSResultsBlk *);
EStatus ShutDownTrans();
```

**Clear Batch Class (CVPCLClearBatch)**

This class is derived from the CVPCLTransDataAdmin base class and implements the clear batch functionality, which is used to clear the batch in the event of doing a manual reconciliation between the vPOS and the acquirer.

**Class Name :**

**CVPCLClearBatch**

**Data :**
**Member Functions :**

```
CVPCLClearBatch();
EStatus InitializeTrans(TvPOSParamsBlk *);
EStatus ExecuteTrans(TvPOSResultsBlk *);
EStatus ShutDownTrans();
```

**Accumulators Review Class (CVPCLAccumReview)**

This class is derived from the CVPCLTransDataAdmin base class and implements the Accumulators Review functionality.

**Class Name :**

**CVPCLAccumReview**

**Data :**
**Member Functions :**

```
CVPCLAccumReview();
EStatus InitializeTrans(TvPOSParamsBlk *);
EStatus ExecuteTrans(TvPOSResultsBlk *);
EStatus ShutDownTrans();
```

**Clear Accumulators Class (CVPCLClearAccum)**

This class is derived from the CVPCLTransDataAdmin base class and implements the Accumulators Clear functionality.

**Class Name :**

**CVPCLClearAccum**

**Data :**
**Member Functions :**

```
CVPCLClearAccum();
EStatus InitializeTrans(TvPOSParamsBlk *);
EStatus ExecuteTrans(TvPOSResultsBlk *);
EStatus ShutDownTrans();
```

**vPOS Configuration Data Administration Class (CVPCLConfigDataAdmin)**

This is an abstract base class and is used to derive classes which implement the functionality for managing the vPOS configuration data. The class is derived from the CVPCLLocalTrans base class.

**Class Name :**

**CVPCLConfigDataAdmin**

**Data :**
**Member Functions :**

**Acquirer Data or the Host Definition Table Review Class (CVPCL_HDTReview)**

This class is derived from the CVPCLConfigDataAdmin class and implements the Host Definition Table Review functionality.

**Class Name :**

**CVPCL_HDTReview**

**Data :**
**Member Functions :**

```
CVPCL_HDTReview();
EStatus InitializeTrans(TvPOSParamsBlk *);
EStatus ExeeuteTrans(TvPOSResultsBlk *);
EStatus ShutDownTrans();
```

**Issuer Data or the Card Defmition Table Review Class (CVPCL_CDTReview)**

This class is derived from the CVPCLConfigDataAdmin class and implements the Card Definition Table Review functionality.

**Class Name :**

**CVPCL_CDTReview**

**Data :**
**Member Functions :**

```
CVPCL_CDTReview();
EStatus InitializeTrans(TvPOSParamsBlk *);
EStatus ExecuteTrans(TvPOSResultsBlk *);
EStatus ShutDownTrans();
```

**Communication Parameters Table Review Class (CVPCL_CPTReview)**

This class is derived from the CVPCLConfigDataAdmin class and implements the Communications Parameters Table Review functionality.

Class Name :

**CVPCL_CPTReview**

**Data :**

**Member Functions:**

```
CVPCL_CPTReview();
EStatus InitializeTrans(TvPOSParamsBlk *);
EStatus ExecuteTrans(TvPOSResultsBlk *);
EStatus ShutDownTrans();
```

**Terminal Configuration Table Review Class (CVPCL_TCTReview)**

This class is derived from the CVPCLConfigDataAdmin class and implements the Terminal Configuration Table Review functionality.

**Class Name :**

**CVPCL_TCTReview**

**Data :**

**Member Functions :**

```
CVPCL_TCTReview();
EStatus InitializeTrans(TvPOSParamsBlk *);
EStatus ExecuteTrans(TvPOSResultsBlk *);
EStatus ShutDownTrans();
```

**Acquirer Data or the Host Definition Table Update Class (CVPCL_HDTUpdate)**

This class is derived from the CVPCLConfigDataAdmin class and implements the Host Definition Table Update functionality.

**Class Name :**

**CVPCL_HDTUpdate**

**Data :**
**Member Functions:**

```
CVPCL_HDTUpdate();
EStatus InitializeTrans(TvPOSParamsBlk *);
EStatus ExecuteTrans(TvPOSResultsBlk *);
EStatus ShutDownTrans();
```

**Issuer Data or the Card Definition Table Update Class (CVPCL_CDTUpdate)**

This class is derived from the CVPCLConfigDataAdmin class and implements the Card Definition Table Update functionality.

**Class Name :**

**CVPCL_CDTUpdate**

**Data :**
**Member Functions :**

```
CVPCL_CDTUpdate();
EStatus InitializeTrans(TvPOSParamsBlk *);
EStatus ExecuteTrans(TvPOSResultsBlk *);
EStatus ShutDownTrans();
```

**vPOS API Definition**

This section explains in the vPOS API which are required for interfacing with the vPOS Class Library. All the different vPOS transactions can be initiated using the API defined in this section.

**vPOSInitialize - Initialize vPOS**

This API is used to start and initialize the vPOS. The API definition is disclosed below.

**API Definition :**

vPOSBool vPOSInitialize(void);

**Parameters :**

None

**Returns:**

TRUE or FALSE indicating whether the function call was a success.

**vPOSExecute - Execute a vPOS Transaction**

This API is used to execute a particular vPOS transaction.

**API Definition :**

vPOSBool vPOSExecute(TvPOSParamsBlk *, TvPOSResultsBlk *)

**Parameters :**

Pointer to the Parameters Structure (TvPOSParamsBlk)
Pointer to the Results Structure (TvPOSResultsBlk)

**Returns :**

TRUE or FALSE indicating whether the function call was a success.

**vPOSShutDowa - Shutdown the vPOS**

This is used to shutdown the vPOS.

**API Definition :**

vPOSBool vPOSShutDown(void)

**Parameters :**

None

**Returns :**

TRUE or FALSE indicating whether the function call was a success.

**vPOS Status Codes**

This section details the different status codes (listed under the enumeration EStatus) which the vPOS returns for the different operations performed. enum EStatus

```
{
    eSuccess = 0,                  // Function call or operation successful
    eFailure,                      // General failure
    evPOSLocked,                   // vPOS locked, transaction not allowed

                                   // Transaction related error codes
    ePmtInstNotSupported,          // Payment Instrument not supported
    eTransNotSupported,            // Transaction type not supported
    eTransInitErr,                 // Transaction Initialization Failed
    eAdjustNotAllwd,               // Adjust not allowed on this transaction
    eVoidNotAllwd,                 // Void not allowed on this transaction
    eForcedPostNotAllwd,           // Forced Post not allowed on this transaction
    ePreAuthCompNotAllwd,          // Pre-Auth. not allowed on this transaction
    eAmtErr,                       // Error in the amount passed
    eHDTLoadErr,                   // Error during loading the HDT table
    eCDTLoadErr,                   // Error during loading the CDT table
    eCPTLoadErr,                      // Error during loading the CPT table
    eTCTLoadErr,                      // Error during loading the TCT table
    eHDTWriteErr,                     // Error during writing to the HDT table
    eCDTWriteErr,                     // Error during writing to the CDT table
    eCPTWriteErr,                     // Error during writing to the CPT table
    eTCTWriteErr,                     // Error during writing to the TCT table
    eTCTFieldErr,                     // Error handling a TCT table field
    eLuhnErr,                         // Luhn check failed on the account
    eRangingErr,                      // Card range not found
    ePANLenErr,                       // PAN length error
    eExpiredCard,                     // Card expired
    eInvalidMonth,                    // Invalid month in the expiration date
    eFileOpenErr,                     // General file open error
    eFileCloseErr,                    // General file close error
```

## vPOS Terminal Architecture

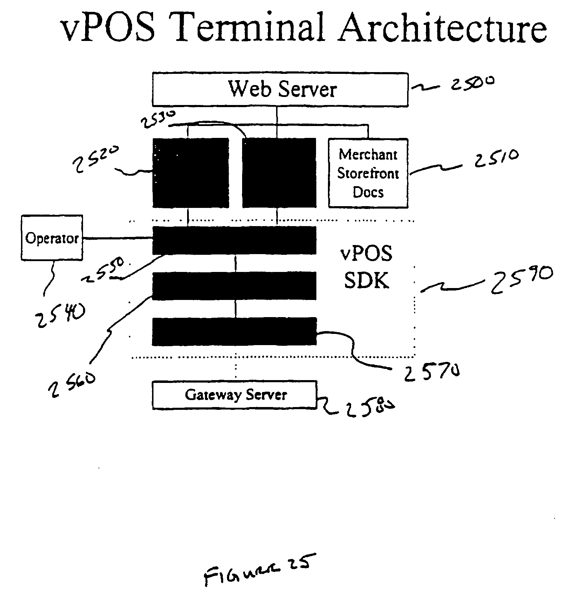

Figure **25** is a block diagram of the vPOS Terminal Architecture in accordance with a preferred embodiment. The Internet **2500** provides the communication processing necessary to enable the vPOS Terninal architecture. The terminal interface CGI **2520** communicates via the Internet to provide information to the vPOS OLE Server **2550** which formats information in accordance with the vPOS API DLL **2560** which uses the protocol class DLL **2570** to flesh out the message for delivery to the Gateway Server **2580**. The collection of the vPOS OLE Server **2550,** vPOS API DLL **2560** and the Protocol Class DLL **2570** make up the vPOS Software Development ToolKit (SDK) which are used to enable vPOS applications for interfacing with an Operator **2540**.

## vPOS/GATEWAY Architecture

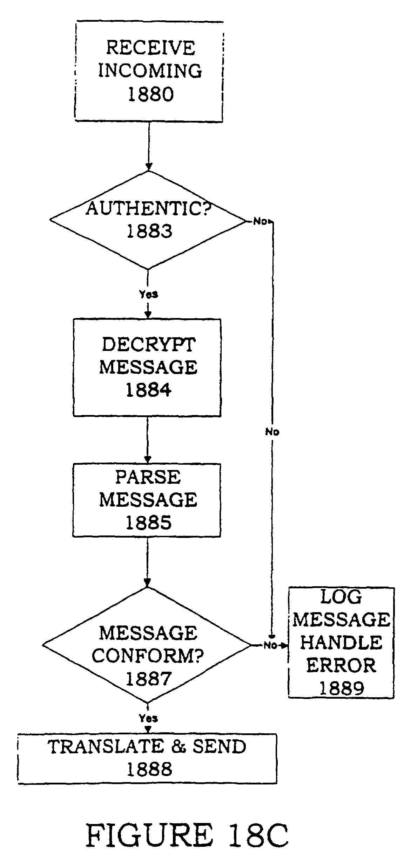

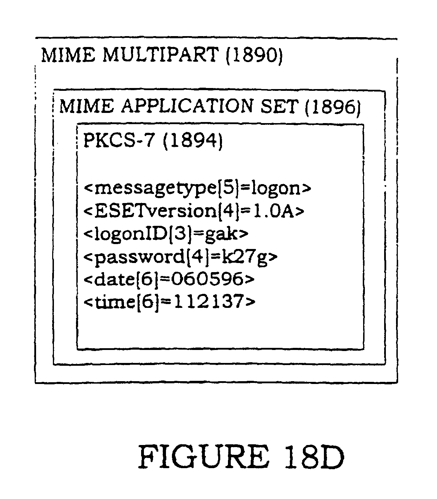

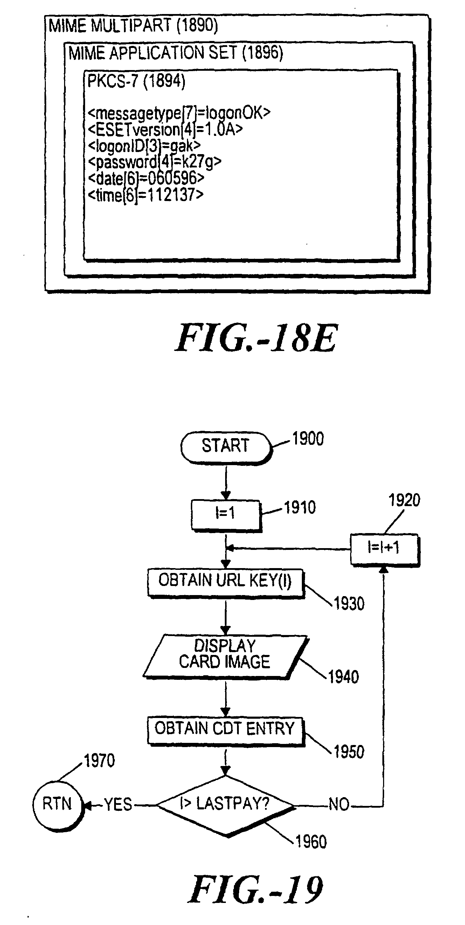

The architecture of the Virtual Point of Sale (vPOS) and Virtual Gateway (GATEWAY) architecture maintains SET compliance while providing support for additional message types that are not enabled in SET. The architecture includes isolation of cryptographic details in a single module to facilitate single version government approval while maximizing the flexibility of the system for customization and facilitating transfer of updated versions on an acquirer specific basis. Figure **18** is a block diagram of the extended SET architecture in accordance with a preferred embodiment. Processing commences at function block **1800** for a consumer-originated transaction via the World Wide Web (WWW) or **1810** for a merchant-originated transaction on the Internet. In either case control passes immediately to the WWW server **1820** for the transaction to be appropriately formatted and the appropriate interface page presented, whether the transaction is a store front **1822,** shopping cart **1824,** pay page **1826,** standard terminal administration **1828-1830** transaction, or an extended terminal transaction **1834.** If processing requires authentication of the transaction, then control passes through the Virtual Point of Sale (vPOS) Application Programming Interface (API) library **1840** for SET compliant transactions and through the vPOS API extensions library for extensions to the SET protocol. Then, at function block **1842**, if the transaction is SET compliant, and function block **1864** if the transaction is not SET compliant, a library of protocol stack information is used to conform the message before it is transmitted to a Gateway site for ultimate delivery to a bank host **1874** for authorization.

Extended SET messages are processed at the Gateway site on a two track basis with the division criteria being SET compliance (which will change over time as more functionality is put into SET) or SET extensions. Set compliant messages are processed via the protocol statck library **1862**, while SET extensions are processed via the protocol stack entension library **1864.** Then, at function block **1870** the gateway engine processes SET and Host specific code including gateway administration extensions **1872** that bypass the normal processing and flow directly from the merchant and consumer server **1820** to the gateway administration extensions **1872** to the Gateway Engine **1870.**

As described above, there are three channels by which messages are exchanged between vPOS **1846** and GATEWAY **1856.**

1. Standard SET messages

The standard SET messages are originated by the merchant software either via a pay page **1826** directly controlled by the consumer, or via an operator interface consisting of a set of HTML pages and associated executables launched by the pages (e.g. pay page **1826** and standard terminal administration **1828-1830**.) Each SET message type (e.g., authorization v. capture) transmits a different set of data and each requires a different Protocol Data Unit (PDU) to describe its encoding. Examples of how Standard SET messages are encoded are given in the SET documentation previously incorporated by reference.

2. Extended SET messages

The Extended SET messages are utilized as an "escape mechanism" to implement acquirer-specific messages such as settlement/reconciliation, employee logon/logoff, and parameter download. The messages are developed as a set of name-value pairs encapsulated in a PKCS-7 wrapper and wrapped in Multipurpose Internet Mail Extensions (MIME), described in a book by N. Borenstein & N. Freed, "RFC 1521: MIME (Multipurpose Internet Mail Extensions) Part One: Mechanisms for Specifying and Describing the Format of Internet Message Bodies" (Sep. 1993). The name-value pairs can have arbitrary (8-bit) data, so arbitrary items can be passed through the extended SET channel, including executable programs and Dynamic Load Libraries (DLL)s. **Figure 18B** illustrates a multipart MIME message with one Extended SET message and one Standard SET authorizing message. Mime is utilized as an outer wrapper **1890** to allow an Extended SET message **1891** to be transmitted as a compon of messages embedded in one MIME multipart message. In this manner, a standard SET message can be sent with an Extended SET message in one vPOS/GATEWAY communication transaction. Embedding the Extended SET messages in a PKCS-7 wrapper enables the same message authentication to occur as in standard SET messages. Thus, for SET-compliant and non-SET-compliant messages, the same mechanism may be used to restrict which entities the vPOS or Gateway will trust in any communications. An important concept in Extended SET is that all messages, of any type, are sent in a uniform name/value pair format, thus allowing a single Protocol Data Unit to suffice for any type of message sent through the Extended SET channel. Since arbitrary data may be sent this way, a mechanism must be provided to preclude the use of the Extended SET channel by parties other than approved financial institutions. If this is not ensured, then the NSA and the US Department of Commerce will not approve the software for export. SET itself to some degree ensures that this Extended SET channel is used only by financial institutions. The protocol stack extension library only processes messages that have been signed by a financial institution SET certificate that is in turn signed by a payment instrument brand certificate (such as Visa or MasterCard). Stronger control over the Extended SET channel can be achieved by further restricting processing of messages to those signed (either instead of or in addtion to the financial institution SET certificate) by a second certificate belonging to a third-party agency, either governmental or private (e. g., VeriFone, as manufacturer of the software).

In this way, a particular set of Extended SET messages can be implemented by Bank X, and a different set of messages by Bank Y. If a vPOS has an extended terminal transaction interface as shown in Figure **18A** at block **1834** for Bank X, and has been configured to only accept messages from a Gateway with Bank X's certificate, then it will be able to communicate those messages to a Gateway that has the certificate for Bank X, and accepts messages of the types in Bank X's message set. The vPOS will not be able to connect to the Bank Y gateway, or to any other system that purports to communicate via Extended SET. This restriction is further secured by utilizing a public key certificate that is "hard wired" into vPOS, and which is distributed only to gateways that use the Extended SET mechanism.

Figure **18C** is an example flowchart of message processing in accordance with a preferred embodiment. Processing commences at function block **1880** when a message is received by an HTTPS server or other listener and passed to decision block **1883** to determine if the sending vPOS has transmitted an authentic message and if the vPOS is authorized to communicate with this gateway. If the message is not authentic, then the message is logged as an error and the error is handled as shown in function block **1889**. If the message is authentic, then the message is decrypted at function block **1884** and the PDU parses the message into name / value pairs. Then, based on the message type and the extended SET version information, the remaining message is parsed at function block **1885** and the message is checked for conformance to the appropriate specification as shown at decision block **1887**. If the message does not conform, then it is logged and the error handled at function block **1889.** If the message conforms to the proper specification in decision block **1887** then the message is translated into the appropriate host format and sent to the host as shown in function block **1888**. Thus, when a gateway receives an incoming message from a vPOS and parses the Extended SET portion of the message, a single MIME message can transmit a SET message and/or an Extended Set Message.

An export license for the encryption can be obtained on a case-by-case basis, and since there will be potentially millions of vPOS's, it is desireable to obtain a commodities jurisdiction for the vPOS, to enable a single version of the vPOS (rather than one version for each bank) to be supported by the vPOS architecture. The architecture described here ensures that the single version of vPOS, no matter how it is configured with extended terminal transaction interfaces, cannot be used to communicate any data other than that contained in the extended SET messages that have been approved for export by the US government to be used exclusively for a specific bank.

Figure **18D** is an example of a simple message between vPOS and Gateway using the Extended SET channel enabling an employee to sign on, or "logon" to a given terminal in accordance with the subject invention. The message must contain the employee's logon ID, a password to be verified by the bank host computer, and the date and time as shown at **1894.** While the contents of the message are shown without encryption in Figure **18D**, it should be noted that the information (including the logon password) are SET encrypted inside the PKCS-7 wrapper **1894**. Certain fields may be designated as mandatory for an Extended SET message, to allow the Gateway or vPOS to decide how to handle the message. For the sake of clarity, in this message **1894**, only two fields, "messagetype" and "ESETversion", are mandatory. These fields inform the Gateway that this message is of type "logon," and that the vPOS is using version "1.0A" of the ESET message formats defined for the Gateway. In this embodiment, the length indicator "[5]" is used to distinguish the length (in bytes) of the field of type "messagetype" in the message. In this way, there are no special end-of-data characters, and therefore arbitrary data need not have any "escaped" characters. It should be noted that using escaped characters will work equally well. Total message integrity is assured by the digital signatures in the PKCS-7 wrapper. This does not, however, preclude the use of other checksumming schemes for additional pinpointing of transmission or encoding errors. The messagetype and ESETversion name/value pairs facilitate Gateway look up of what name/value pairs are expected in the "logon" message. Some name/value pairs may be mandatory, and others may be optional.

Figure **18E** is an example of a simple message between vPOS and Gateway using the Extended SET channel enabling an employee to sign on, or "logon" to a given terminal in accordance with the subject invention. In response to the logon request message from a vPOS, the Gateway may respond with a "logon accepted" message **1894,** as depicted in Figure **18E**, which vPOS, upon receipt and authentication, then uses to unlock the terminal for that user.

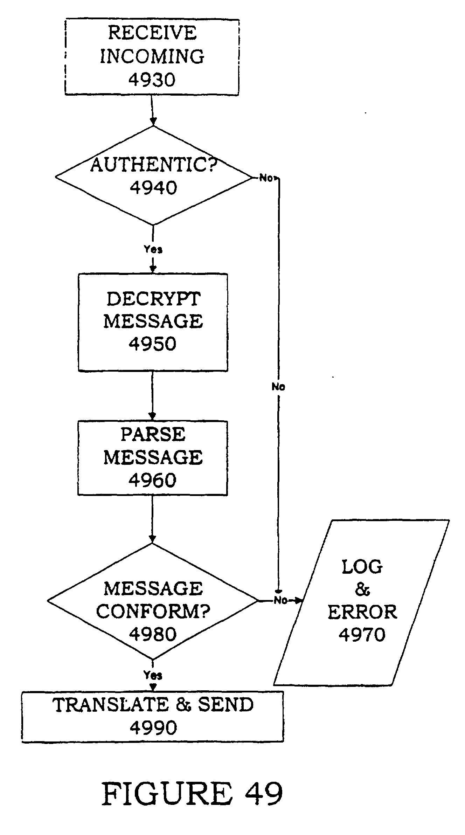

Figure **49** shows how the vPOS authenticates an incoming response to a request in accordance with a preferred embodiment. Processing commences at function block **4930** when a message is received by the HTTPS, SET server, or other listener that originated the request to which this reponse corresponds. The message is passed to decision block **4940** to determine if the sending Gateway has transmitted an authentic message and if the gateway is authorized to communicate with this vPOS. If the message is not authentic, then the message is logged as an error or possible attack and the error is handled as shown in function block **4970**. If the message is authentic, then the message is decrypted at function block **4950** and the PDU parses the message into name/value pairs. Then, based on the message type and the extended SET version information, the remaining message is parsed at function block 4960 and the message is checked for conformance to the appropriate specification as shown at decision block **4980.** If the message does not conform, then it is logged and the error handled at function block **4970.** If the message conforms to the proper specification in decision block **4980** then the message is translated into a standardized argument string to be passed to the appropriate executable or code entry point in the vPOS, as shown in function block **4990.** Thus, when a vPOS receives an incoming message from a Gateway and parses the Extended SET portion of the message, the message may cause vPOS to execute a program that takes action or queries the user to take action.

3. Gateway-intitiated messages

Since all SET messages between a merchant and an acquirer are currently merchant-initiated (as specified in the SET documentation), there must be a separate mechanism for initiating a message from a gateway, for example to request the upload of management information base (MIB) data, or to download new parameters. This is accomplished by requiring the gateway to send a message to the merchant via a MIME-encapsulated PKCS-7 conformant message containing name-value pairs to the merchant server directly, rather than to the SET module. This channel is shown in Figure **18A** at block **1860**.

The message is verified for origination from the acquirer, and is utilized to either initialize a merchant action, such as to update the merchant's administration page (for example by blinking a message saying, "PLEASE RE-INITIALIZE YOUR TERMINAL"), or by initiating a request/response message pair originating from the merchant (for example, "HERE ARE THE CONTENTS OF MY MIB"). This is achieved by calling one of the extended terminal transaction interfaces (Figure **18A** at **1834**), which in turn initiates a SET or Extended SET transaction.

**Gateway Customization via the Extended SET Channel**

Gateway customization in extended SET is extremely powerful and a novel concept for vPOS processing. Each vPOS contains one or more "serial numbers" unique to each copy of the software (a serial number may be embedded in the software, or may be a component of a public key certificate used in the software). Once a merchant has selected an acquirer and obtained the appropriate certificates, the vPOS can be customized utilizing the communication link and messages containing customization applications. A bank distributes vPOS via different sales channels. The first is direct from a bank to an existing merchant with whom the bank already has an existing relationship. In this case, a version of vPOS already customized for a bank is sent to the merchant, either directly by a bank, or through a third-party distributor or service bureau. The customizations may involve modification or replacement of, for example, a store front **1822**, shopping cart **1824**, pay page **1826**, standard terminal administration transaction interface **1828-1830** or an extended terminal transaction interface **1834**. This is a standard model of distribution of software that is customized for small target market segments. The more interesting case, and the one that concerns the novel use of the Extended SET channel, is where the potential merchant acquires, through some non-bank channel, a "generic" vPOS which has not yet been customized to interact with a specific bank. This vPOS can communicate with a "test gateway", which the merchant may use to experiment with the various features of vPOS and to test the integration of the vPOS into a total online storefront. In order to actually transact business over the Internet, the merchant must first obtain a merchant ID from the merchant bank with which he signs an acquiring agreement. For online payment processing, the merchant must also obtain an appropriate set of digital credentials in the form of public key certificates and possibly additional passwords, depending on the financial institution. Once these credentials are obtained, the merchant is ready to customize the already-obtained vPOS to communicate with a merchant bank's gateway.

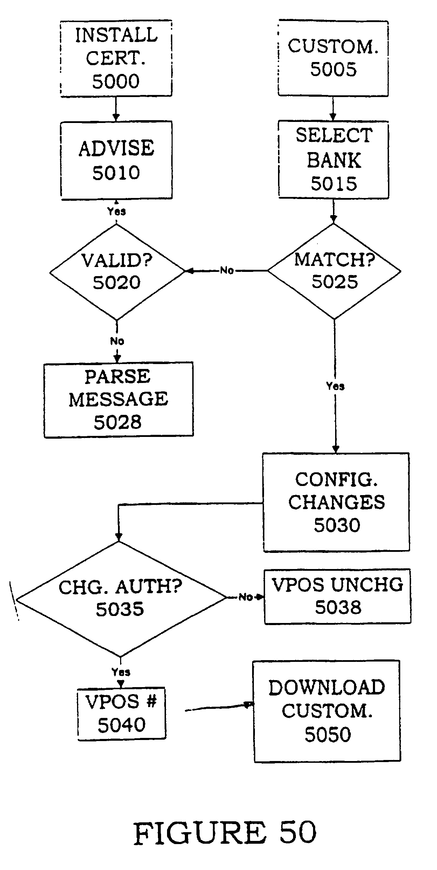

Using the built-in "serial number" certificate and the Test Gateway public key certificate (which is "hard-wired" into the vPOS sofware), it is possible to securely download a particular bank's customization applications to a specific copy of the vPOS software. Once the vPOS is appropriately configured, the last stage of customization download is to configure the vPOS so that it only responds to a public key certificate of the merchant's acquirer. This process is illustrated here in the context of a merchant who obtains a vPOS that talks to the VeriFone test gateway, and desires to customize the vPOS to interact with a gateway at a bank. The merchant has purchased a vPOS from a non-bank channel. The version communicates with the VeriFone Test Gateway. The merchant uses the gateway to learn about using vPOS, and to test the integration of his storefront system with his payment system. The merchant also obtains certificates for payment processing from a bank, the merchant bank of choise for the merchant. The merchant is now ready to customize vPOS to talk to the bank gateway. The flowchart for the merchant interaction with the Test Gateway is shown in Figure **50.**

The merchant begins at function block **5000,** where the newly-obtained merchant SET certificates are installed in the vPOS. The merchant then directs the vPOS to connect to the VeriFone Test Gateway, by selecting this option from the vPOS terminal administration home page **5005.** The choice of this option invokes an extended terminal admin page from the default set of such pages supplied with the generic version of vPOS. This program guides the customization process. The merchant, interacting with the extended terminal admin page, navigates to the list of gateways which is maintained by the Test Gateway, and selects the bank to connect by selecting from the list of banks, at function block **5015**. During this process, the merchant's public key certificates are uploaded to the Test Gateway, and checked (at decision block **5025**) to verify that the certificates have been signed by the bank to customize the bank for the vPOS.

If the certificates do not match, the merchant is advised of the situation in function block **5028**, and must select a different bank. If the certificates are not valid SET certificates as detected at decision block **5020**, the merchant is advised at function block **5028**, and the session terminates. If the certificates are valid and match the selected bank, customization continues at function block **5030**. The extended terminal administration program in vPOS receives a list of the customizations from the Test Gateway that must be performed to specialize the vPOS for a specific bank. Some of these customizations are mandatory, while others are optional. In function block **5030**, the vPOS advises the merchant of the customizations, prompting for any choices that must be made by the merchant. The merchant's actions at this point drive decision block **5035**, in which the vPOS either returns itself to the "generic" state and terminates the interaction, or begins the configuration of the vPOS, depending on the merchant's confirmation of the request to begin the configuration. If the merchant has authorized the changes, control is passed to function block **5040** where, the POS storesthe certificates of any gateways that it will allow future configuration changes to be initiated from in its database. This may be only a specific bank, such as a bank and the Test Gateway, or other combinations. If only a single, non-Test, bank-owned, gateway is allowed to download changes, the vPOS is no longer customizable for any other bank. Then, a new copy would be purchased by the merchant to have it customized for another bank. If the Test Gateway is still allowed to customize the vPOS, the merchant could switch to another merchant bank and have the current vPOS updated to work with the new bank. In function block **5050**, the customizations are downloaded to the vPOS. The downloads comprise a set of HTML pages and a set of executable programs or scripts that read data from the merchant, perform various functions, and present data to the merchant. In general, the customizations downloaded may augment or replace in part or in whole any and all of function blocks **1822, 1824, 1826, 1828, 1830,** or **1834** in Figure **18A**. At a minimum, the terminal "home page" will be replaced so that it points to the new functionality.At this point, the customization of the vPOS has been completed, and the merchant may now begin sending payment requests to the merchant bank or processor through the vPOS.

### Thread Safe vPOS - TID Allocation

Physical terminals process a single transaction at a time since clerks are usually only able to process one transaction at a time. Web Servers can process many transactions at a time, so payment requests can often occur simultaneously. Thus, the vPOS Software must have support for multi-tasking and provide support for multiple threads to be active at the same time in the same system as well as the same process. This requirement is relatively straight forward. However, the authorizing banks require that all transaction requests include a Terminal ID (TID), and, for many banks, no single TID may be active in any two transaction requests that overlap in time. Thus, the vPOS requires dynamic allocation of TIDs to requesting threads. One way of providing for multiple TID's is to assign a "base" TID, and either an "extension" (a set of extra digits appended to the base), or an increment (a number which is added to the base to obtain the complete TID). While such a solution can be used for the majority of banks and processors, not all banks/processors can accomodate this solution. One example is First Data Corporation. For its ENVOY protocol, the terminal ID must use the Luhn check as recited in an ISO ransrk, which adds a checksum digit to the the terminal ID to reduce chances of fraud or of mistyped information. Thus, to be general enough to handle all bank/processor situations, a pool of TID's is used. The TID's stored in the pool need not be a sequential set of numbers; in fact they can be alpha/special/numeric combinations, and the TID's need have no relation to one another. In a preferred embodiment, a TID is represented as a token in a pool that can be associated with a particular transaction. To provide for this requirement, the vPOS provides a TID pool in tabular form in a database management system (DBMS). This table has two colums: TID NAME & Allocation date/time. If the TID date is null, then the TID is not in use and may be assigned. A date/time field is utilized to allow TID allocations to expire. TID requests are made utilizing a SQL query on the TID Pool to find the first null or expired date/time, which is replaced with the current date/time and the TID name returned.

### REMOTE vPOS

The unique archtitecture of the Cardholder **120,** Merchant **130** and Gateway **140,** as shown in Figure **1B**, provides communication capability between the modules utilizing the Internet to support linkages **150** and **170.** Since the Internet is so pervasive, and access is available from virtually any computer, utilizing the Internet as the communication backbone for connecting the cardholder, merchant and access to the authorizing bank through a gateway allows the merchant vPOS software to be remotely located from the merchant's premises. For example, the cardholder could pay for goods from any computer system attached to the Internet at any location in the world. Similarly, the merchant vPOS system could be located at a central host site where merchant vPOS systems for various merchants all resided on a single host with their separate access points to the Internet. The merchant could utilize any other computer attached to the Internet utilizing a SSL or SET protocol to query the remote vPOS system and obtain capture information, payment administration information, inventory control information, audit information and process customer satisfaction information. Thus, without having to incur the overhead of maintaining sufficient computer processing power to support the vPOS software, a merchant can obtain the information necessary to run a business smoothly and avoid hiring IS personnel to maintain the vPOS system.

**vPOS Multi-Merchant Processing**

Multiple merchant processing refers to the ability of a plurality of merchants to process their individual vPOS transactions securely on a single computer. The architecture relies on each payment page obtaining the merchant name in a hidden field on the payment page. The vPOS engine receives the merchant name with a particular transaction and synchronizes the processing utilizing a Set Merchant method. This command causes the vPOS API to look up a unique registry tree based on the merchant name. This process causes the vPOS engine to engage the appropriate configuration to process the transaction at hand utilizing a Registry Tree. A registry tree contains Card Definition Tables (CDT)s, Acquirer Definition Tables (ADT)s, Merchant Definition Tables (MDT)s, Protocol Configuration Tables (PCT)s, etc. The CDTs point to specific ADTs since each supported card can be supplied by a distinct acquirer. This is one form of split connection. Each of the ADTs in turn point to PCTs, and some acquirers can support multiple parallel gateways. A merchant's name refers to a unique database in the database management system which contains for example, TIDs. So, for example, to fully qualify a particular merchant in a multi-merchant system, the Acquirer Definition Table is queried to ascertain the particular Gateway (VFITest), then if Bank of America requires verification of network communication information, the particular CardDT is accessed with for example VISA. The particular merchant will service VISA transactions utilizing a particular acquirer. The particular piece of merchandise will also be detailed in a data base. Finally, the merchant Configurations wil 1 also be stored in the database to facilitate E-mail and name lookup.

**vPOS CLIENT**

The interaction between the vPOS and a client commences when a pay page solicits parameters of a transaction. Then, the parameters are validated to be sure the payment instrument, for example, cardnumber is not null. Then, a transaction object is created, eg. AUTHONLY, and the object is initialized and stuffed with parameters of the transaction, eg. ao.setpan(accnum), and the object is executed. This execution invokes the vPOS engine. The vPOS engine further validates the parameters based on the particular merchant's configuration. For example, some merchans do not accept American Express Cards, but will take Visa, and all merchants check the expiration date of the card. Assuming a valid and acceptable card has been tendered, then a TID is assigned (expiring, existing TIDs) or block a new TID from the TID Pool. This generates a STAN, XID, RRPID unique tag and creates an initial record in the transaction database which is flagged as before gateway processing in case the transaction crashes and must be backed out. Then the protocol parameters are identified in the registry based on card type, and a particular acquirer identified. Then, a protocol object is created and executed to extract results from the protocol object and the before gateway "bit" is flipped to again flag the location of the transaction in the process as it is submitted to the Gateway. The results received back from the Gateway are placed into a transaction object with is reported back to the pay page and ultimately back to the pay page user.

**vPOS Merchant Pay Customization**

A novel feature of the vPOS software provides payment page customization based on a merchant's preferences. This feature automatically lists cards that are accepted by a particular merchant based on the active terminal configuration. Each approved card for a particular merchant is linked to the display via an URL that provides a pointer to the credit card information supported by the merchant. Each card has an entry in a data structure referred to as the Card Definition Table (CDT). A preferred embodiment of the vPOS merchant pay customization software in accordance with a preferred embodiment is provided in Figure **19** which illustrates the logic utilizing a flowchart, and a listing of the source code below. Processing commences at terminal **1900** and immediately flows to function block **1910** where an index variable is initialized for stepping through each of the accepted payment instruments for the merchant's page. Then, at function block **1930**, a URL key is obtained associated with the current merchant pay page and index value. The URL key is a registry key name that points to a picture of a credit card that the merchant has associated with the pay page and which the merchant accepts as payment. At output block **1940** the card image associated with the URL key is obtained and displayed on the terminal. The CDT entry is obtained at function block **1950** utilizing the URL key. The CDT is utilized for storing information associated with each card. Then, at decision block **1960**, a test is performed to determine if the last payment method card has been processed and displayed on the merchant display. If not, then the index is incremented at function block **1920** and the loop reiterated to process the next card at function block **1930**. If all the cards have been processed, then control is returned to the merchant program for processing the transaction at terminal **1970**.

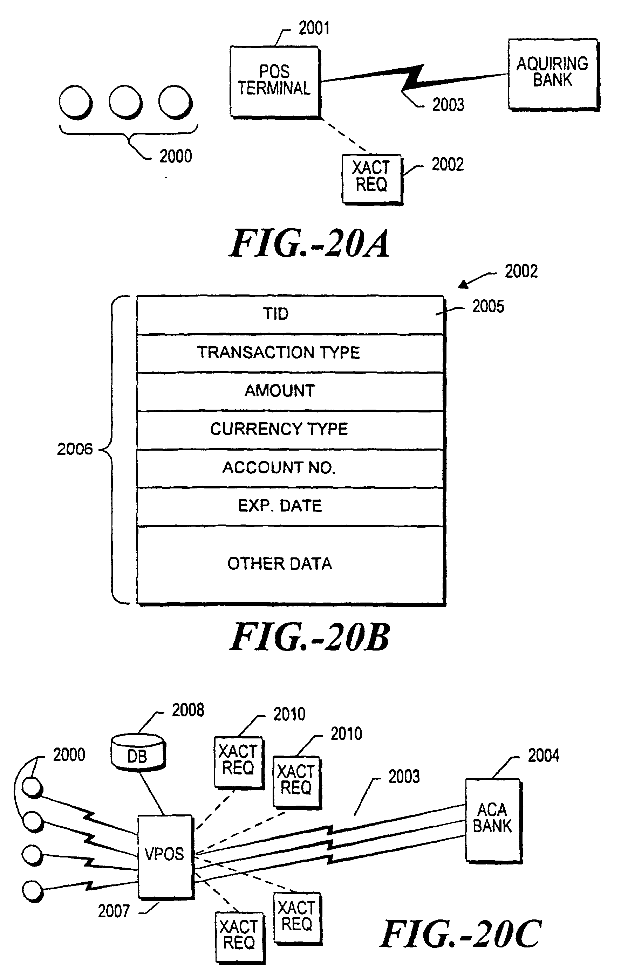

Figures 20A through 20H are block diagrams and flowcharts setting forth the detailed logic of thread processing in accordance with a preferred embodiment. Figure **20A** illustrates a prior art approach to POS processing utilized in most grocery stores and department stores today. POS Terminal **2001** accepts transactions provided to it one at a time by customers **2000.** For each transaction, POS Terminal **2001** builds a transaction request **2002** and transmit it to acquiring bank **2004** over communications link **2003.**

Figure **20B** is a data structure **2002** representing a POS transaction request in accordance with a preferred embodiment. The data structure **2002** includes a TID field **2005**, which identifies the physical terminal from which the transaction originates. In addition to the TID field, the data structure also includes other data **2006** necessary to process a transaction. This data includes such fields as a transaction type, a transaction amount, a currency type (such as U. S. dollars), credit card account number, credit card expiration date, etc.

Figure **20C** illustrates a vPOS architecture with account requests being processed by a single acquiring bank. vPOS **2007** processes a plurality of customers **2000** concurrently. For each such customer **2000,** vPOS **2007** builds a data structure **2010,** representing the transaction to be performed for that customer. Each data structure **2010** contains a unique "virtual terminal" ID. vPOS **2007** selects a virtual terminal ID using database **2008**. For each data structure **2010,** vPOS **2007** initiates communication with acquiring bank 2004 using communication link **2003**.

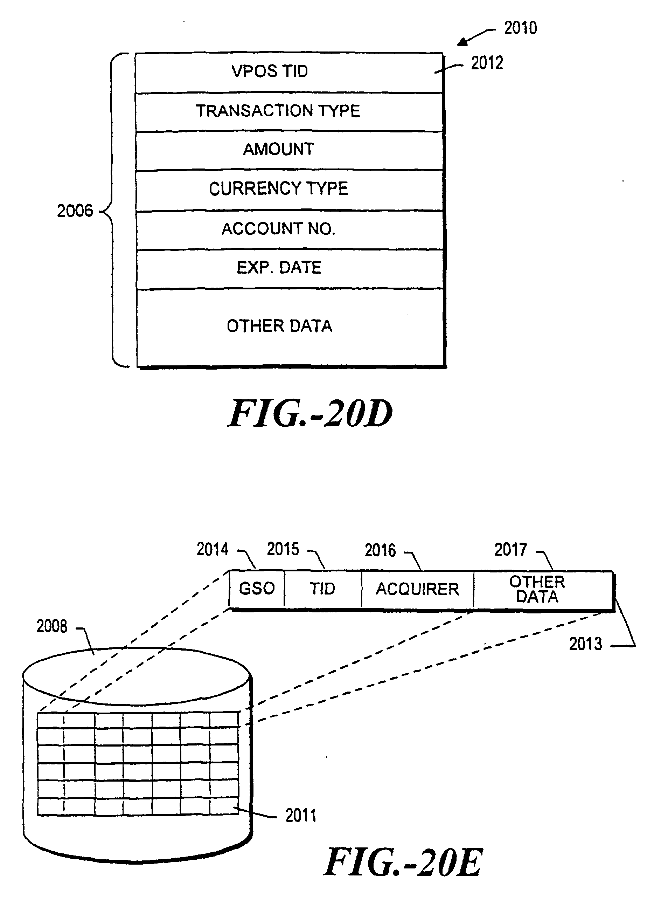

Figure **20D** is a data structure **2010** representing a vPOS transaction request in accordance with a preferred embodiment. The data structure **2010** includes a TID field **2012**, which identifies a virtual terminal ID associated with a particular transaction. In addition to the TID field **2012,** the data structure also includes other data **2006** necessary to process a transaction. This data includes such fields as a transaction type, a transaction amount, a currency type (such as U.S. dollars), credit card account number, credit card expiration date, etc.

Figure **20E** illustrates a TID allocation database **2008** in accordance with a preferred embodiment. Database **2008** includes a TID allocation table **2011**. TID allocation table **2011** includes a plurality of rows, one for each TID used by each acquiring bank. One such row **2013** is illustrated in detail. Row **2013** includes a good/service order (GSO) identifier **2014**, which identifies the order being transmitted; a TID field **2015**, which identifies a terminal ID that may be used with a particular acquiring bank; and an acquiring bank field **2016,** which identifies the acquiring bank for which the TID is valid. In addition, row **2013** may optionally include other fields **2017** that may be used in conjunction with the order processing. A null GSO value indicates that the TID/Acquirer combination is not currently in use.

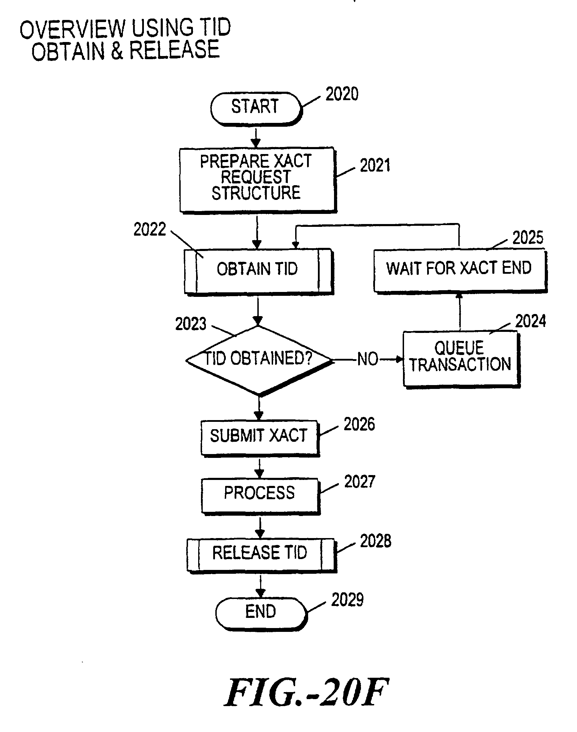

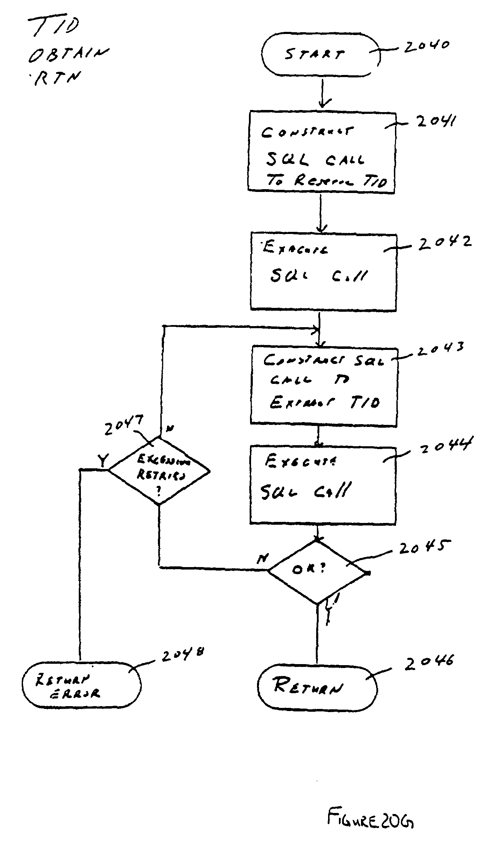

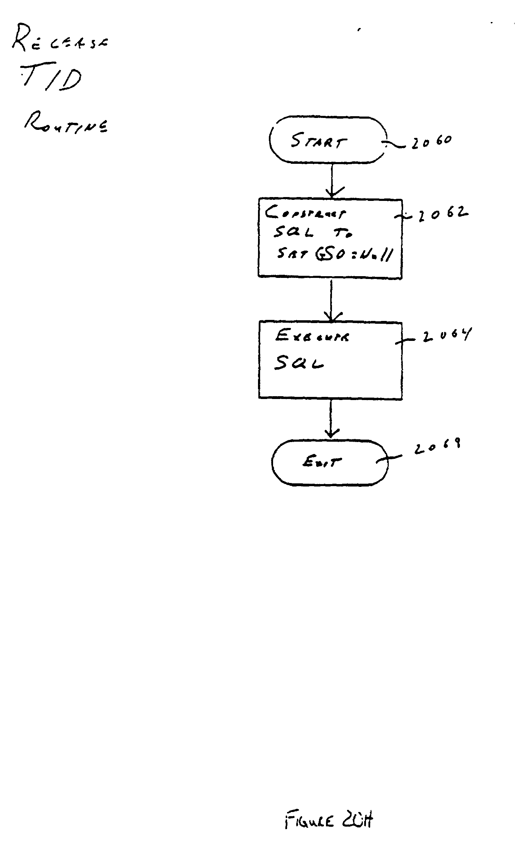

Figures **20F** through **20H** are flowcharts of the detailed logic used to perform virtual terminal ID allocation. Figure **20F** illustrates the main line operation of virtual TID allocation. In step **2020,** execution begins. In step **2021,** a skeletal transaction request structure is prepared. In step **2022**, the main line routine obtains a virtual TID for inclusion within the transaction request structure, as will be more fully disclosed with reference to Figure 20G, below. In step **2023**, the routine verifies that a TID was obtained. If the TID was not obtained, for example, if more transactions are currently being processed than there are TIDs, then execution continues to step **2024.** In step **2024,** the transaction request is put on a queue for future processing. In step **2025,** the routine waits for a transaction process to end, which would free up a TID in use. At that point, control resumes from step **2022**, and the routine again attempts to obtain a TID.

If the TID was successfully obtained in step **2023**, control proceeds to step **2026.** In step **2026**, the routine submits the transaction to the acquiring bank. In step **2027**, the transaction is processed. In step **2028**, the routine makes a database call to free up the TID that was used in the transaction. In step **2029**, transaction processing ends.

Figure **20G** depicts in detail the process of obtaining a TID from the database. Execution begins in step **2040.** In step **2041**, the routine constructs a database call to reserve a TID for processing, for example, by constructing an SQL statement to retrieve a TID row from the database. In step **2042**, the routine executes the database call that was constructed in step **2041**. In step **2043**, the routine constructs a second database call to extract the TID from the row that was reserved in step **2042**. In step **2044,** the database call constructed in step **2043** is executed to obtain the TID. In step **2045**, a return code is checked to verify whether the TID was successfully obtained. If the TID was successfully obtained, control proceeds to step **2046,** which returns to the calling program. If, however the TID was not obtained, control proceeds to step **2047.** In step **2047,** the routine checks to see whether an excessive number of retries have already been attempted. If there have been an excessive number of retries, control proceeds to step **2048**, which exits with an error indication. If there has not been an excessive number of retries, control proceeds once again to step **2043** to retry the extraction operation.

Figure **20H** depicts the operation of releasing a TID that had been used in a prior transaction. Execution begins in step **2060**. In step **2062,** the routine constructs a database call to update the row for the selected TID so that the value for the good and service order is null, thereby indicating that the selected TID is not associated with any good or service order, and is therefore free for reuse. In step **2064,** the routine executes the SQL statements constructed in step **2062,** thereby releasing the TID for use in future transactions. In step **2069**, the routine returns to the calling program.

**Default Gateway Configuration**

The vPOS is initially shipped enabled to connect to a default gateway with a single instance of a gateway defined that accesses a predefined site for testing of an installation before bringing it online in a production mode. The test installation contacts and converses with an actual gateway that simulates live transactions. After the installation checks out utilizing a set of test transactions, the test gateway downloads the pre-checked customizations to the installation so that it can switch over to the production acquirer. This download processing is enabled in extensions to SET.

**Internet Transaction Gateway**

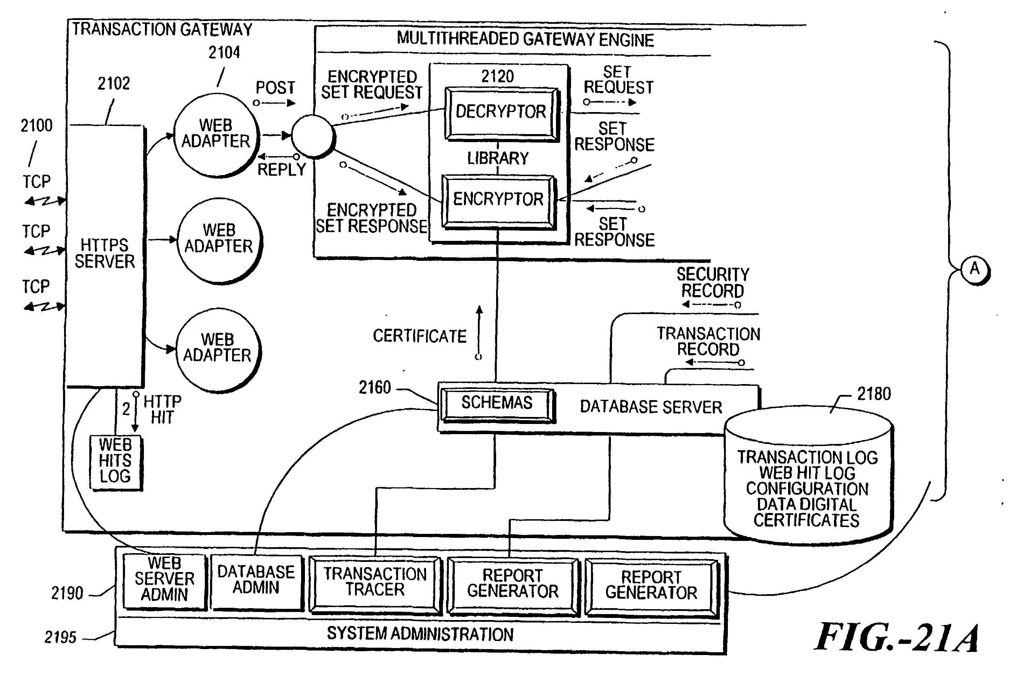

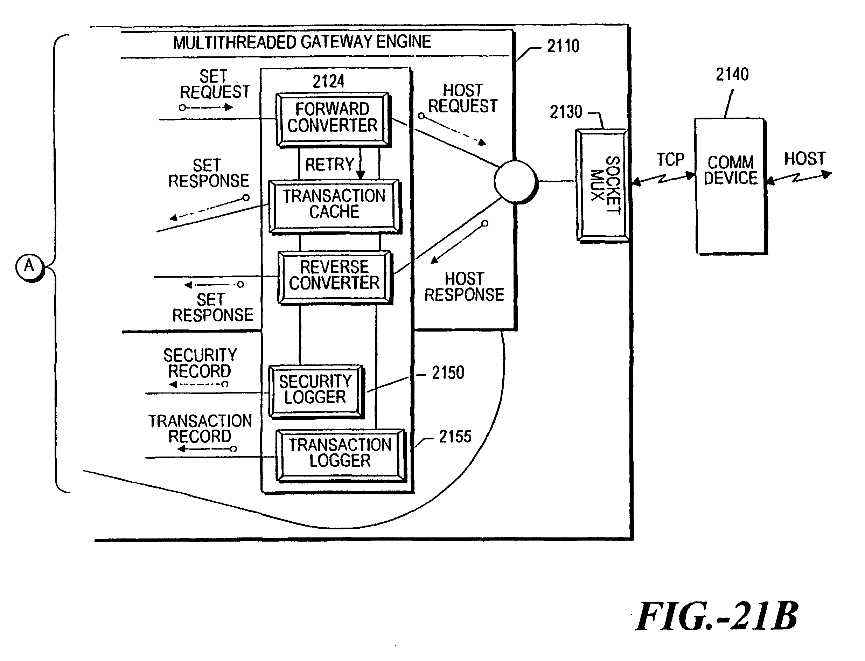

Payment methods that issue cards for conducting business utilize four major entities. These entities are the issuer, consumer, merchant and the acquirer. The issuing bank that provides the consumer with a credit card are usually not the same bank as the acquiring bank that serves the merchant. When the consumer utilizes a credit card to pay for a purchase, the merchant swipes the card through the POS terminal which makes a connection to the merchant's acquirer via the telephone network and transmits an authorization request with data read from the magnetic stripe. The acquirer's host processor, depending on the card number, will either perform local processing or switch the request to the correct issuing bank's host processor through the interchange network. In a few seconds, the authorization response is returned to the originating POS indicating either an approval or a rejection. The Internet is a viable infrastructure for electronic commerce. Ubiquitous browser software for the World Wide Web provides around-the-clock access to a large base of information content provided by Web servers. Utilizing a preferred embodiment, consumers using browsers can shop at virtual stores and malls presented as Web pages managed by the merchants' servers. Consumers can make purchases and pay for them using credit cards or other digital payment instruments in a secure manner. For such Intemet-based payments to be authorized, a "gateway" is necessary at the back end to channel transactions to legacy processors and interchange networks. Figure 21 is a detailed diagram of a multithreaded gateway engine in accordance with a preferred embodiment. Processing commences when a TCP transaction **2100** is received by a HTTPS Server **2102** and parsed to an appropriate Web Adaptor **2104** which posts an encrypted set transaction to the multithreaded gateway engine **2110**. The encrypted SET request is received at a decryptor **2120**, decrypted into a standard SET transaction and authenticated for converting by the forward converter **2124**. Inside the forward converter **2124**, decides if the request is an original request, and honest retry attempt or a replay attack. The converted transaction is passed to the socket multiplexor **2130** to communicate via an existing communication link **2140** to a host computer. A security logger **2150** is also utilized for passing security records back via a database server **2160** to a database administration application **2190**. A transaction logger **2155** also utilizes the database server **2160** to capture transaction logs in a database **2180.** Other system administration tasks **2195** include a web server administration task **2190** which logs web hits in a log **2170**.

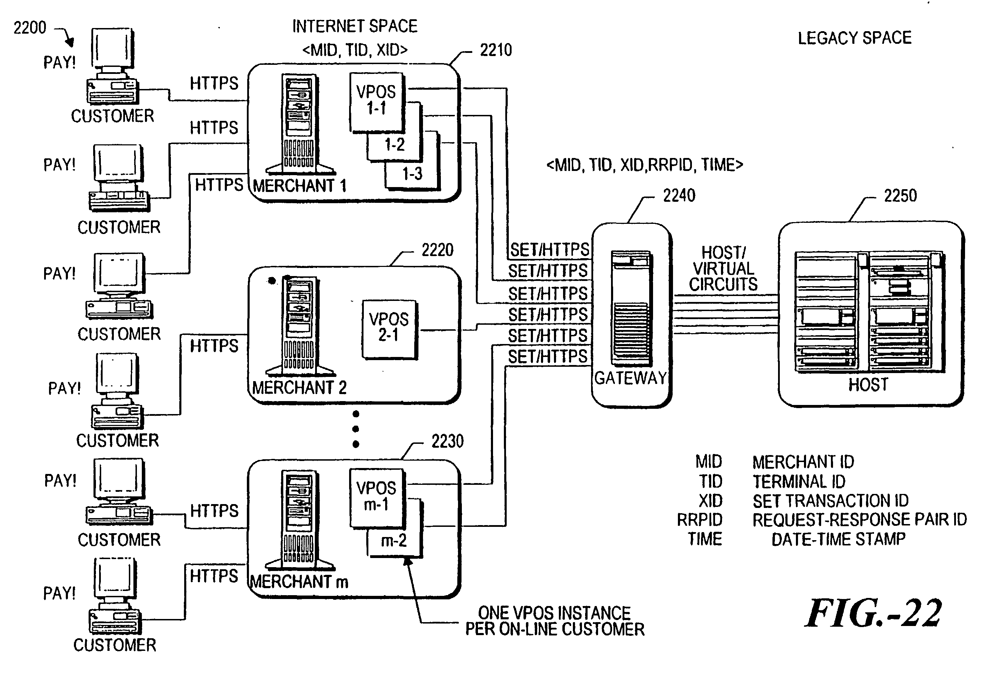

Figure **22** is a flow diagram in accordance with a preferred embodiment. Processing flows from customers **2200** that are paying for products over the Internet or other communication medium utilizing HTTPS or other protocols to one or more merchants **2210, 2220** or **2230** to a gateway **2240** which directs transactions to a particular host processor **2250** for authorization processing in accordance with the present invention.

*Internet Payment Authorization*

The Gateway is a secure computer system that mediates transactions between the merchants' servers and a payment processor. The Gateway supports secure communications between merchants using the Internet on one side, and a processor using standard secure financial networks on the other side. Between the two interfaces, the Gateway maintains a detailed log of all transactions, whether in-progress, completed, or failed. The Gateway accepts transactions from merchants and converts them into legacy compatible formats before forwarding them to the host processor. Responses from the host, after the reverse conversions, will be returned to the originating merchants. The Gateway performs many functions, including:

    Receives encrypted credit card transactions from the merchants via the Internet
    Unwraps and decrypts transactions
    Authenticates digital signatures of transactions based on certificates
    Supports all transaction types and card types
    Accepts concurrent transactions from each of the merchant servers
    Converts transaction data to legacy formats; forwards the mapped requests (in the clear) to a payment processor over existing communication links
    Converts transaction responses, correlates them with the original requests, and sends the mapped responses back to the merchants
    Provides logging, monitoring, reporting, and system administration

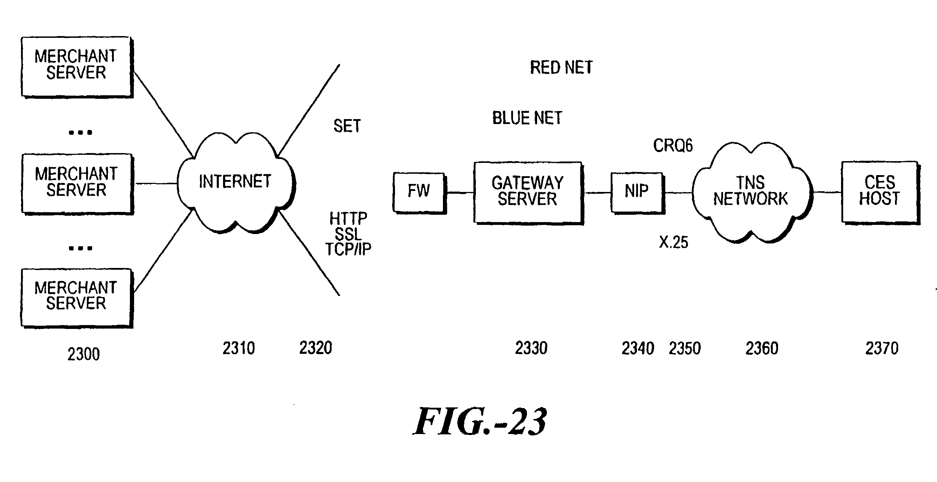

Figure **23** illustrates a Gateway's **2330** role in a network in accordance with a preferred embodiment. The Gateway **2330** strictly conforms to all SET stipulations regarding certificate management, PKCS signed data encapsulation, PKCS encrypted data encapsulation, ASN.1 representation, DER encoding, MIME encapsulation, and message sequencing. A merchant server **2300** communicates via the Internet **2310** using the SET protocol **2320** through a gateway server **2330** using a network interface processor 2340 to communicate to a legacy network **2360** in, for example the X.25 protocol **2350.** The legacy host **2370** ultimately receives and processes the transaction from the merchant server 2300 without modification to its code.

**Internet Communication Protocols**

As discussed above, the TCP/IP protocol suite is utilized at the transport level. At the application level, in compliance with SET, all requests arrive at the Gateway in MIME encapsulated HTTP format. Similarly, all responses from the Gateway to the merchant servers will be transferred in HTTP. The HTTP protocol stipulates that a request-response pair will go through the same TCP connection and that the originator, in this case a merchant server, will establish a connection to send the request and will take down the connection when it has received the response.

**Host Payment Protocols**

Message conversions performed by the Gateway will be significantly more than format transliterations: per-protocol differences in data elements and message semantics must be considered carefully. Some of the transaction types that are supported are listed below.

| Transaction Types |
| --- |
| Credit card sale with capture |
| Credit card sale without capture |
| Credit card sale with capture including AVS (MasterCard and VISA) |
| Credit card sale without capture including AVS (MasterCard and VISA) |
| Credit card return (Credit) |
| Credit card post authorization (Force Post) |
| Credit card post authorization (Force Post) with partial reversal support, enhanced authorization data, and AVS result code (VISA) |
| Credit card sale with capture – Void |
| Credit card return (Credit) – Void |
| Totals request (for balancing) |

**Host Communications Protocols**

A virtual, private network between the Gateway and the host processor is established to expedite host communication. In addition, two Network Interface Processors (NIP)s - a "near end" NIP that interfaces to the Gateway and a "far end" NIP that interfaces to the host. The NIPs will handle virtual connections between themselves. The far-end NIP will take care of specific communication details. The near-end NIP is an IP-addressable device that converts between TCP messages and packets. It is installed on a public network **2330,** which is a LAN outside the corporate firewall. The Gateway, on the secure public network **2330**, utilizes TCP/IP 2320 to communicate with the near-end NIP.

***GATEWAY FEATURES***

Because the Gateway must sustain reliable operations and enable graceful evolution, it is designed with some important attributes, including: Security, Availability, Performance, Scalability, and Manageability.

*Security*

*Channel Security*

At the application level, SET provides signed and encrypted data encapsulations of payment information portions of the transaction messages. Transport-level encryption of the entire message packet is required for additional security. The HTTPS protocol - i.e., HTTP over SSL 3.0 - is utilized between the merchants and the Gateway. The virtual connections between the near-end NIP and the host are part of a private network. The termination will occur outside the firewall. Data between the Gateway and the host is sent in the clear with no encryption. In this network configuration, a transaction between a merchant's vPOS and the host will cross the firewall four times: SET request from vPOS to Gateway, legacy request from Gateway to NIP, LEGACY response from NIP back to Gateway, and SET response from Gateway back to vPOS.

*Certificate Management*

**Payment Protocol Certificates**

The Gateway uses certificates to authenticate the two parties involved in each MOSET transaction. Through a Certificate Authority, one certificate is issued for the Gateway and one certificate for each of the merchant servers.

Secure Channel Certificates

SSL will require separate certificates for the Gateway and the merchants.

*Availability*

Site redundancy and location redundancy allows the Gateway to sustain service through virtually instantaneous recovery from internal failures or external disasters that cause physical damages to the system. Minimum-outage recovery is possible with redundant configurations of important components.

*Site Redundancy*

The Gateway supports connections to a proprietary bank network and supports mirrored disk arrays.

*Location Redundancy*

The Gateway architecture supports location redundancy where a secondary remote system is connected to the primary system via dedicated WAN links for software-driven database duplication.

*Scalability*

The Gateway software architecture, the choice of third-party software components, and the selection of hardware platforms enable the system to gracefully adapt and evolve to take on new demands in different dimensions. The Gateway resides on an HP 9000 that is housed in a standard 19" EIA rack.

**Gateway Hardware Configuration**

| Server Hardware Description | |
| --- | --- |
| K-Class SMP Server – Model K420 – Standard Configuration | |
| 120 MHz PA-RISC 7200 CPU | |
| 128 MB ECC RAM | |
| Built-in I/O includes Fast/Wide/Differential SCSI-2, EtherTwist 802.3 LAN, AUI, RS-232C Connectors, Centronics Parallel Port, and Internal Modem | |
| 650 MB CD-ROM Drive | |
| HP-UX 10.10 Operating System (with two-user license) | |
| 4 HP-PB Slots | |
| **Additions** | |
| 1 | SCSI-2 Disk Controller *to support disk mirroring over dual SCSI-2 buses* |
| 1 | 2 GB Internal SCSI-2 Disk Drive, 20MB/s transfer rate, not mirrored *for systems software and swap space* |
| 1 | 4 GB External High-Availability Disk Arrays *for databases – total of 4 x 2 MB modules required* |
| 1 | 4 GB DAT drive with data compression |
| 1 | HP-PB Slot Expansion Option *provides 4 additional HP-PB slots for peripheral controllers* |
| 2 | FDDI interface cards (each card uses 2 HP-PB slots) |
| 1 | Option for eight-user license for HP-UX |

*Cryptographic Hardware*

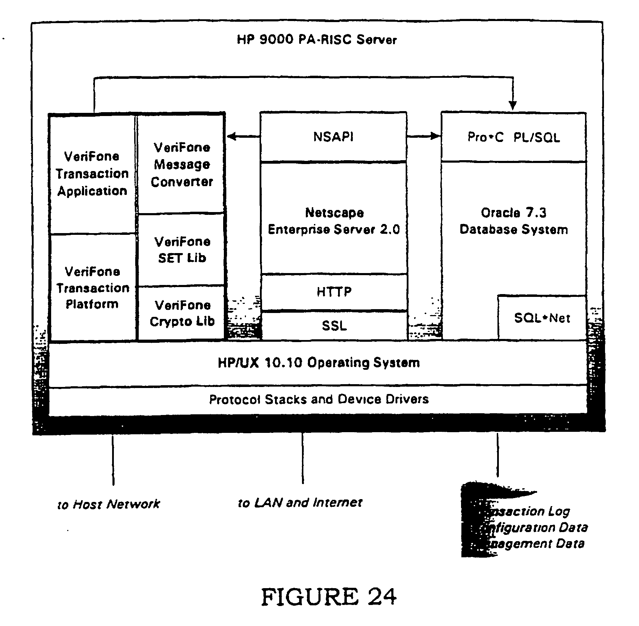

The encryption and decryption algorithms used in processing SET/SSL messages require significant computational power. A "security processor" is deployed with the Gateway to boost the performance of cryptographic algorithms. The processor is a networked peripheral device to the HP 9000 server. It provides cryptographic services suitable for SET/SSL processing, and its services are accessible via calls to software libraries running on HP-UX. Figure **24** is a block diagram of the Gateway in accordance with a preferred embodiment.

**Gateway Architecture**

*Operating System Software*

The Gateway runs under the HP-UX Version 10.10 operating system and is upgraded to support future significant system releases. HP-UX 10.10 conforms to major standards, including:

X/Open UNIX 95 (conforming with the Single UNIX Specification, SPEC 1170)
X/Open Portability Guide Issue 4 Base Profile (XPG4) OSF AES
IEEE POSIX 1003.1 and 1003.2
AT&T System V Interface Definition (SVID3 base and kernel extensions subset) Level 1

API support

UC Berkeley Software Distribution 4.3 (BSD 4.3) including such features as job control, fast file system, symbolic links, long file names, and the C shell

System V.4 File System Directory Layout

This compliance with various software standards assures that while a preferred embodiment of the invention is disclosed in association with a best mode of practicmg the invention other similar software and hardware environments can be readily substituted without undue experimentation.

***Relational Database Management System (RDBMS) Software***

The Gateway uses Oracle7 Server version 7.3 as the RDMBS and will be upgraded to use future significant system releases. The multi-threaded, multi-server architecture of Oracle7 provides applications with scalability to high-volume transaction workloads. When deployed with the HP 9000 K-Class platform, Oracle7 performs a symmetrically parallel database operation across all available processors. In addition, Oracle7 includes options for creating high-availability systems:

The Oracle7 *Parallel Server* option extends the reliability of applications by transparently harnessing the power of clustered computers in a single logical processing complex that can tolerate individual machine failures.

Oracle7 *Symmetric Replication* provides high data availability. Data can be replicated from the primary system to one or more alternative sites.

***HTTP Server***

The Gateway utilizes Netscape's Enterprise Server 2.0 as the HTTP server. The server is designed for large-scale Internet commerce deployment, Enterprise Server 2.0 achieves performance and reliability with such features as optimized caching, SMP support, enhanced memory management, and SNMP-based performance monitoring. Efficient process management features minimize system load and increase server reliability. Security features are provided using the SSL 3.0 protocol.

***Protocol Stacks***

Internet and LAN - The TCP/IP protocol stack will be provided as part of the HP-UX operating system.

Other Application-Level Protocols

Application-level protocols enable client-server interoperability. Each of the following protocols are transported using TCP or UDP.

**HTML.** HTML will be used to define screens for Gateway system administration.

**HTTP.** The HTTP layer is part of Enterprise Server 2.0. The server is administered with a Web browser.

**SQL*Net.** The Gateway's Oracle7 database can be accessed by administration clients using SQL*Net. Administration software can establish database connectivity to retrieve data for generating transaction reports.

**SNMP.** Enterprise Server 2.0 can be monitored using SNMP. The Gateway utilizes SNMP for remote system management.

*Transaction Performance Monitoring and Measurement*

The "hits" performance indicators are available from the Web server. Statistics can be generated at any time to highlight the load pattern or to pinpoint the time when the server was most active.

Gateway statistics about transaction requests (by transaction type) and transaction results (e.g., success, failed due to host, failed due to authentication, etc.) can be determined at any time for a particular time interval by generating a report.

The Gateway is upgradeable to interoperate with a real-time event monitoring system such as OpenVision's Performance Manager.

**Basic Request/Response Mappings**

The following table shows the basic request/response mapping between the SET protocol and the LEGACY

protocol.

| SET Request / Response Pair | LEGACY Request/Response Pair and Transaction Code |
|---|---|
| AuthReq, AuthRes | LEG/CTR (05) |

| SET Request / Response Pair | LEGACY Request/Response Pair and Transaction Code |
|---|---|
| AuthRevReq, AuthRevRes | LEG/CTR (99) |
| CapReq, CapRes | LEG/CTR (42 or 44) |
| CapRevReq, CapRevRes | LEG/CTR (41) |
| CredReq, CredRes | LEG/CTR (40) |
| CredRevReq, CredRevRes | LEG/CTR (90) |
| BalReq, BalRes | CTA/CTL (48) |

**Gateway Analysis for SET Message Handling**

This section tackles general design considerations of the Gateway software and is not limited to LEGACY (unless specifically mentioned). The complete functional behavior of the Gateway will be described in a separate document.

*Replay Attack Handling*

A replay attack at the Gateway is a request where either:

a) the request is *stale*; the request was received "too late" with respect to the *reqdate* in the request. This window is specified by a configurable Gateway policy.
b) the request is not stale but the exact *rrpid* (Request/Response Pair Id) has already been seen before in a request and still logged in the Gateway database. The *<xid, mid, rrpid>* tuple will be the primary key that determine whether a request had already been received. This will allow the possibility of the same *rrpid* to be generated from the same merchant but for a xid and also allow the same *rrpid* to be generated by a totally different merchant.

*New Attempt vs. Retry Attempt*

It is possible that messages sent between the vPOS and Gateway may be lost in transit. This could happen either because of hardware/software problems in the Internet or for hardware/software reasons local to the Gateway or Merchant System. The question is then "How does a Gateway recognize an honest retry attempt from an initiator?" First a little background into the nature of a SET request. All SET requests have the following fields:

*xid*       merchant's transaction id
*mid*       merchant id (contained in certificate)
*tid*        terminal id (from Merchant System)
*rrpid*     request response pair id
*reqdate*   request date (from Merchant System)

***reqdata***     request specific data

Let the following tuple represent a generic SET request:

*<xid, mid, tid, rrpid, reqdate, reqdata>*

The merchant establishes the xid during the shopping phase with the consumer. The same ***xid*** is used for both the *AuthReq* and the *CapReq* and subsequent *CreditReq* requests. Using the same ***xid*** for many requests makes it impossible for the Gateway to distinguish between repeated transactions vs. new transactions.

For example, how could a Gateway possibly determine whether two valid *CredReq* requests were to be interpreted as two individual credits or a retry of a single request.

request 1: ***<xid$_1$, mid$_m$, tid$_t$, rrpid$_1$, reqdate$_1$, reqdata$_1$>*** (perhaps a *CredReq* for $10.00)
request 2: ***<xid$_1$, mid$_m$, tid$_t$, rrpid$_2$, reqdate$_2$, reqdata$_1$>*** (perhaps a new *CredReq* for $10.00)

could also be interpreted as...

request 1: ***<xid$_1$, mid$_m$, tid$_t$, rrpid$_1$, reqdate$_1$, reqdata$_1$>*** (perhaps a *CredReq* for $10.00)
request 2: ***<xid$_1$, mid$_m$, tid$_t$, rrpid$_2$, reqdate$_2$, reqdata$_1$>*** (perhaps a retry of above)

The ***reqdates*** are different in both cases because the date is generated along with the ***rrpid*** to thwart replay attacks. In this example the Gateway will not be able to determine whether the second *CreditReq* should be performed or whether it is simply a retry to **request 1** with ***rrpid$_1$***. The Gateway must know whether or not to apply a new credit or to deliver a response that it may already have from the host (it may have came too late for the first attempt or have been lost on the way to vPOS). If no response was logged from the host for **request 1**, the Gateway could repeat its original request to the host when receiving **request 2**. In a sense, the Gateway will act as an **intelligent request/response cache.**

The Gateway splits the ***rrpid*** number space into two parts. One main part that will remain the same for the same request across all its retry attempts and a smaller portion to indicate the number of retry attempts. Then,

rrpidRetryCount $\equiv$ ***rrpid*** MOD MAXRETRIES (0 for initial request, >0 for a retry)

NOTE : The initial ***rrpids*** generated by vPOS software are equal to 0 MOD MAXRETRIES and in subsequent retries the lower order digits are incremented by one for each retry attempt. This requires extra stored in the vPOS application. The vPOS software must persistently store the ***rrpid*** used (which contains the retry count of the transaction) so that repeated attempts will follow the correct semantics.

In general the Gateway will support the following logic [assuming the second request is fresh and not a replay attack]:

If two requests,

request 1 : ***<xid$_1$, midm, tid$_t$, rrpid$_1$, reqdate$_1$, reqdata$_1$>***
request 2 : ***<xid$_1$, mid$_m$, tid$_t$, rrpid$_2$, reqdate$_2$, reqdata$_1$>***

are received at $t_1$ and $t_2$ (where $t_2 > t_1$) and,

$$(rrpid_1 - (rrpid_1 \text{ MOD MAXRETRIES})) \equiv (rrpid_2 - (rrpid_2 \text{ MOD MAXRETRIES}))$$

then the Gateway will interpret the second request as a **<u>retry</u>** request. But if,

$$(rrpid_1 - (rrpid_1 \text{ MOD 100})) \neq (rrpid_2 - (rrpid_2 \text{ MOD MAXRETRIES}))$$

then the Gateway will interpret the second request as a **<u>new</u>** request.

In addition to being able to distinguish between a retry and a new request, the proposed ***rrpid*** scheme can be used to determine how many vPOS requests got lost in the Internet. This is a useful value-added service for system management.

*Robustness and Error Handling Issues*

There are several robustness issues that need to addressed. The basic flow is that vPOS sends a request to the Gateway, the Gateway logs the SET key fields from the incoming attempt in the database. The Gateway then generates a host request which it logs completely in the database. The host handles the request and generates a response that is directed towards the Gateway which, when received is logged completely in the Gateway database. Finally the Gateway generates an SET response to vPOS, the contents of which is not logged in the database.

If the Gateway has not received the request or receives the request but is not able to log the request in the database it is easily handled by a vPOS retry attempt. This recovery action needs no further discussion. In general, if the vPOS does not receive a reply to a request it has sent to the Gateway it must retry persistently until a response is received. All retry attempts from vPOS for the same request must have the same _base portion_ of the **rrpid** but a different value in the _retry counter._

The Gateway must handle replay attacks as outlined previously in this document. If the Gateway receives a request that it has already received from vPOS there could be several possible dispositions:

a) the request had already been handled completely with the host and a host response is in the Gateway database. In this case the Gateway can simply translate the host response to a SET response and send it to vPOS.
b) the request had been sent to the host before (as determined by a database field) but a response from the host is not on file. In this case the Gateway must retry the host request.

If the vPOS times-out for any reason, it must retry later using an rrpid that indicates a retry attempt. If the Gateway receives a late-response (after vPOS has given up) it simply logs it in the database for that retry attempt (if no retry attempt for the transaction is still outstanding at the host). There is a glare situation where the original response could arrive so late that it could be confused with the response from a currently outstanding retry attempt with the host. This situation is logged and the first response not sent back to vPOS.

A response from the host indicating a successful transaction may get lost on the way back to the Gateway or not be able to be logged in persistent storage in the Gateway. In either case vPOS is in a situation where the retry request when received by the host may result in a response from the host indicating that the request is a duplicate. The vPOS software must be able to handle this. In the LEGACY case when a duplicate post is received by the host the second one automatically causes the first one to void and the second transaction fails too. In this case vPOS should retry the transaction under a new **rrpid**. If the transaction goes through end-to-end all effects of the previous transactions will not matter.

*TokenOpaque Contents*

The Gateway requires information captured at the time of an *AuthReq* that must be repeated to the host at the time of the associated *CapReq*. The mechanism of choice (built into SET) for this is enabled utilizing this data in the *TokenOpaque* token of the *Cap Token* which is sent in an *AuthRes.* This *CapToken* is stored at the Merchant system and represented to the Gateway at the time of the *CapReq*. The format of an *TokenOpaque* is an *OctetString.*

The following data structure is utilized to deliver the AVS data. \
```
StreetAddressl=800 El Camino Real\n
StreetAddress2=Suite 400\n
City=Menlo Park\n
StateProvince=CA\n
Country=USA\n
PostOfficeBox=\n
ZipPostalCode=94025 \n
\n
```

An empty line indicates the end of *AVSData*.

The detailed information that is available for the Address Verification Service depends on the Payment Window that captures the data from the consumer.

AVS Data (LEGACY-only)

For "LEGACY" version "1.0" only the *ZipPostalCode* name value pair is required. The Gateway will only use the first 5 characters of this value.

**Transaction Replay Attacks**

The processing of Internet-based payment transactions is a coordinated interaction between the Internet Transaction Gateway and the vPOS servers that is based on the following principles. A vPOS terminal, as the initiator of the payment transaction, is responsible for the round-trip logical closure of the transaction. vPOS will retry a transaction that has been initiated with the Gateway but where the response for the request was never received from the Gateway. A vPOS terminal selects -- out of a pre-assigned range -- a *Terminal-Id* that is to be used by the Gateway in a request to the host processor. This data element must be transported from the vPOS to the Gateway along with the payment-related information. The *Terminal-Ids* must be unique among the concurrent vPOS instances on a vPOS server system. However, the *Terminal-Ids* have no history. For example, a subsequent Force Post transaction need not use the same *Terminal-Id* as the original Authorization transaction. The vPOS will be responsible for making sure that only one request is outstanding for the same *<Merchant-id, Terminal-id>* data elements from a vPOS server system. The Gateway does not know that a response was successfully received by vPOS. This means that the vPOS must be responsible for initiating any retry attempts. The Gateway never initiates a retry attempt with the host processor without an explicit retry request from vPOS. The Gateway when asked to retry a request with the host, performs a relational database lookup and delivers a response that has already been received from the host processor but was previously missed by vPOS. This behavior of the Gateway is also known as the "transaction response cache." The Gateway will need to know that a vPOS request is a retry of something already sent. The prior request may or may not have been received. A solution for determining the difference between a retry attempt and a new request was described earlier in this document. vPOS must understand the "canonical" error codes that it will receive via the Gateway and be able to initiate the proper recovery action and/or generate the appropriate user-interface dialog.

**Certificate Processing**

Merchants require a mechanism for verifying legitimate cardholders is of valid, branded bankcard account numbers. A preferred embodiment utilizes technology to link a cardholder to a specific bankcard account number and reduce the incidence of fraud and thereby the overall cost of payment processing. Processing includes a mechanism that allows cardholder confirmation that a merchant has a relationship with a financial institution allowing it to accept bankcard payments. Cardholders must also be provided with a way to identify merchants they can securely conduct electronic commerce. Merchant authentication is ensured by the use of digital signatures and merchant certificates. In a preferred embodiment, a holder of a payment instrument (cardholder) surfs the web (Internet) for required items. This is typically accomplished by using a browser to view on-line catalog information on the merchant's World Wide Web page. However, order numbers can be selected from paper catalogs or a CD-ROM and entered manually into the system. This method allows a cardholder to select the items to be purchased either automatically or manually. Then, the cardholder is presented with an order form containing the list of items, their prices, and totals. The totals could include shipping, handling and taxes for example. The order form is delivered electronically from the merchant's server or created on the cardholder's computer by electronic shopping software. An alternative embodiment supports a negotiation for goods by presenting frequent shopper identification and information about a competitor's prices. Once the price of goods sold and the means of payment has been selected, the merchant submits a completed order and the means for payment. The order and payment instructions are digitally signed by cardholders who possess certificates. The merchant then requests payment authorization from the cardholder's financial institution. Then, the merchant sends confirmation of the order, and eventually ships the goods or performs the requested services from the order. The merchant also requests payment from the cardholder's financial institution.

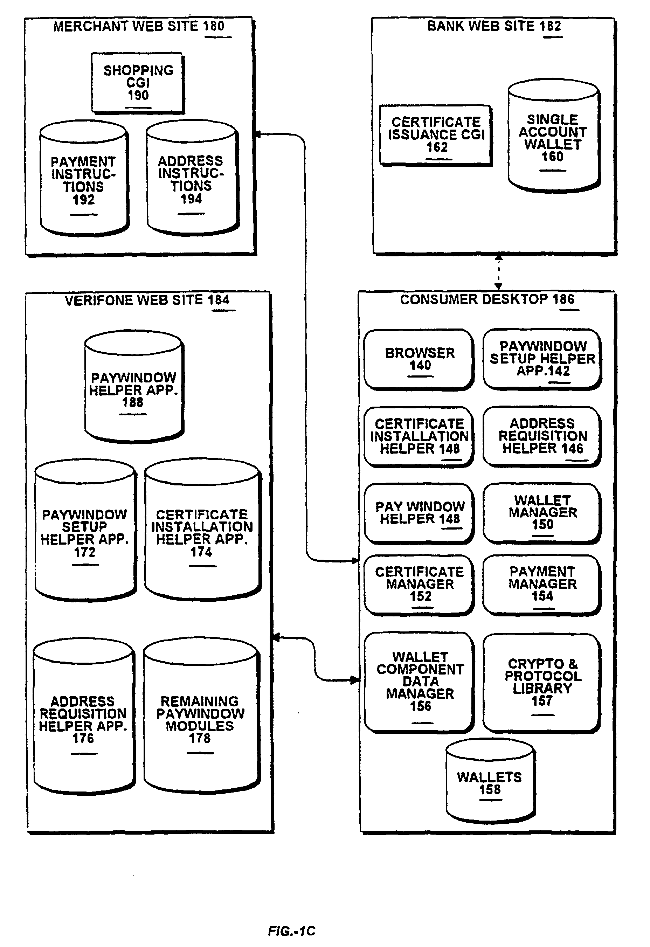

Figure 1C is a block diagram of a payment processing system in accordance with a preferred embodiment. The Certificate Issuance at the Bank Web Site **162** resides at the bank web site **182.** It is utilized for issuing SET complaint / X.500 certificates to consumers. The implementation of this system may vary from one bank to another. However, the system gathers consumer's personal information, and after processing the information, the system issues a certificate along with a payment instrument to the consumer. The Single Account Wallet **160** at the bank web site **182** represents the MIME message that is created by the Certificate Issuance system. This MIME message contains a VeriFone wallet. The VeriFone wallet contains a single payment instrument and the certificate associated with it. For security reasons, the private key is not included in the wallet. The has to specify a private key before using the instrument for payment. When the consumer is issued the certificate, this MIME message is sent to the browser. The browser launches the Certificate Installation application **174, 144** which is defined as a helper application in the browser. The Certificate Installation application **174, 144** reads the MIME message and install the wallet into the wallet database **158**.

Various helper applications **198, 172, 174, 176** are provided to make the consumer's shopping experience easy and efficient including the following helper applications. The Paywindow helper application **188** is utilized by the consumer to authorize the payment to the merchant, to administer their wallets, to review their previously completed payment transactions and to perform housekeeping activities on the wallets. This application is defined as a 'helper' application on the consumer's desktop. The browser launches this application when the merchant system sends a MIME message requesting payment. The PayWindow Setup Helper application **172** is used by the consumer to install helper applications and other modules from the web site onto the consumer desktop. When a consumer attempts to install an application for a first time, the consumer does not have a helper application on the desktop. Thus, the first time installation of an application requires a consumer to perform two steps. First the user must download the system package to their desktop and then the user must run setup to decompress and install the system. Thereafter, whenever the consumer gets a new release of system software, the browser launches this helper application which in turn installs the appropriate other system modules.

The Certificate Installation Helper Application **174** is utilized to install a wallet that is issued by a bank. When the bank's certificate issuance web system sends the MIME message containing the VeriFone wallet, the browser launches this application. This application queries a consumer to determine if the payment instrument contained in the wallet is to be copied to an existing wallet or to be kept in the new wallet. This application then installs the payment instrument and the certificate into the wallet database **158**. The Certificate Issuance CGI scripts **162** and the Single Account Wallet **160** at the Bank Web Site **182** is processed as described in the native system. The Certificate Installation Applet of the Bank Web Site **182** is utilized by the Certificate Issuance CGI scripts **162** system to deliver a consumer's certificate to the consumer's desktop.

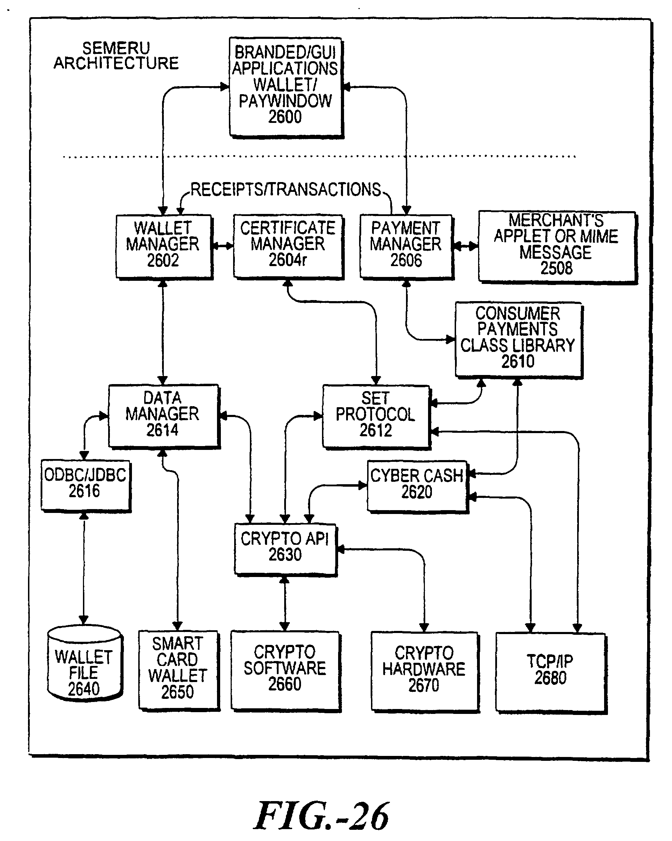

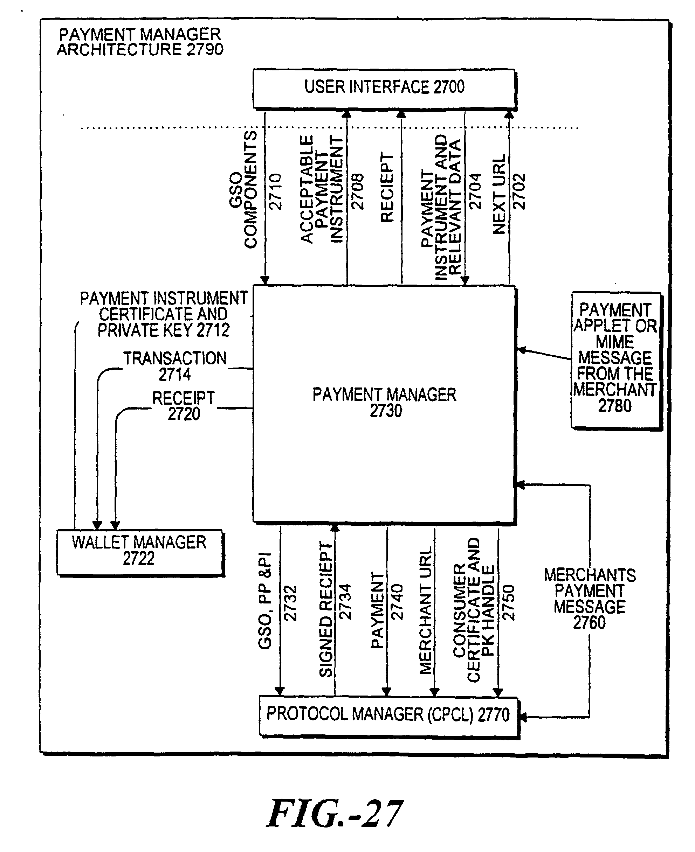

Figure **26** is an architecture block diagram in accordance with a preferred embodiment of the subject invention. Processing commences at function block **2600** where the Graphical User Interface (GUI) part of the application is initialized. The GUI application **2600** provides the consumer with support for ordering and making payments during the shopping process. There are also GUI components provided for wallet creation; importing, certificate and payment method creation and maintenance; and for transaction register review and reporting. The screen designs, and their associated logic, for the helper applications and applets are individually discussed in detail below. The Certificate Manager **2604** manages the automatic downloading of a consumer's certificate from a bank, validation of a consumer's and a merchant's certificates and automatic requisition of certificate renewal. The Payment Manager **2606** coordinates and completes the payment request that is received from the merchant system. The payment request is received via a MIME message in the native code implementation or via an applet in the Java implementation. The payment request received contains the final GSO, Ship-To name, merchant certificate, merchant URL, coupons and the payment amount. The manager **2606** then communicates with the payment related GUI component to interact with the consumer to authorize and complete the payment transaction. The manager is also responsible for determining the payment protocol based on the consumer's payment instrument and the merchant's preferred payment protocol. The manager **2606** includes a well defined Application Programming Interface (API) which enables OEMs to interface with the payment manager **2606** to make payments to specific HTTP sites. The detailed logic associated with the payment manager **2606** is presented in Figure **27**. The payment manager **2606** enforces standard operations in the payment process. For example the receipt and the transaction record can automatically be transferred to the Wallet file once the payment is completed. The payment manager architecture in accordance with a preferred embodiment is presented in Figure **27.** A user interfaces with the payment manager **2730** via a user interface **2700** that responds to and sends a variety of transactions **2710, 2708, 2706, 2704** and **2702.** The transactions include obtaining the next record, payment record, receipt, acceptance of the payment instrument and GSO components. In turn, the payment manager **2730** sends transactions **2714** and receipts **2720** to the wallet manager **2722** and receives payment instruments, certificates and private keys from the wallet manager **2722**.

The payment manager **2730** also sends and receives transactions to the protocol manager **2770** including a merchant's payment message **2760**, a consumer certificate and PK handle **2750,** a merchant URL **2742,** a payment **2740,** a signed receipt **2734** and a GSO, Selected Payment Protocol and Selected Payment Instrument **2732**. The payment manager **2730** also accepts input from the payment applet or MIME message from the merchant as shown at function block **2780**. One aspect of the payment processing is a Consumer Payments Class Library (CPCL) **2770** which encapsulates the payment protocols into a single API. By encapsulating the payment protocols, applications are insulated from protocol variations. A SET Protocol provides an implementation of the client-side component of the Secure Electronic Transaction (SET) Protocol. A complete implementation of the client-side component of the Cyber-Cash micro-payment protocol is also provided.

The Wallet Manager **2722** provides a standard interface to the wallet. It defines the wallet database structures and the payment instrument data structures, controls the access to the wallet and provides concurrency checking if more than one application attempts to open the same wallet. The interface to the wallet manager **2722** is published to allow OEMs to interface with the wallet manager and access the wallet database.

The wallet manager consists of the following sub-components:

**Wallet Access.** This component provides an interface to read and write wallet information. **Transaction Manager.** This component provides an interface to read and write transaction corresponding to a wallet into the wallet database.

**Payment Instrument Manager.** This component manager provides a common interface to the specific payment instrument access components.

**Credit Card Access, Debit Card Access, Check Access.** These components deal with a specific payment instrument.

A Data Manager provides storage and retrieval of generic data items and database records. It is assumed that data fields, index fields or entire data records can be marked as encrypted and the encryption process is largely automated. The data manager has no specific knowledge of database records appropriate to different payment methods. This layer is separated out so as to reduce changes required when new payment methods are introduced. However RSA key pairs and certificates might be considered as "simple" data types. This component also provides an abstraction which supports wallet files on computer disk or contained in smart cards.

The Open Data Base Connectivity (ODBC)/Java Data Base Connectivity (JDBC) component provides Data Base Connectivity where formal database components are required. An embodiment of the Smart Card Wallet allows wallet data to be stored and/or secured by a cryptographic token.

A preferred embodiment includes a single file or directory of files comprising a "wallet" which contains personal information and information about multiple payment methods with the preferred implementation. These payment methods ( Visa cards, debit cards, smart cards, micro-payments etc. ) also contain information such as account numbers, certificates, key pairs, expiration dates etc. The wallet is envisaged to also contain all the receipts and transaction records pertaining to every payment made using the wallet. A Cryptographic API component provides a standard interface for RSA and related cryptographic software or hardware. This support includes encryption, signature, and key generation. Choice of key exchange algorithm, symmetric encryption algorithm, and signature algorithm should all be configurable. A base class stipulates generic behavior, derived classes handle various semantic options (e.g. software based cryptography versus hardware based cryptography.)

The Cryptographic Software portion provides RSA and DES support. This may be provided utilizing the SUN, RSA or Microsoft system components depending on the implementation selected for a particular customer. Cryptographic Hardware creates a lower level API which can underpin the Cryptography API and be utilized to replace Cryptography Software with an off the shelf cryptography engine. The message sequence charts describe the flow of messages/data between the consumer, the browser and/or the various major components of the Semeru system. The major components of the system are the Merchant system which includes the vPOS, the PayWindow, and the Payment Gateway. The merchant system allows a consumer to shop, accept the payment transactions sent by the PayWindow application, and send payment transactions to the acquiring bank. The Consumer Payments Class Library (CPCL) module is a layer within the application which sends the payment transactions, securely, from the consumer to the merchant.

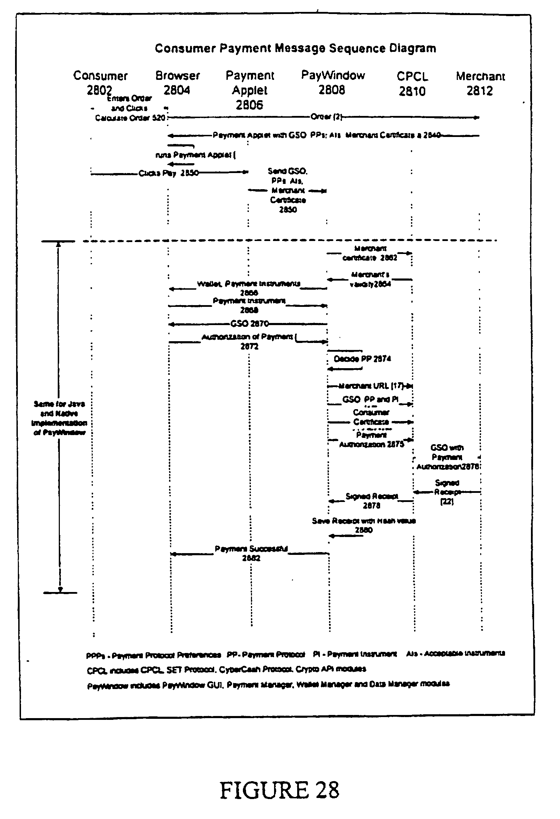

Figure **28** is a Consumer Payment Message Sequence Diagram in accordance with a preferred embodiment of the invention. The diagram presents the flow of messages between the consumer, the browser, the merchant system, the PayWindow application, and CPCL. This message flow describes the payment process from the time an order is completed and the consumer elects to pay, to the time the payment is approved and the receipt is returned to the consumer. The difference between the Native implementation and Java implementation of the PayWindow application is in the delivery of the order information to the PayWindow. Once the order information is received by the PayWindow, the flow of messages/data is the same for both implementations. In the case of the Native implementation, the order information is delivered via a MIME message. This MIME message is sent to the PayWindow by the browser via a document file. In the Java implementation, the order information is delivered to the PayWindow by an applet. The merchant system sends an applet with the order information to the browser which in turn delivers the order to the PayWindow. Once the order is received, the PayWindow interacts with the consumer and the Protocol modules for the completion of the payment process.

### Enters Order and Clicks Calculate Order **2820**

This message represent the consumer order entry and the clicking of the 'Calculate Order' button. The consumer's shopping experience is all condensed into this one message flow for the purpose of highlighting the payment process. The actual implementation of the shopping process varies, however, the purpose does not, which is the creation of the order.

### Order **2830**

This message represents the order information which is sent by the browser to the merchant via an HTML form.

Payment Applet with GSO, PPPs, AIs, merchant certificate and URL **2840**

On receipt of the order, the merchant system calculates the payment amount. This message represents the HTML page which is sent by the merchant system detailing the payment amount along with the Java payment applet which contains the GSO, PPPs, AIs, merchant certificate and URL.

Run Payment Applet **2845**

The Java enabled browser runs the Payment applet. The applet displays a button called "Pay" for the consumer to click. This is embedded in the HTML page delivered by the merchant.

Clicks Pay **2850**

This message represents the clicking of the Pay button on the browser by the consumer after confirming the payment amount.

GSO, PPPs, AIs, merchant certificate and URL **2860**

This message represents the GSO, PPPs, AIs, merchant certificate and the merchant URL carried by the Java applet. The Java applet now delivers these to the PayWindow application.

Merchant certificate **2862**

This message represents the merchant's certificate which is sent to the CPCL module for checking the validity of the merchant.

Merchant's validity **2864**

The CPCL modules examines the merchant's certificate and send this message to the PayWindow indicating whether or not the merchant is a valid merchant.

Wallet, Payment Instruments **2866**

This message represents the wallets and payment instruments that is displayed to the consumer. Not all payment instruments from a wallet is shown to the consumer. Only the ones accepted by the merchant is shown.

Payment Instrument **2868**

This message represents the payment instrument selected by the consumer. This message is created in the current design when the user double clicks on the payment image in the "Select Payment Method" Window.

GSO **2870**

This indicates that the GSO is displayed to the consumer in the "Make Payment Authorization" screen.

Authorization of Payment **2872**

This message represents the authorization of the payment by the consumer. The consumer authorizes the payment by clicking the 'Accept' button on the "Payment Authorization" screen.

Decide Payment Protocol **2874**

Once the consumer authorizes the payment, the payment protocol is decided by PayWindow based on the merchant's Payment Protocol Preferences and the consumer selected payment instrument.

Payment Authorization **2875**

These messages represent the merchant's URL, the GSO, payment protocol (PP) to use, account number, certificate and the private key handle (PK) associated with the payment instrument which is sent to the protocol module.

GSO with Payment Authorization **2876**

This message represents the payment instructions which is sent by the protocol module to the Merchant system. The GSO, PI, consumer certificate and PK is packaged based on the payment protocol.

Signed Receipt **2878**

This message represents the digitally signed transaction receipt received by the protocol module from the merchant.

Save Receipt with hash value **2880**

The digitally signed transaction receipt is saved by the PayWindow for future reference.

Payment Successful **2882**

This indicates that the transaction receipt and the 'payment successful' have been displayed to the consumer.

**Certificate Processing**

A payment instrument must be certified by a "certificate issuing authority" before it can be used on a computer network. In the case of credit card payments, the issuer may be one of the card issuing banks, but it might also be a merchant (eg SEARS), a transaction aquiring bank or an association such as VISA or Mastercard. Payment instrument information is stored in the consumer's wallet. The certificate which authorizes the payment instrument will be stored along with that data in a secured database. The process of acquiring a certificate is described below. A certificate can be delivered to a consumer in a preconfigured wallet. The consumer receives a wallet which contains the certificate together with the necessary details associated with a payment instrument including a payment instrument bitmap which is authorized by a certificate issuing authority or the agencies represented by the issuing authority.

**Obtaining a certificate**

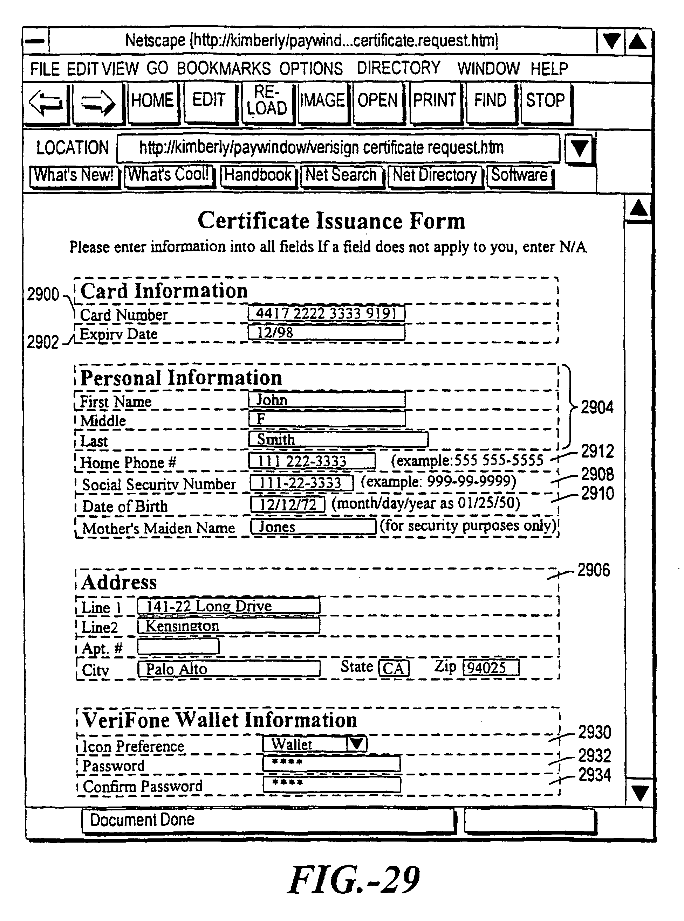

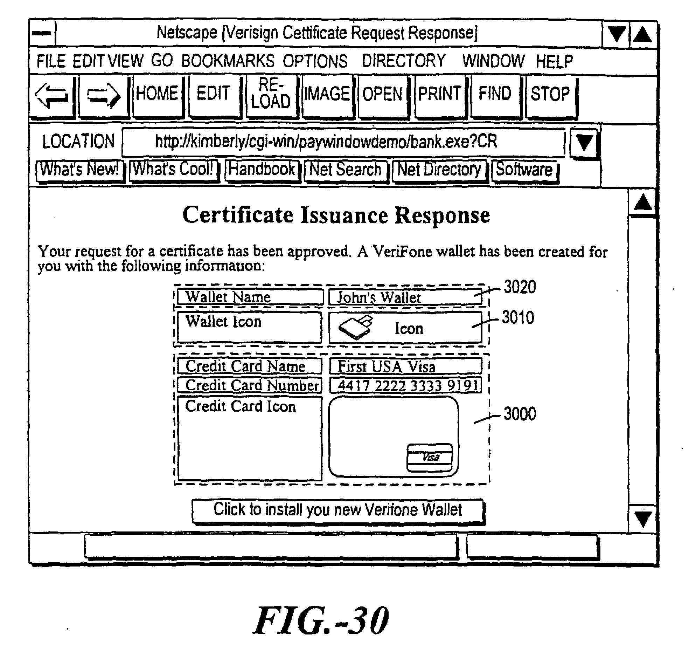

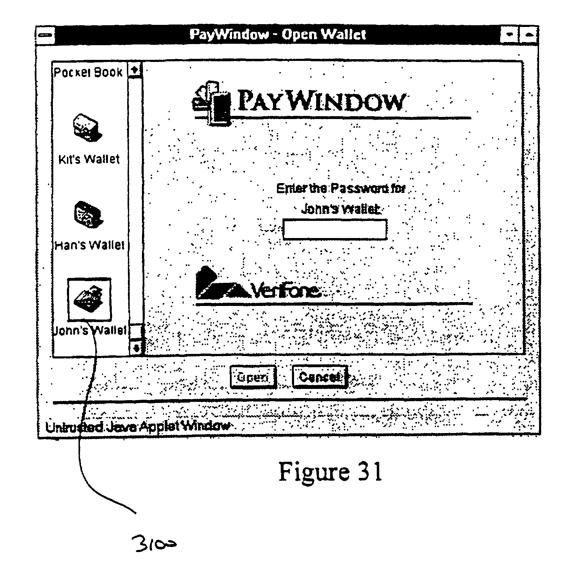

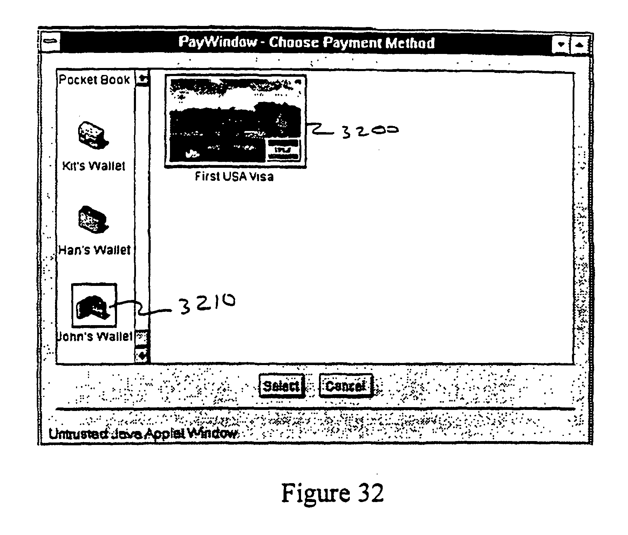

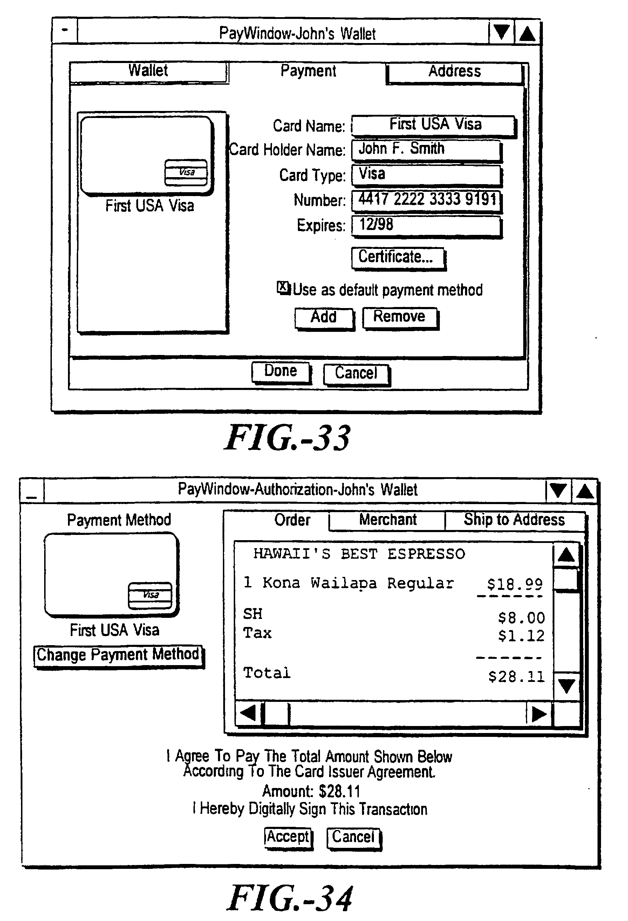

A consumer will deliver or cause to be delivered information to a certificate issuing authority. Figure **29** is an illustration of a certificate issuance form in accordance with a preferred embodiment. A user may fill out the form on-line, on paper and mail it in, or get his bank or credit card company to deliver it. The consumer delivered data will usually contain a public key belonging to a security key pair generated by consumer software. This information will normally be mailed to the consumer's address and actuated by a telephone call from the consumer. The certificate authority takes this information and uses it to validate that he is indeed entitled to use the payment method. This processing normally takes a few days to accomplish. Information will normally be exchanged with the organization issuing the payment method in the physical space if there is one, and with credit agencies. The certificate information is loaded into the consumer's software to enable payment processing to proceed online. In some cases the consumer will be able to select details about a payment instument holder (wallet) he desires to own. This may be the icon representing a holder, the access password or other information. After creating the certificate, the issuing authority can use information received in the certificate application to create a custom payment instrument holder ready to use. This payment instrument holder will contain the following information. Payment instrument information including card number **2900** and expiration date **2902.** Personal information including name **2904,** address **2906,** social security number **2908** and date of birth **2910.** The associated certificate ( eg X509 standard ), an associated public key or in some cases public/private key pair (eg RSA), and an approved bitmap representing the payment instrument are provided to the requesting consumer. Figure **30** illustrates a certificate issuance response in accordance with a preferred embodiment. An approved bitmap for a VISA card is shown at **3000**. Also a default payment holder **3010** and a default payment holder name are provided with the certificate issuance. After the consumer aquires the payment instrument holder **3010**, the payment instrument holder is immediately visible to him in his collection of payment instrument holders. Figure **31** illustrates a collection of payment instrument holders in accordance with a preferred embodiment. The predefined payment instrument holder **3100** is the same JOHN's WALLET that was predefined based on defaults by the certificate issuance form. Figure **32** illustrates the default payment instrument bitmap 3200 associated with the predefined payment instrument holder **3210** resulting from the consumer filling in and obtaining approval for a VISA card. Figure **33** illustrates a selected payment instrument with a fill in the blanks for the cardholder in accordance with a preferred embodiment. Next time the payment instrument holder is opened in a payment context the certificate issuing authorty's approved instrument bitmap can be used to select the payment instrument and utilize it to make purchases. Figure **34** illustrates a coffee purchase utilizing the newly defined VISA card in accordance with a preferred embodiment of the invention.

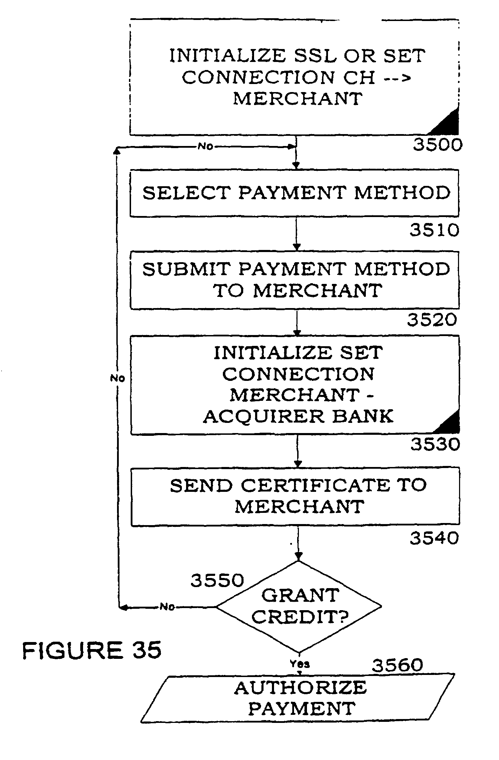

Figure **35** is a flowchart of conditional authorization of payment in accordance with a preferred embodiment. Processing commences at **3500** where the program initializes the connection betweeen the cardholder and the merchant for the purposes of shopping. After the cardholder completes shopping, a new SSL connection is established which provides authenticating information to the merchant. At this point the merchant is able to execute payment functionality (based on SSL or SET) conditionally, based upon the quality and character of the digital signature and the certificate used to validate said signature. Then, at function block **3510**, the cardholder selects the payment instrument for the particular transaction. Payment instruments could include VISA, MASTERCARD, AMERICAN EXPRESS, CHECK, SMARTCARD or DEBIT CARDS. The payment method is then submitted to the merchant at function block **3520.** The merchant then initializes the SET connection to the acquiring bank at function block **3530** if the connection is not already established. Then, at function block **3540**, the certificate is submitted to the merchant from the acquiring bank. The certificate includes a public key portion and a private key used as an irrebutable digital signature to authenticate the parties to the transaction. The certificate also includes information on the level of credit risk which allows a merchant to conditionally decide on the authorization or rejection of credit under a particular payment instrument based on their risk level and the merchant's personal comfort level with the ability of the cardholder to pay. This processing has not previously been possible because the information returned from the authorizing bank did not include a level of credit risk a cardholder posed, it only contained credit rejected or approved. A detailed description of the gateway internals is presented below in accordance with a preferred embodiment.

**Gw ClearSetRequestHandler**

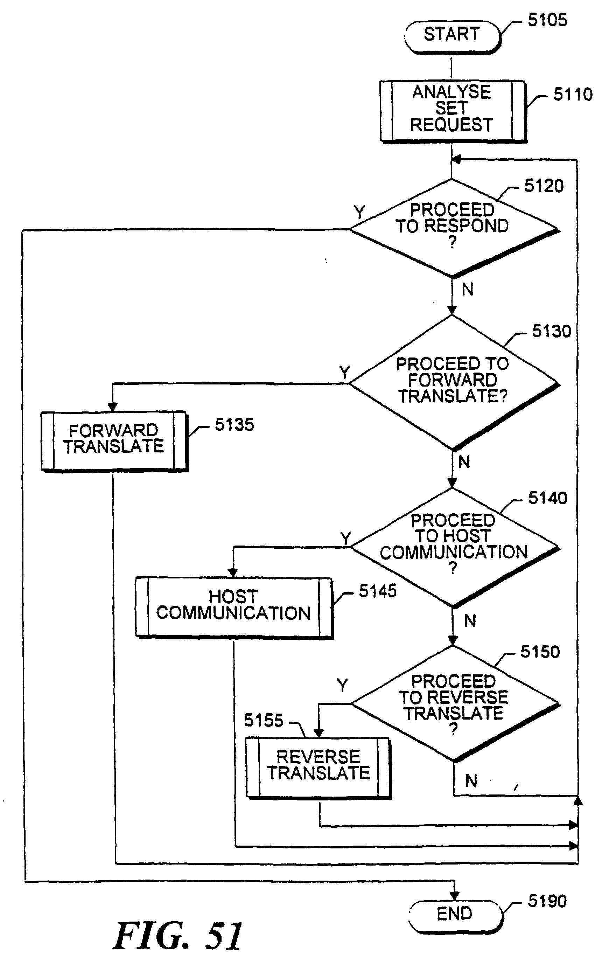

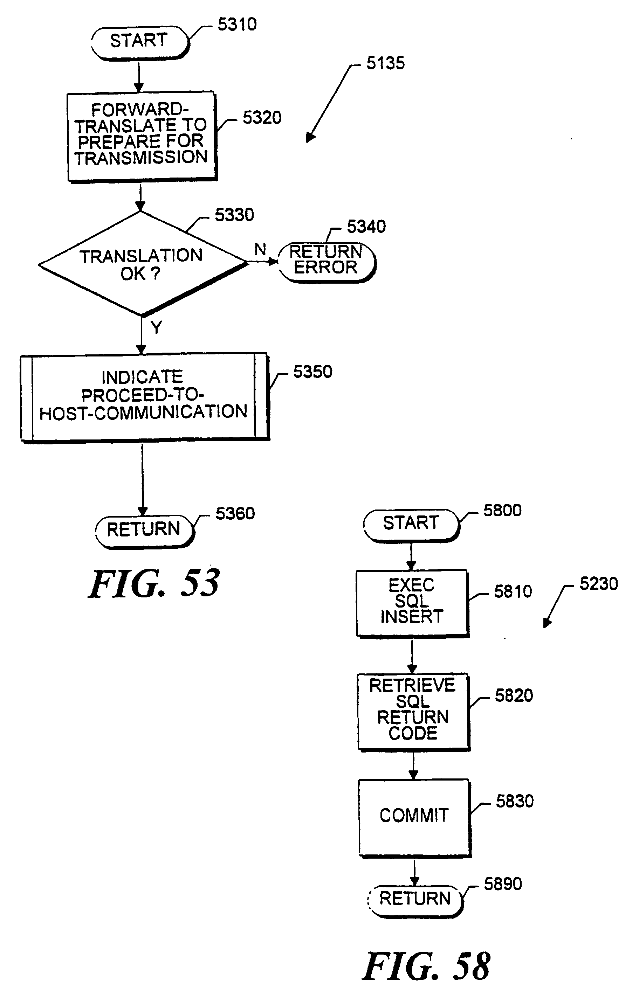

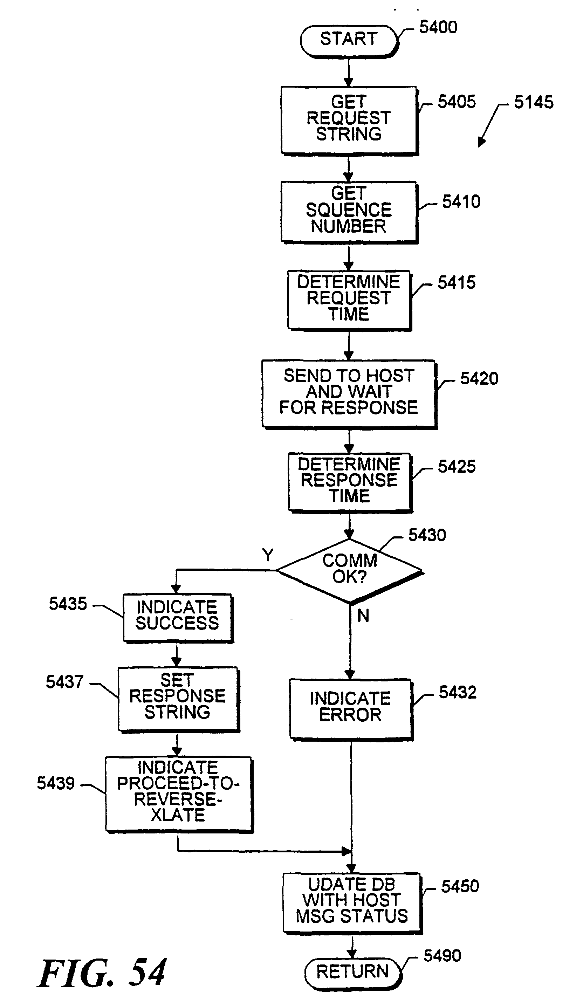

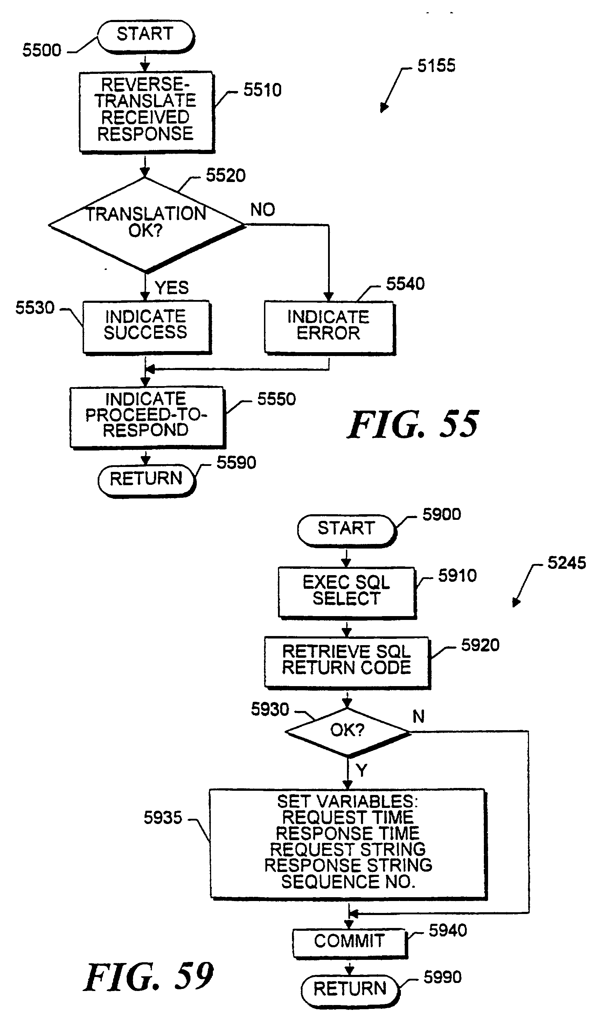

Figure **51** depicts a flow diagram for the GatewayClearSetRequestHandler routine. Execution begins in Step **5105**. In Step **5110** an SET analysis routine is called to analyze the SET request, as will be more fully disclosed below. Step **5110** sets a status flag indicating the next stage to be performed by the Gateway. In Step **5120** the Gateway checks to see whether the status is set to indicate that a response should be provided to the user. If so, execution proceeds to Step 5190, which ends the request handling routine and returns control to a calling routine, which then provides a response to the user. Otherwise execution proceeds to Step **5130**. In Step **5130,** the Gateway checks to see if the status is set to indicate that forward translation is required. Forward translation is necessary to translate an outgoing message into a format that can be understood by the host computer. If forward translation is indicated, execution proceeds to Step **5135**. In Step **5135,** the outgoing message is forwarded translated, as more fully disclosed below with respect to Figure **53**. If no forward translation is indicated, for example, if an already-translated transaction is being retried, execution proceeds to Step **5140**. In Step **5140,** the Gateway checks to see if the next step is communication to the host. If so, the Gateway proceeds to Step **5145,** and initiates host communication as will be more fully discussed below with respect to Figure **54.** If not, execution proceeds to Step **5150**. In Step **5150,** the Gateway checks to see whether reverse translation is indicated. Reverse translation translates a response from a host into a format useable by the calling routine. If reverse translation is indicated, execution proceeds to Step **5155**, and the reverse translation is performed, as will be more fully discussed below with respect to Figure 55. In any case, after either forward translation in Step **5135,** host communication in Step **5145,** or reverse translation in Step **5155,** control returns to Step **5120** for further processing. As will be more fully disclosed below, the forward translation, host communication, and reverse translation routines manipulate status indicators to prevent the occurrence of an infinite loop.

**AnalyzeSetRequest**

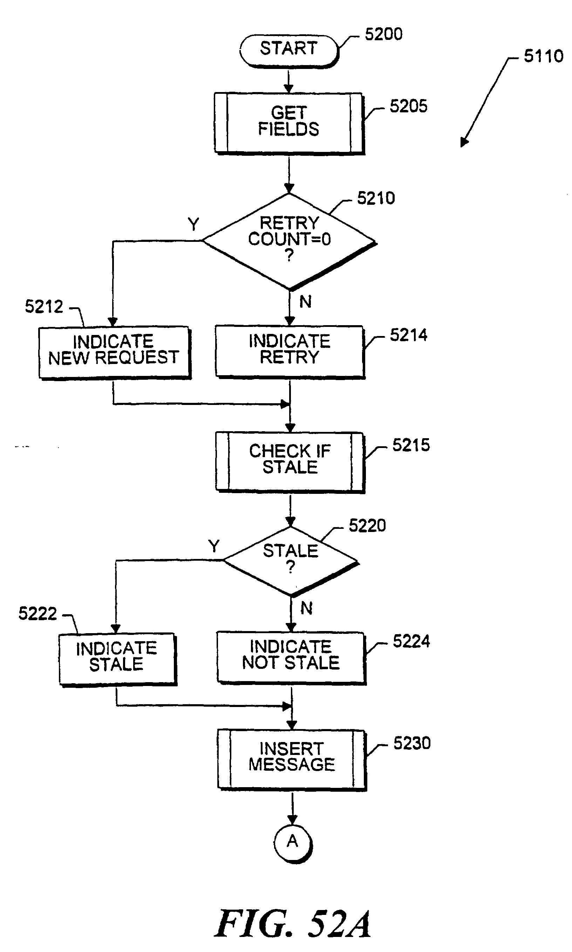

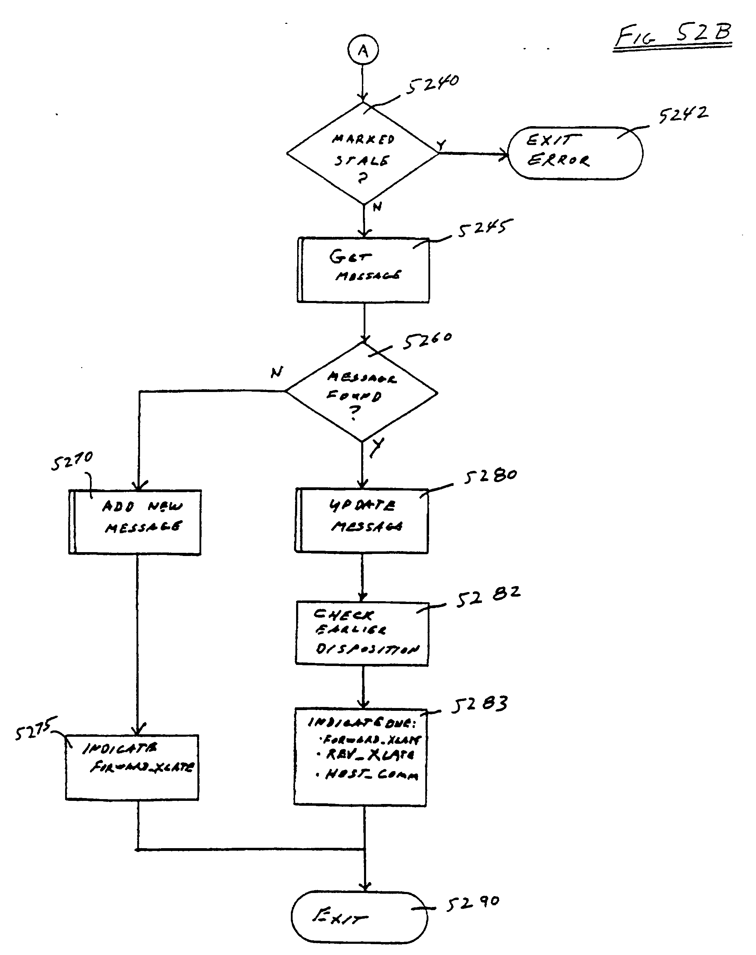

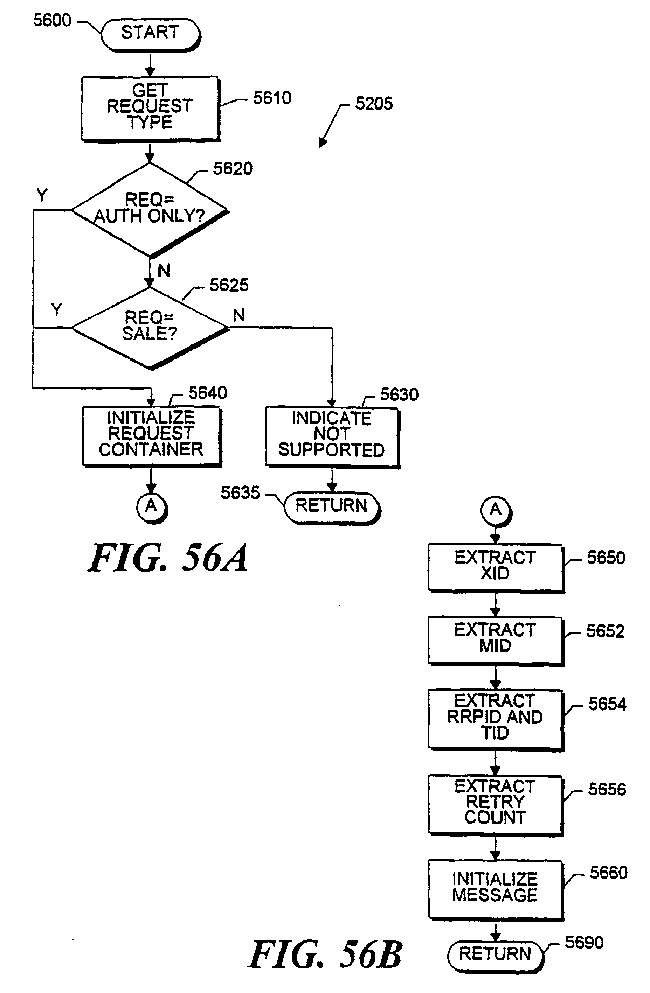

Figures **52A** and **52B** describe the AnalyzeSetRequest routine. This routine is by Step **5110** as illustrated in Figure **51**. Execution begins in Step **5200**. In Step **5205** the various fields in the SET record are obtained, as will be more fully disclosed below with respect to Figures 56A and 56B. In Step **5210** the Gateway checks the retry count. A retry count is zero indicates that the request being analyzed is a new request, and control proceeds to Step **5212**, indicating a new request. If the retry account is non-zero, this means that the request is a retry of a prior request, and control proceeds to Step **5214** where a retry is indicated.

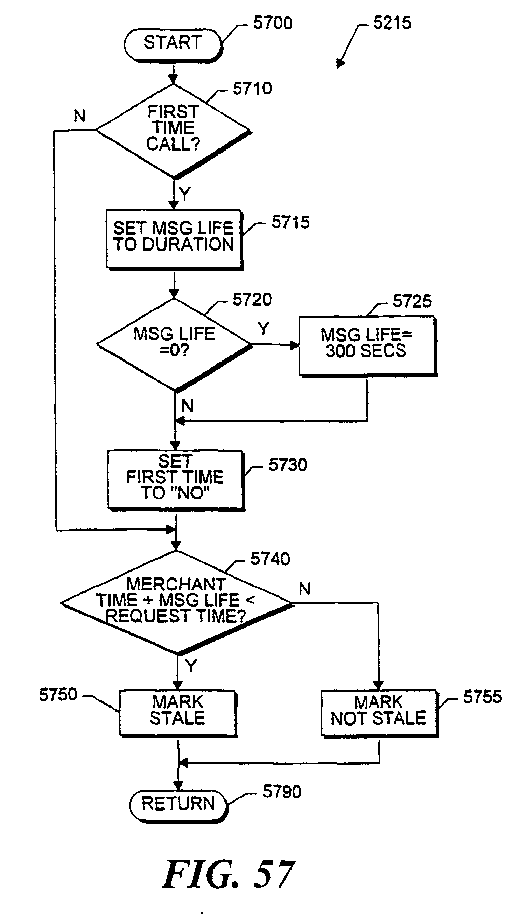

Following either step **5212** or **5214**, execution proceeds to Step **5215**. In Step **5215** the Gateway checks to see whether the request represents a "stale request," as will be more fully described below with respect to Figure **57**. In Step **5220,** the Gateway tests the result of the stale check from Step **5215.** If the request is stale it is marked as stale in Step **5222**. Otherwise the record is marked as not stale in Step **5224**. Following either Step **5222** or Step **5224**, control proceeds to Step **5230**. In Step **5230** a message representing the SET request is inserted into the database for tracking purposes, and control proceeds to Step **5240**.

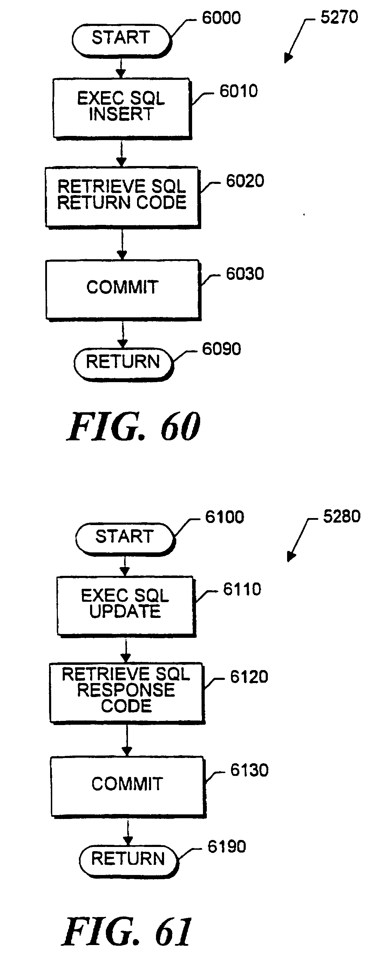

In Step **5240** the Gateway checks to see if the request had been marked stale in Step **5222.** If so, it proceeds to Step **5242,** exiting with an error condition. In Step **5245**, the Gateway attempts to retrieve from the database a message corresponding to the current SET request, as will be fully disclosed below with respect to Figure **59.** Step **5260** checks to see whether the message was successfully retrieved from the database. If the message was not found in the database, this indicates that the SET request represents a new message, and control proceeds to Step **5270**. In Step **5270** a new message representing the SET request is added to the database, as is more fully disclosed below with respect to Figure **60**. Because this is a new request, it must be processed from the beginning, including forward translation. Therefore, after the new message is added in Step **5270**, control proceeds to Step **5275.** In step **5275**, where a status flag is set indicating that the next step to be performed for this message is for translation. If the message was found in Step **5260,** this indicates that the request represents a request that is already in progress. Therefore, control proceeds to Step **5280** to update the database with current information representing the request status. The update process is described in further detail with respect to Figure-**61**, below. Following Step **5280,** control proceeds to Step **5282**. In Step **5282** the Gateway checks to see the disposition in which the SET request was left as a result of partial processing. This is done, for example, by interrogating fields in the database record that indicate the steps that have already been performed for this request. In Step **5283,** based upon this status information, the Gateway indicates the next stage of processing to be performed: either forward translation, reverse translation, or communication with the host. After this status has been set, whether for a new request in Step **5275,** or for an already-existing request in Step **5283,** control proceeds to Step **5290,** which exits the AnalyzeSetRequest routine, returning control to Step **5110** in Figure **51.**

### TranslateForward

Figure **53** depicts the execution of the TranslateForward routine, which is called by Step 5135 in Figure **51.** Execution begins at Step **5310**. In Step **5320,** the Gateway forward-translates the request to prepare it for transmission to the host. Forward translation consists of packaging the fields in the request into a format that is understandable by the legacy system at the financial institution. The exact format of the translated request will vary from institution to institution. However, in general, the format will consist of a fixed length record with predetermined fields, using a standard character set such as ASCII or EBCDIC. In Step 5330, the Gateway checks to see whether the translation was successfully performed. If not control proceeds to Step **5340,** which returns an error condition. If the translation was successful, control proceeds to Step **5350.** In Step **5350,** the Gateway sets a status flag to indicate that the next stage to be performed for this SET request is to proceed to host communication. This will be used in the next iteration of the Gw_ClearSetRequestHandler routine as depicted in Figure 51. After the status is set in Step **5350**, the translate forward routine returns control in Step **5360**.

The TranslateForward routine as depicted in Figure 51 may be implemented using the following C++ code:

```
gwAction CGW_Engine::TranslateForward(CPCLCCRequest *pVehicle)
{
        gwRC        rc;
        gwDBRC        dbrc;


        rc = HM_TranslateForward(m_hostSpecificMessage, pVehicle);
```

```
if (rc == GW_SUCCESS) {
        return (GW_PROCEED_WITH_HOST_COMMS);
}


m_hostRequestDisposition = GW_HREQDI_FWD_XLAT_FAILED;
BuildSetErrorResponse(pVehicle, ISO_RESP_FORMAT_ERR);


dbrc = Gwdb_UpdateHostMsgRequestDisp();
if (dbrc != GWDB_SUCCESS) {
        GW_LogError( LOG_ERR, "Gwdb_UpdateHostMsgRequestDisp() :
%d", dbrc);
        }


        return (GW_PROCEED_TO_RESPOND);
}
```

### DoHostCommunication

Figure **54** depicts the step of host communication, as shown in Step **5145** in Figure **51**. Execution begins in Step **5400.** In Step **5405** the Gateway obtains from the request object the string representing the request text. In Step **5410** it obtains the sequence number for the request. In Step **5415** the Gateway determines the current time, in order to record the time at which the request is made. In Step **5420** the Gateway sends the request to the host and waits for a response from the host. When a response is received, execution continues in Step **5425**. In Step **5425**, the Gateway again checks the current time, thereby determining the time at which a response was received. In Step **5430**, the Gateway checks to see whether the communication was successfully performed. If a communication was not successful, the Gateway records that an error occurred in Step **5432.** If the communication was successful, the Gateway, in Step **5435**, indicates that the request was successfully sent and responded to. In Step **5437**, the Gateway sets the response string based upon the response received in Step **5420**. In Step **5439** the Gateway sets a status to indicate that reverse translation of the received response is required. Regardless of whether the communication was successful or unsuccessful, execution continues to Step **5450**. In Step **5450,** the database is updated with status information from the host communication. In Step 5490, control is returned to the calling routine.

### TranslateReverse

Figure **55** depicts the operation of the TranslateReverse routine, as executed in Step **5155** in Figure **51**. Execution begins at Step **5500**. In Step **5510** the Gateway reverse-translates the response received from the legacy system host. Reverse translation consists of extracting data from the data records received from the legacy system, and placing them in objects so that they are useable by the Gateway. In Step **5520**, the Gateway checks to verify that translation was successful. If translation was successful control proceeds to Step **5530**, where a status flag is set indicating a successful translation. If translation was not successful, control proceeds to Step **5540,** in which the Status Flag is set to indicate an unsuccessful translation. Regardless of whether translation was successful or unsuccessful, execution proceeds to Step **5550.** In Step **5550**, a status flag is set to indicate that the next stage for the request is to provide a response from the Gateway. This step is always executed, because, regardless of whether the translation or any other aspect of the transaction was successful, a response indicating either success or failure must be returned by the Gateway. Control then proceeds to Step **5590,** in which the TranslateReverse routine returns control to the calling routine in Figure **51**. It will be seen that the TranslateForward routine in Figure 53, the DoHostCommunication routine depicted in Figure **54,** and the TranslateReverse routine depicted in Figure **55**, each alter the status of the request. As a result as the loop depicted in Figure **51** executes a particular request will proceed through all three stages and finally to exit in Step **5190**.

**GetSetKeyFields**

Figures 56A and 56B describe the GetSetKeyFields routine. This routine is called by Step **5205** as illustrated in Figure 52A. Execution begins in Step **5600.** In Step **5610,** the Gateway interrogates the request object to determine the request type. In Step **5620,** the Gateway determines whether the request type is for authorization only. If the request type is not for authorization only, execution proceeds to Step **5625**. In Step **5625**, the Gateway checks to see whether the request type is for a sale. If the request type is neither for authorization only nor for a sale, execution proceeds to Step **5630.** In Step **5360**, the Gateway indicates that the request type is not a supported request, and proceeds to Step 5635, where it returns to the caller.

If the request type is either for authorization only or for a sale, execution proceeds with Step **5640**. In step **5640,** the Gateway initializes a container object to represent the request. In Step **5650,** the Gateway extracts the [transaction identifier?] (XID) for the transaction. In Step **5652,** the Gateway extracts the merchant identifier (MID) for the transaction. In Step **5654**, the Gateway extracts the [what is the RRPID?] (RRPID) and the terminal identifier (TID) for the request. In Step **5656**, the Gateway extracts the retry count associated with the current request. In Step **5660**, a message data area is initialized with the extracted contents. The message area can then be used for further processing by the called routine. In Step **5690,** the GetSetKeyFields routine returns control to the caller.

**Gwdb IsSetMsgStale**

Figure **57** depicts the Gwdb_IsSetMsgStale routine. This routine is called by Step **5215** as illustrated in Figure **52A.** Execution begins in Step **5700.** In Step **5710**, the Gateway checks to see whether this is the first time the Gwdb_IsSetMsgStale has been called for this request. If this is the first time, Steps **5715** through **5730** are performed; otherwise those steps are skipped. In Step **5715**, a field representing the message life is initialized to a predetermined duration. The message life is a field that will be used to determine how long the message representing the transaction will remain valid. The use of the message life field prevents a transaction that is effectively lost due to extensive processing delays from being processed. In Step **5720,** the Gateway checks to see if the value of the message life is equal to zero. If the message life is equal to zero, a default value, i.e., 300 seconds or 5 minutes, is assigned to the message life in Step **5725**. In Step **5730,** an indicator for this request is set to indicate that first time processing has already been performed for this request. This flag is the same flag interrogated in Step 5710, and is used to prevent successive reinitialization of the message life field.

In Step **5740**, the Gateway checks to see whether the merchant's time stamp, plus the value of the message life, is less than the time of the request. If so, then the request is considered stale, and is marked stale in Step **5750**. If not, the request is not stale, and is marked not stale in Step **5755**. Following either of Step **5750** or **5755**, the Gwdb_IsSetMsgStale exits in Step **5790.**

**Gwdb InsertSetMsg**

Figure **58** depicts the Gwdb_InsertSetMsg routine. This routine is called from Step **5230** as illustrated in Figure **52A**. Execution begins in **5800**. In Step **5810,** the routine invokes a database insert function by, for example, executing an SQL INSERT command. In Step **5820,** the database return code is obtained in order to be used as a return code from the Gwbd_InsertSetMsg routine. In Step **5830,** a database commit function is performed, thereby instructing the database engine to commit the database changes to a permanent recording, i.e., by writing the information to the file, and/or by journalizing the change made by INSERT function. In Step 5890, the routine returns control to the calling program.

**Gwbd GetHostMsg**

Figure **59** depicts the Gwbd_GetHostMsg routine. This routine is called by Step **5245** as shown in Figure **52B**. Execution begins in Step **5900**. In Step **5910**, the routine invokes a database select function by, for example, executing an SQL SELECT command. In Step **5920,** the database return code is obtained in order to be used as a return code from the Gwbd_InsertSetMsg routine. In Step **5930,** the Gateway checks to see whether the database retrieve operation was successfully performed. If so, execution proceeds to Step **5935**. In Step **5935**, the Gateway sets a number of status variables from the values retrieved from the database records. This includes the time the request was made, the time a response was received, the contents of the request string, the contents of the response string, and a sequence number for this request. In Step **5940,** a commit operation is performed. [What is the point of a commit operation following a retrieval, as opposed to an insert or an update?] In Step **5900,** control returns to the calling program.

### Gwdb InsertHostMsg

Figure **60** depicts the Gwdb_InsertHostMsg routine. This routine is called by Step **5270** as illustrated in Figure **52B**. Execution begins in Step **6000**. In Step **6010,** the routine invokes a database insert function by, for example, executing an SQL INSERT command. In Step **6020,** the database return code is obtained in order to be used as a return code from the Gwbd_InsertSetMsg routine. in Step **6040,** a commit operation is performed. In Step **6090,** the routine returns control to the calling program.

### Gwdb UpdateSetMsgResponseInfo

Figure **61** depicts a flow diagram for the Gwdb_UpdateSetMsgResponseInfo routine. Execution begins at Step **6100**. In Step **6110,** the routine invokes a database update function by, for example, executing an SQL UPDATE command. In Step **6120,** the database return code is obtained in order to be used as a return code from the Gwbd_UpdateSetMsgResponseInfo routine. In Step **6190,** the routine returns control to the calling program.

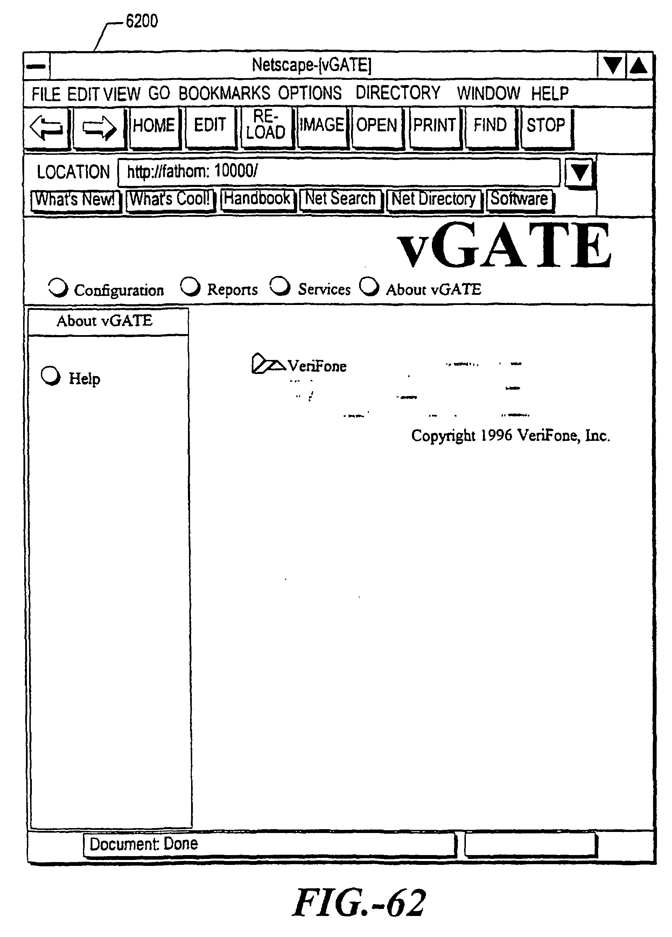

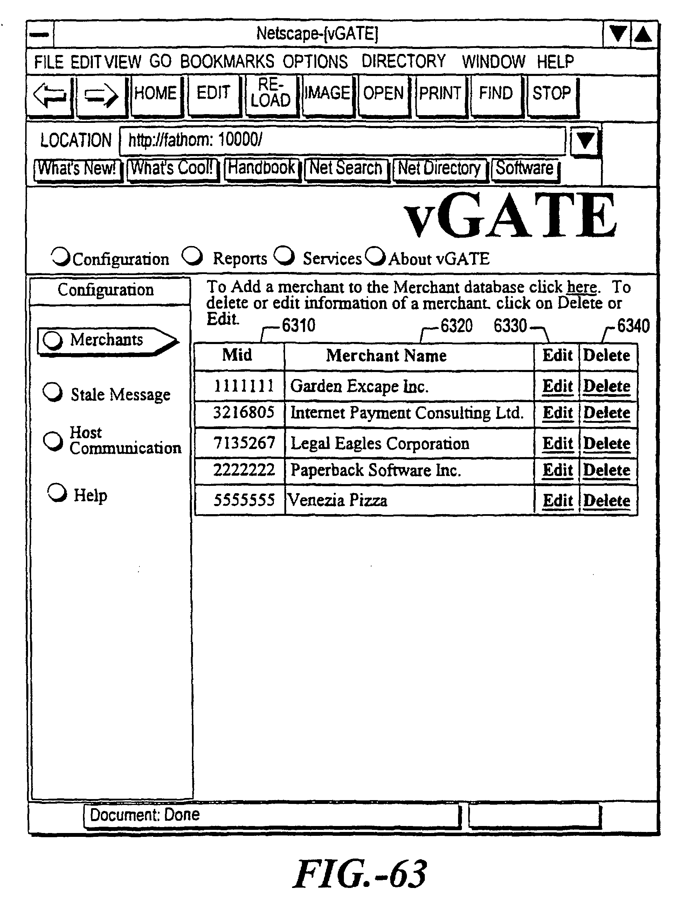

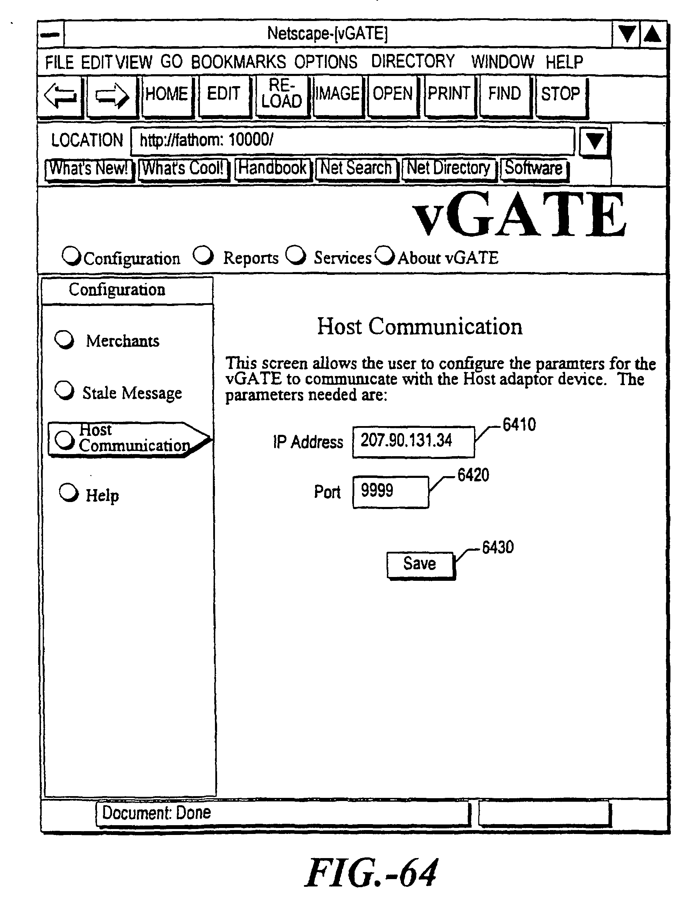

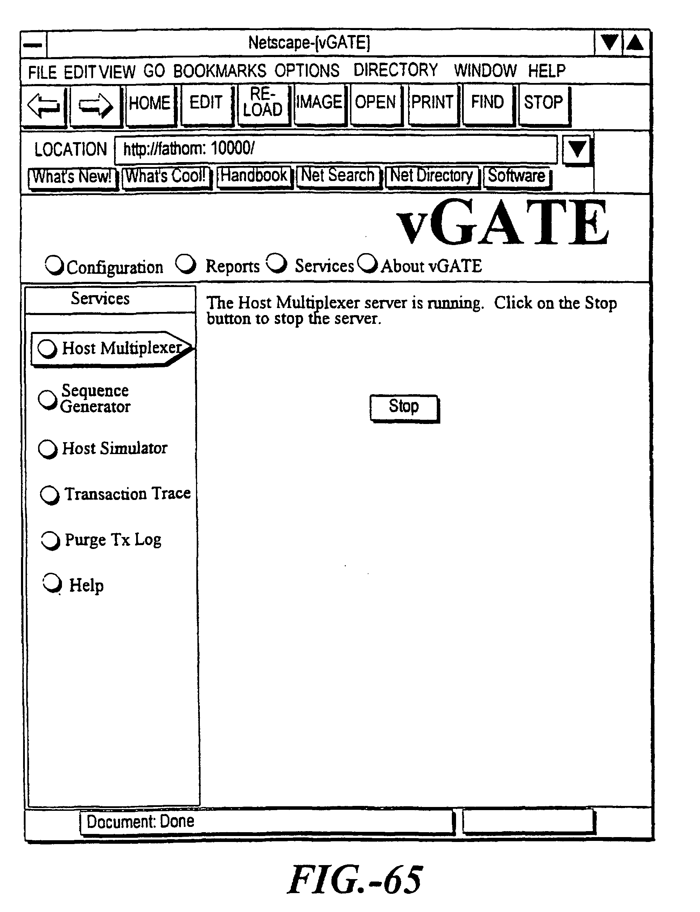

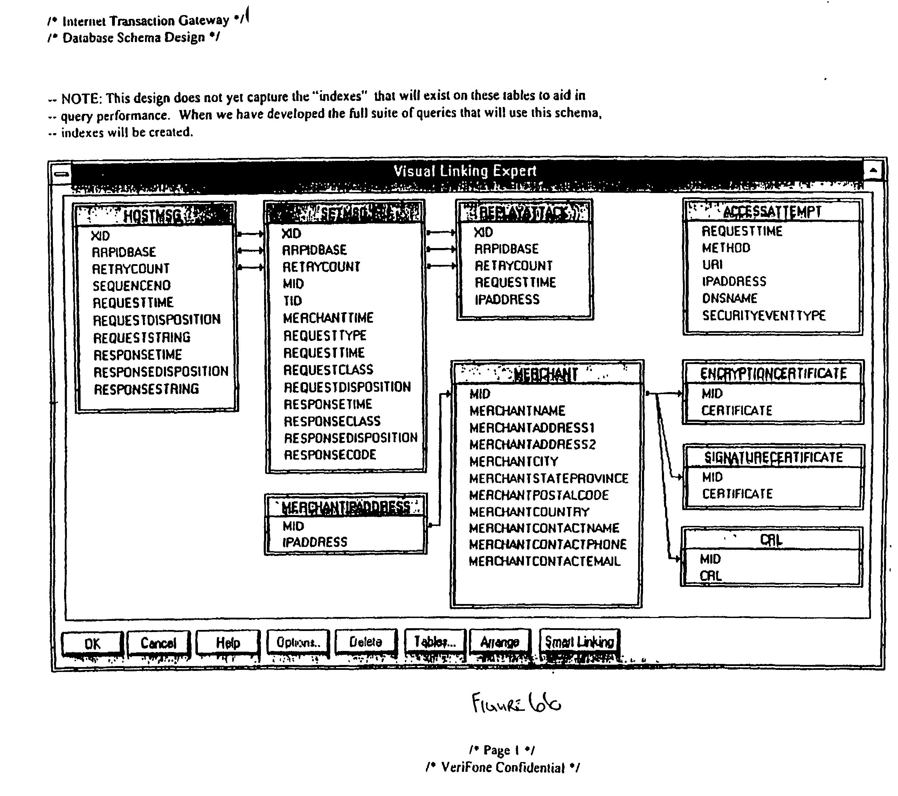

Figure **62** is the main administration display for the Gateway in accordance with a preferred embodiment. A set of menu selections are presented at **6200** which will be described in more detail for each display. Figure **63** is a configuration panel in accordance with a preferred embodiment. The configuration panel provides access to management information for configuring a gateway management information database. The Merchant Identifier (Mid) **6310** is a thirty character, alphanumeric field that uniquely defines a merchant. The Merchant Name **6320** is a fifty character, alphanumeric field, the Edit **6330** and Delete field **6340** are hyperlinks to detailed panels for modifying information in the management information database. Figure **64** is a host communication display for facilitating communication between the gateway and the acquirer payment host. The IP Address Field **6410** contains the Internet Protocol address for communicating via TCP/IP to the Internet. The TCP logical port field **6430** uniquely identifies the port for accessing the Internet, and the SAVE field **6430** invokes storing of the host communication information in the database. Figure **65** is a Services display in accordance with a preferred embodiment. This display initiates portions of the Gateway such as the host mulitplixer **2130** of Figure **21**. Figure **66** is a graphical representation of the gateway transaction database in accordance with a preferred embodiment. Each of the fields represents a portion of the internet database schema in accordance with a preferred embodiment.

## Claims

**1.**  A method for communicating between a server and a payment gateway, comprising the steps of:

receiving data into the server, the server processing data for two or more storefronts, each storefront corresponding to a particular merchant;
parsing the data and determining which of the two or more merchants is associated with the data;
generating a formatted transaction in accordance with a predefined syntax;
encrypting the formatted transaction digital credentials associated with the merchant associated with the data;
establishing a communication link between the server and the payment gateway; and transmitting the encrypted transaction across the communication link from the server to the payment gateway.

**2.**  The method of claim 1, including the step of formatting the transaction in accordance with a secure electronic protocol.

**3.**  The method of claim 1, wherein the communication link operates under the HTTP protocol.

**4.**  The method of claim 1, wherein the transaction is formatted as a MIME-encapsulated PKCS-7 message.

**5.**  The method of claim 1, wherein the digital credentials are public key certificates.

**6.**  The method of claim 1, wherein the digital credentials are passwords sent over a secure communication link.

**7.**  The method of claim 1, wherein digital credentials are selected dynamically based on a transaction type.

**8.**  The method of claim 1, wherein digital credentials are selected dynamically based on a payment instrument associated with the data.

9. The method as recited in claim 1, further comprising the steps of:

presenting an authentication display to the remote client;
establishing a communication link between the client and the server;
receiving data into the server from the communication link from the client;
parsing the data and extracting digital credentials;
authenticating an owner of the digital credentials to verify that the owner is authorized to perform electronic transactions on the server; and
allowing the owner to access electronic commerce application modules on the server from a remote location on the client.

10. An apparatus for communicating between a server and a payment gateway comprising:

a means for receiving data into the server, the server processing data for two or more storefronts, each storefront corresponding to a particular merchant;
a means for parsing the data and determining which of the two merchants is associated with the data;
a means for generating a formatted transaction in accordance with a predefined syntax;
a means for encrypting the formatted transaction using digital credentials associated with the merchant associated with the data;
a means for establishing a communication link between the server and the payment gateway; and
a means for transmitting the encrypted transaction across the communication link from the server to the payment gateway.

**Patentansprüche**

1. Verfahren zum Kommunizieren zwischen einem Server und einem Zahlungsanschluss (payment gateway) umfassend die Schritte:

Empfangen von Daten in dem Server, wobei der Server Daten von zwei oder mehr Portalen (storefronts) bearbeitet, wobei jedes Portal einem bestimmten Händler zugeordnet ist;
Analysieren der Daten und Bestimmen, welcher der zwei oder mehr Händler mit den Daten assoziiert ist;
Erzeugen einer formatierten Transaktion in Übereinstimmung mit einem vordefinierten Syntax;
Chiffrieren der formatierten Transaktion digitaler Berechtigungsnachweise, die mit dem Händler assoziiert sind, der mit den Daten assoziiert ist;
Aufbauen einer Kommunikationsverbindung zwischen dem Server und dem Zahlungsanschluss; und
Übertragen der chiffrierten Transaktion über die Kommunikationsverbindung von dem Server zu dem Zahlungsanschlusspunkt

2. Verfahren nach Anspruch 1, umfassend den Schritt des Forrnatierens der Transaktion in Übereinstimmung mit einem elektronischen Sicherheitsprotokoll.

3. Verfahren nach Anspruch 1, wobei die Kommunikationsverbindung unter dem HTTP-Protokoll arbeitet.

4. Verfahren nach Anspruch 1, wobei die Transaktion als eine MIME-eingekapselte PKCS-7-Mitteilung formatiert wird.

5. Verfahren nach Anspruch 1, wobei die digitalen Berechtigungsnachweise Zertifikate öffentlicher Schlüssel sind.

6. Verfahren nach Anspruch 1, wobei die digitalen Berechtigungsnachweise über eine sichere Kommunikationsverbindung gesendete Passwörter sind.

7. Verfahren nach Anspruch 1, wobei die digitalen Berechtigungsnachweise basierend auf einem Transaktionstyp dynamisch selektiert werden.

8. Verfahren nach Anspruch 1, wobei die digitalen Berechtigungsnachweise basierend auf einem mit den Daten assoziierten Zahlungsinstrument dynamisch selektiert werden.

9. Verfahren gemäß Anspruch 1, ferner umfassend die Schritte:

Darstellen einer Authentifizierungsanzeige an den Fernclient (remote client);
Aufbauen einer Kommunikationsverbindung zwischen dem Client und dem Server;
Empfangen von Daten in dem Server von dem Client über die Kommunikationsverbindung;
Analysieren der Daten und Extrahieren der digitalen Berechtigungsnachweise;
Authentifizieren eines Besitzers der digitalen Berechtigungsnachweise, um zu verifizieren, dass der Besitzer autorisiert ist, elektronische Transaktionen auf dem Server durchzuführen; und
Erteilen der Erlaubnis für den Besitzer, auf Module elektronischer Handelsapplikationen auf dem Server von einem entfernten Ort des Clients zuzugreifen.

10. Vorrichtung zum Kommunizieren zwischen einem Server und einem Zahlungsanschluss (payment gateway), umfassend:

Mittel zum Empfangen von Daten in dem Server, wobei der Server Daten von zwei oder mehr Portalen (storefronts) bearbeitet, wobei jedes Portal einem bestimmten Händler zugeordnet ist;
Mittel zum Analysieren der Daten und Bestimmen, welcher der beiden Händler mit den Daten assoziiert ist;
Mittel zum Erzeugen einer formatierten Transaktion in Übereinstimmung mit einem vordefinierten Syntax;
Mittel zum Chiffrieren der formatierten Transaktion unter Verwendung digitaler Berechtigungsnachweise, die mit dem Händler assoziiert sind, der mit den Daten assoziiert ist;
Mittel zum Aufbauen einer Kommunikationsverbindung zwischen dem Server und dem Zahlungsanschluss; und
Mittel zum Übertragen der chiffrierten Transaktion von dem Server über die Kommunikationsverbindung an den Zahlungsanschluss.

## Revendications

1. Procédé de communication entre un serveur et une passerelle de paiement, comprenant les étapes consistant à :

recevoir des données dans le serveur, le serveur traitant les données pour au moins deux magasins, chaque magasin correspondant à un marchand particulier ;
procéder à l'analyse des données et déterminer lequel des au moins deux marchands est associé aux données ;
générer une transaction formatée selon une syntaxe prédéterminée ;
crypter les justificatifs numériques de transaction formatée associés au marchand associé aux données ;
établir une liaison de communication entre le serveur et la passerelle de paiement ; et transmettre la transaction cryptée sur la liaison de communication du serveur à la passerelle de paiement.

2. Procédé selon la revendication 1, comprenant l'étape consistant à formater la transaction conformément à un protocole électronique sécurisé.

3. Procédé selon la revendication 1, dans lequel la liaison de communication fonctionne conformément au protocole HTTP.

4. Procédé selon la revendication 1, dans lequel la transaction est formatée en tant que message PKCS-7 encapsulé de type MIME.

5. Procédé selon la revendication 1, dans lequel les justificatifs numériques sont des certificats de clef publique.

6. Procédé selon la revendication 1, dans lequel les justificatifs numériques sont des mots de passe envoyés sur une liaison de communication sécurisée.

7. Procédé selon la revendication 1, dans lequel les justificatifs numériques sont sélectionnés dynamiquement en fonction d'un type de transaction.

8. Procédé selon la revendication 1, dans lequel les justificatifs numériques sont sélectionnés dynamiquement en fonction d'un instrument de paiement associé aux données.

9. Procédé selon la revendication 1, comprenant en outre les étapes consistant à :

présenter un affichage d'authentification au client distant ;

établir une liaison de communication entre le client et le serveur ;

recevoir des données dans le serveur sur la liaison de communication en provenance du client ;

procéder à l'analyse des données et extraire les justificatifs numériques ;

authentifier un propriétaire des justificatifs numériques pour vérifier si le propriétaire est autorisé à effectuer des transactions électroniques sur le serveur ; et

permettre au propriétaire d'accéder à des modules d'application de commerce électronique sur le serveur à partir d'un emplacement distant sur le client.

**10.** Appareil de communication entre un serveur et une passerelle de paiement comprenant :

un moyen pour recevoir des données dans le serveur, le serveur traitant les données pour au moins deux magasins, chaque magasin correspondant à un marchand particulier ;

un moyen d'analyse des données et de détermination de celui parmi les au moins deux marchands qui est associé aux données ;

un moyen pour générer une transaction formatée conformément à une syntaxe prédéterminée ;

un moyen pour crypter la transaction formatée en utilisant des justificatifs numériques associés au marchand associé aux données ;

un moyen pour établir une liaison de communication entre le serveur et la passerelle de paiement ; et

un moyen pour transmettre la transaction cryptée sur la liaison de communication du serveur à la passerelle de paiement.

**FIG.-1A**

**FIG.-1B**

MERCHANT WEB SITE 180

SHOPPING
CGI
190

PAYMENT
INSTRUC-
TIONS
192

ADDRESS
INSTRUC-
TIONS
194

BANK WEB SITE 182

CERTIFICATE
ISSUANCE CGI
162

SINGLE
ACCOUNT
WALLET
160

VERIFONE WEB SITE 184

PAYWINDOW
HELPER APP.
188

PAYWINDOW
SETUP
HELPER APP.
172

CERTIFICATE
INSTALLATION
HELPER APP.
174

ADDRESS
REQUISITION
HELPER APP.
176

REMAINING
PAYWINDOW
MODULES
178

CONSUMER DESKTOP 186

BROWSER
140

PAYWINDOW
SETUP HELPER
APP.142

CERTIFICATE
INSTALLATION
HELPER 148

ADDRESS
REQUISITION
HELPER 146

PAY WINDOW
HELPER 148

WALLET
MANAGER
150

CERTIFICATE
MANAGER
152

PAYMENT
MANAGER
154

WALLET
COMPONENT
DATA
MANAGER
156

CRYPTO &
PROTOCOL
LIBRARY
157

WALLETS
158

*FIG.-1C*

CUSTOMER

MERCHANT

150

CLIENT HELLO — 210

SERVER HELLO — 215

SERVER CERTIFICATE — 220

SERVER KEY EXCHANGE — 225

SERVER HELLO DONE — 230

120

130

CLIENT CERTIFICATE — 240

NO-CLIENT-CERTIFICATE ALERT — 245

CLIENT KEY EXCHANGE — 250

FINISHED — 260

SECURE COMMUNICATION — 270

## FIG.-2

130

310

REQUEST AUTHORIZATION

MERCHANT AUTHORIZATION REQUEST — 315

140

330

PROCESS REQUEST

320

PROCESS RESPONSE

MERCHANT AUTHORIZATION RESPONSE — 325

## FIG.-3

CREATE
AUTHORIZATION
REQUEST — 410

↓

ADD MERCHANTS:
ENCRYPTION CERT.
SIGNATURE CERT.
DIGITAL SIG. — 420

↓

GENERATE
RANDOM KEY
RK-0 — 430

↓

ENCRYPT WITH
RANDOM KEY
RK-0 — 440

↓

ENCRYPT RAND.
KEY WITH
P.G. PUBLIC KEY — 450

↓

CONCATENATE
ENCRYPTED
REQUEST AND
ENCRYPTED
RANDOM KEY RK-0 — 460

↓

TRANSMIT — 470

*FIG.-4*

510 — AUTHORIZATION REQUEST

**FIG.-5A**

530 —

510 — AUTHORIZATION REQUEST

515 — M CRYPT CERT

520 — M SIG CERT

525 — M SIG

**FIG.-5B**

540 — RK-0

**FIG.-5C**

550

555

RK-0

**FIG.-5D**

560

565

PG PUB KEY

**FIG.-5E**

550

RK-0

315

560

PG PUB KEY

**FIG.-5F**

DECRYPT RANDOM KEY — 610

DECRYPT COMBINED BLOCK — 615

VERIFY MERCHANTS CERTIFICATES — 620

VALIDATE DIGITAL SIGNATURE — 625

CLEAR WITH FINANCIAL INSTITUTION — 630

CREATE AUTHORIZATION RESPONSE — 635

ADD PAYMENT GW'S: SIG CERT DIGITAL SIG — 640

GENERATE RK-1 — 645

6B

**FIG.-6A**

6B

ENCRYPT WITH RK-1 — 650

ENCRYPT RK-1 WITH MERCHANT PUBLIC KEY — 655

GEN CAPTURE TOKEN — 660

GEN RK-2 — 665

ENCRYPT CAPTURE TOKEN WITH RK-2 — 670

ENCRYPT RK-2 WITH P.G. PUB KEY — 675

CONCATENATE — 680

TRANSMIT — 685

**FIG.-6B**

73

710 — AUTHORIZATION RESPONSE

*FIG.-7A*

730

710 — AUTHORIZATION RESPONSE

720 — PG SIG CERT

725 — DIGITAL SIG

*FIG.-7B*

740 — RK-1

*FIG.-7C*

750

755 — RK-1

*FIG.-7D*

760

765 — M PUB KEY

*FIG.-7E*

770 — CAPTURE TOKEN

*FIG.-7F*

775 — RK-2

*FIG.-7G*

780

785 — RK-2

*FIG.-7H*

795

790 — PG PUB KEY

*FIG.-7I*

750 — RK-1

325

760 — M PUB KEY

780 — RK-2

790 — PG PUB KEY

*FIG.-7J*

DECRYPT RK-1 — 810

DECRYPT COMBINED BLOCK — 820

VERIFY P.G. CERTIFICATE — 830

VALIDATE P.G. SIGNATURE — 840

STORE COMBINED ENCRYPTED CAPTURE TOKEN & ENCRYPTED RK-2 — 850

PROCESS CUSTOMER PURCHASE REQUEST — 860

*FIG.-8*

130

REQUEST CAPTURE — 910

MERCHANT CAPTURE REQUEST — 915

140

PROCESS CAPTURE REQUEST — 930

PROCESS CAPTURE RESPONSE — 920

MERCHANT CAPTURE RESPONSE — 925

*FIG,-9*

CREATE CAPTURE
REQUEST ————1010

ADD MERCHANTS:
ENCRYPTION CERT
SIGNATURE CERT ————1020
DIGITAL SIG

GENERATE
RANDOM KEY RK-3 ————1030

ENCRYPT WITH
RANDOM KEY RK-3 ————1040

ENCRYPT RANDOM
KEY RK-3 WITH ————1050
P.G. PUBLIC KEY

CONCATENATE ENCRYPTED
CAPTURE REQUEST:
ENCRYPTED RK-3; SAVED ————1060
ENCRYPTED CAPTURE
TOKEN; ENCRYPTED RK-2

TRANSMIT ————1070

*FIG.-10*

DECRYPT
RK-4 ————1410

DECRYPT
COMBINED BLOCK ————1420

VERIFY
P.G.
CERTIFICATE ————1430

VALIDATE
P.G. SIG ————1440

STORE CAPTURE
RESPONSE ————1450

*FIG.-14*

1110 — CAPTURE REQUEST

**FIG.-11A**

1130
1110 — CAPTURE REQUEST
1115 — M CRYPT CERT
1120 — M SIG CERT
1125 — M SIG

**FIG.-11B**

1140 — RK-3

**FIG.-11C**

1150
1155 — RK-3

**FIG.-11D**

1160
1165 — PG PUB KEY

**FIG.-11E**

1150 — RK-3
1160 — PG PUB KEY
780 — RK-2
790 — PG PUB KEY
915

**FIG.-11F**

DECRYPT RANDOM KEY RK-3 — 1210

DECRYPT COMBINED BLOCK — 1215

VERIFY MERCHANTS CERTIFICATES — 1220

VALIDATE DIGITAL SIGNATURE — 1225

DECRYPT RANDOM KEY RK-2 — 1230

DECRYPT CAPTURE TOKEN — 1235

VERIFY CONSISTENCY BETWEEN CAPTURE REQUEST AND CAPTURE TOKEN — 1240

TRIGGER FUND TRANSFER — 1245

12B

*FIG.-12A*

12B

CREATE BASIC CAPTURE RESPONSE — 1250

ADD PG'S: SIG CERTIFICATE DIGITAL SIG — 1255

GENERATE RK-4 — 1260

ENCRYPT WITH RK-4 — 1270

ENCRYPT RK-4 WITH MERCHANT PUBLIC KEY — 1275

CONCATENATE — 1280

TRANSMIT — 1285

*FIG.-12B*

1310 — CAPTURE RESPONSE

*FIG.-13A*

1330

1310 — CAPTURE RESPONSE

1320 — PG SIG CERT

1325 — DIGITAL SIG

*FIG.-13B*

1340 — RK-4

*FIG.-13C*

1350

1355 — RK-4

*FIG.-13D*

1360

1365 — M PUB KEY

*FIG.-13E*

1350

925

RK-4

1360

M PUB KEY

*FIG.-13F*

1510— "MERCHANT-INITIATED" Txn

1500— "CONSUMER-INITIATED" Txn

| VPoS CARTRIDGE API | 1512 |
| VPoS C++ API | 1514 |
| PAYMENT PROTOCOL LAYER | 1516 |

HTTP PROTOCOL, MOTP FORMAT

GATEWAY 1530

*FIG.-15A*

1565— PROTOCOL MODULE

1545— MERCHANT WEB SERVER INTERFACE

1560— AUTHORIZATION /DATA CAPTURE MODULE

1570— SECURE ISO 8583

1579 GATEWAY

ABSTRACTION

1550— MERCHANT VPoS GUI

SECURE OBJECTS

1595— VPoS CONFIGURATION DATA

1580 TRANSACTION LOG

*FIG.-15B*

## Transaction Class Hierarchy

CVPCLTransaction

- CVPCLHostTrans (3.1)
  - CVPCLFinancialTrans (3.1.1)
    - CVPCLAuthOnly (3.1.1.1)
    - CVPCLAuthCapture (3.1.1.3)
    - CVPCLReturn (3.1.1.5)
    - CVPCLPreAuth (3.1.1.7)
    - CVPCLOfflineAuth (3.1.1.4)
    - CVPCLFinModifyAuth
      - CVPCLAdjust (3.1.1.9)
      - CVPCLVoid (3.1.1.6)
      - CVPCLForcedPost (3.1.1.2)
      - CVPCLPreAuthComp (3.1.1.8)
  - CVPCLAdminHostTrans (3.1.2)
    - CVPCLBalanceInq (3.1.2.1)
    - CVPCLReconcile (3.1.2.2)
    - CVPCLHostLogon (3.1.2.3)
    - CVPCLParametersDnld (3.1.2.4)
    - CVPCLTestHost (3.1.2.5)

- CVPCLLocalTrans (3.2)
  - CVPCLLockVPOS (3.2.6)
  - CVPCLUnlockVPOS (3.2.5)
  - CVPCLTransDataAdmin
    - CVPCLBatchReview (3.2.2)
    - CVPCLClearBatch (3.2.3)
    - CVPCLAccumReview (3.2.1)
    - CVPCLClearAccum (3.2.4)
  - CVPCLConfigDataAdmin (3.2.7)
    - CVPCLHDTReview (3.2.7.1)
    - CVPCLCDTReview (3.2.7.2)
    - CVPCLCPTReview (3.2.7.3)
    - CVPCLTCTReview (3.2.7.4)
    - CVPCLHDTUpdate
    - CVPCLCDTUpdate
    - CVPCLCPTUpdate
    - CVPCLTCTUpdate

Figure 16

Architecture:

FIGURE 18A

1700 1710 1720 1730 1740

MERCHANT VPOS AUTHORIZER PROTOCOL GATEWAY
SERVER GUI MODULE

SALES ORDER

SALES
ORDER GET PAYMENT PROTOCOL
APPROVAL REQUEST MSG

PAYMENT PROTOCOL
ANALYZE REPONSE MSG

APPROVAL

APPROVAL

## FIG.-17

MIME MULTIPART (1890)

MIME APPL./EXT.-SET (1891)

PKCS-7 (1892)      n
<NAME[LEN]=VALUE>

MIME APPLICATION SET (1896)

PKCS-7 (1894)
<STAND.SET-PDU (1895)>

## FIG.-18B

RECEIVE
INCOMING
1880

AUTHENTIC?
1883 — No

Yes

DECRYPT
MESSAGE
1884

No

PARSE
MESSAGE
1885

MESSAGE
CONFORM?
1887 — No

LOG
MESSAGE
HANDLE
ERROR
1889

Yes

TRANSLATE & SEND
1888

# FIGURE 18C

MIME MULTIPART (1890)

MIME APPLICATION SET (1896)

PKCS-7 (1894)

<messagetype{5}=logon>
<ESETversion{4}=1.0A>
<logonID{3}=gak>
<password{4}=k27g>
<date{6}=060596>
<time{6}=112137>

# FIGURE 18D

MIME MULTIPART (1890)

MIME APPLICATION SET (1896)

PKCS-7 (1894)

<messagetype[7]=logonOK>
<ESETversion[4]=1.0A>
<logonID[3]=gak>
<password[4]=k27g>
<date[6]=060596>
<time[6]=112137>

**FIG.-18E**

**FIG.-19**

2001

POS
TERMINAL

2003

AQUIRING
BANK

2000

XACT
REQ

2002

## FIG.-20A

2002

2005

| TID |
| TRANSACTION TYPE |
| AMOUNT |
| CURRENCY TYPE |
| ACCOUNT NO. |
| EXP. DATE |
| OTHER DATA |

2006

## FIG.-20B

2008

DB

2010

XACT
REQ

2010

XACT
REQ

2000

2003

2004

ACA
BANK

VPOS

2007

XACT
REQ

XACT
REQ

## FIG.-20C

**FIG.-20D**

**FIG.-20E**

OVERVIEW USING TID
OBTAIN & RELEASE

START —— 2020

PREPARE XACT
REQUEST
STRUCTURE —— 2021

2022 —— OBTAIN TID

WAIT FOR XACT END —— 2025

2023 —— TID OBTAINED? ——NO——> QUEUE
TRANSACTION —— 2024

SUBMIT XACT —— 2026

PROCESS —— 2027

RELEASE TID —— 2028

END —— 2029

*FIG.-20F*

TID
OBTAIN
RTN

FIGURE 20G

RELEASE
TID
ROUTINE

START — 2060

CONSTRUCT SQL TO SAT GSO:Null — 2062

EXECUTE SQL — 2064

EXIT — 2069

FIGURE 20H

FIG.-21A

MULTITHREADED GATEWAY ENGINE — 2110

SET REQUEST

2124
FORWARD CONVERTER

RETRY

SET RESPONSE

TRANSACTION CACHE

HOST REQUEST

2130

REVERSE CONVERTER

SET RESPONSE

HOST RESPONSE

SOCKET MUX

TCP

2140

COMM DEVICE

HOST

SECURITY RECORD

SECURITY LOGGER — 2150

TRANSACTION RECORD

TRANSACTION LOGGER — 2155

A

FIG.-21B

EP 0 919 048 B1

93

2200

PAY!
CUSTOMER

PAY!
CUSTOMER

PAY!
CUSTOMER

PAY!
CUSTOMER

PAY!
CUSTOMER

PAY!
CUSTOMER

INTERNET SPACE
<MID, TID, XID>

HTTPS
HTTPS
HTTPS

2210

VPOS
1-1
1-2
1-3

MERCHANT 1

HTTPS

2220

VPOS
2-1

MERCHANT 2

HTTPS

2230

VPOS
m-1
m-2

HTTPS  MERCHANT m

ONE VPOS INSTANCE
PER ON-LINE CUSTOMER

LEGACY SPACE

<MID, TID, XID,RRPID, TIME>

2240

SET/HTTPS
SET/HTTPS
SET/HTTPS
SET/HTTPS
SET/HTTPS
SET/HTTPS

GATEWAY

HOST/
VIRTUAL
CIRCUITS

2250

HOST

MID      MERCHANT ID
TID      TERMINAL ID
XID      SET TRANSACTION ID
RRPID    REQUEST-RESPONSE PAIR ID
TIME     DATE-TIME STAMP

*FIG.-22*

EP 0 919 048 B1

94

MERCHANT SERVER

...

MERCHANT SERVER

...

MERCHANT SERVER

INTERNET

SET

HTTP
SSL
TCP/IP

RED NET

BLUE NET

CRQ6

FW

GATEWAY SERVER

NIP

TNS NETWORK

CES HOST

X.25

2300          2310   2320                    2330        2340  2350   2360        2370

**FIG.-23**

EP 0 919 048 B1

```
                    HP 9000 PA-RISC Server

┌──────────────┬──────────────┐   ┌──────────────┐   ┌──────────────┐
│ VeriFone     │ VeriFone     │   │    NSAPI     │   │  Pro•C  PL/SQL│
│ Transaction  │ Message      │◄──┤              ├──►│              │
│ Application  │ Converter    │   │              │   │              │
│              ├──────────────┤   │   Netscape   │   │  Oracle 7.3  │
│              │ VeriFone     │   │  Enterprise  │   │  Database    │
│ VeriFone     │ SET Lib      │   │  Server 2.0  │   │  System      │
│ Transaction  ├──────────────┤   ├──────────────┤   ├──────────────┤
│ Platform     │ VeriFone     │   │    HTTP      │   │   SQL•Net    │
│              │ Crypto Lib   │   ├──────────────┤   │              │
│              │              │   │    SSL       │   │              │
├──────────────┴──────────────┴───┴──────────────┴───┴──────────────┤
│              HP/UX 10.10 Operating System                         │
├───────────────────────────────────────────────────────────────────┤
│              Protocol Stacks and Device Drivers                   │
└───────────────────────────────────────────────────────────────────┘
```

*to Host Network*          *to LAN and Internet*          *Transaction Log*
                                                          *Configuration Data*
                                                          *Management Data*

# FIGURE 24

# vPOS Terminal Architecture

Web Server ～ 2500

2530

2520

Merchant
Storefront
Docs ～ 2510

Operator

2550

2540

vPOS
SDK ～ 2590

2560

2570

Gateway Server ～ 2580

FIGURE 25

SEMERU
ARCHITECTURE

BRANDED/GUI
APPLICATIONS
WALLET/
PAYWINDOW
2600

RECEIPTS/TRANSACTIONS

WALLET
MANAGER
2602

CERTIFICATE
MANAGER
2604r

PAYMENT
MANAGER
2606

MERCHANT'S
APPLET OR MIME
MESSAGE
2508

CONSUMER
PAYMENTS
CLASS LIBRARY
2610

DATA
MANAGER
2614

SET
PROTOCOL
2612

ODBC/JDBC
2616

CYBER CASH
2620

CRYPTO API
2630

WALLET
FILE
2640

SMART
CARD
WALLET
2650

CRYPTO
SOFTWARE
2660

CRYPTO
HARDWARE
2670

TCP/IP
2680

# FIG.-26

**FIG.-27**

FIGURE 28

Netscape [http://kimberly/paywind...certificate.request.htm]

FILE EDIT VIEW GO BOOKMARKS OPTIONS DIRECTORY WINDOW HELP

| | | HOME | EDIT | RE-LOAD | IMAGE | OPEN | PRINT | FIND | STOP |

LOCATION  http://kimberly/paywindow/verisign certificate request.htm ▼

What's New! | What's Cool! | Handbook | Net Search | Net Directory | Software

## Certificate Issuance Form

Please enter information into all fields If a field does not apply to you, enter N/A

2900 — **Card Information**

Card Number          4417 2222 3333 9191

2902 — Expiry Date          12/98

**Personal Information**

First Name          John

Middle          F          } 2904

Last          Smith

Home Phone #          111 222-3333          (example:555 555-5555 — 2912

Social Security Number          111-22-3333          (example: 999-99-9999) — 2908

Date of Birth          12/12/72          (month/day/year as 01/25/50) — 2910

Mother's Maiden Name          Jones          (for security purposes only)

**Address**          — 2906

Line 1          141-22 Long Drive

Line2          Kensington

Apt. #

City          Palo Alto          State  CA          Zip  94025

**VeriFone Wallet Information**          — 2930

Icon Preference          Wallet  ▼          — 2932

Password          ****          — 2934

Confirm Password          ****

Document Done

## FIG.-29

Netscape [Verisign Cettificate Request Response]  ▼▲

FILE  EDIT VIEW  GO  BOOKMARKS  OPTIONS   DIRECTORY    WINDOW  HELP

⇐  ⇒  HOME  EDIT  RE-LOAD  IMAGE  OPEN  PRINT  FIND  STOP

LOCATION   http://kimberly/cgi-win/paywindowdemo/bank.exe?CR  ▼

What's New!  What's Cool!  Handbook  Net Search  Net Directory  Software

## Certificate Issuance Response

Your request for a certificate has been approved. A VeriFone wallet has been created for you with the following information:

| Wallet Name | John's Wallet | — 3020 |
| Wallet Icon | ⬛ Icon | — 3010 |

| Credit Card Name | First USA Visa |
| Credit Card Number | 4417 2222 3333 9191 |
| Credit Card Icon | | — 3000 |
| | Visa | |

Click to install you new Verifone Wallet

## FIG.-30

Figure 31

3100

Figure 32

**PayWindow-John's Wallet**  ▼ ▲

| Wallet | Payment | Address |

First USA Visa

Card Name: First USA Visa
Card Holder Name: John F. Smith
Card Type: Visa
Number: 4417 2222 3333 9191
Expires: 12/98

[ Certificate... ]

☒ Use as default payment method

[ Add ] [ Remove ]

[ Done ] [ Cancel ]

## FIG.-33

**PayWindow-Authorization-John's Wallet**  ▼ ▲

Payment Method

| Order | Merchant | Ship to Address |

First USA Visa

[ Change Payment Method ]

```
HAWAII'S BEST ESPRESSO

1 Kona Wailapa Regular    $18.99
                          ------
SH                         $8.00
Tax                        $1.12

                          ------
Total                     $28.11
```

I Agree To Pay The Total Amount Shown Below
According To The Card Issuer Agreement.
Amount: $28.11
I Hereby Digitally Sign This Transaction

[ Accept ] [ Cancel ]

## FIG.-34

FIGURE 35

Virtual Point of Sale Terminal

FIGURE 36

Operator POS Terminal

FIGURE 37

Authorization Only Transaction

FIGURE 38

Administrator POS Terminal

FIGURE 39

VeriFone

# vPOS

## Terminal Totals Report

Note: The transaction is not currently implemented. The report below is a sample.

| Overall Terminal Totals | | |
|---|---|---|
| Sales | Trans. Count | 25 |
| | Amount | $6161.70 |
| Credits | Trans. Count | 5 |
| | Amount | ($11.70) |
| Net Sales | | $6150 70 |

| Visa Totals | | |
|---|---|---|
| Sales | Num. of Trans. | 5 |
| | Amount | $1232.34 |
| Credits | Num. of Trans. | 1 |
| | Amount | ($2.34) |
| Net Sales | | $1230.00 |

| MasterCard Totals | | |
|---|---|---|
| Sales | Trans. Count | 5 |
| | Amount | $1232.34 |
| Credits | Trans. Count | 1 |
| | Amount | ($2.34) |
| Net Sales | | $1230.00 |

| Discover Totals | | |
|---|---|---|
| Sales | Num. of Trans. | 5 |
| | Amount | $1232.34 |
| Credits | Num. of Trans. | 1 |
| | Amount | ($2.34) |
| Net Sales | | $1230.00 |

| American Express Totals | | |
|---|---|---|
| Sales | Num. of Trans. | 5 |
| | Amount | $1232.34 |
| Credits | Num. of Trans. | 1 |
| | Amount | ($2.34) |
| Net Sales | | $1230.00 |

# FIG.-40

Terminal Totals Report

| JCB Totals | | | |
|---|---|---|---|
| Sales | Num. of Trans. | | 5 |
| | Amount | | $1232.34 |
| Credits | Num. of Trans. | | 1 |
| | Amount | | ($2.34) |
| Net Sales | | | $1230.00 |

**ADMINISTRATOR**

Copyright

FIGURE 41

Terminal Setup

# Terminal Setup

**Terminal Tables Configuration**

| | |
|---|---|
| Card(s) Definition Table | Review |
| Acquirer(s) Definition Table | Review |
| Merchant Configuration Table | Review |
| | Help |

FIGURE 42

Update Card Definition Table

Content-type: text/html

**Transaction Type**                    CDT List Update/Review
**Cards accepted by the merchant**

<u>Visa</u>

FIGURE 43

Review Card Definition Table

| Transaction Type | CDT Record Update/Review |
|---|---|
| Card | Visa |
| PANHi | 4999 |
| PANLo | 4000 |
| Acquirer | VFITest |
| BrandID | VeriFone Test |
| CardPicture | /vpos/icons/paypage/visa.jp |
| Maximum PAN Digits | 16 |
| Minimum PAN Digits | 16 |

Update        Reset

FIGURE 44

Update Acquirer Definition Table

Content-type: text/html

**Transaction Type**        ADT List Update/Review

**Acquirer(s) for the the merchant**

VFITest

Figure 45

Review Acquirer Definition Table

| | |
|---|---|
| Transaction Type | ADT Record Update/Review |
| Acquirer | VFITest |
| MerchId | shouldbesenalnum |
| Batch Number | |
| HostName | VeriFone Test Gatewa |
| Transaction Ref Number | 0 |
| Response Time Out | 60 |
| Number of Retries | 1 |
| Acquirer Banner | /vpos/icons/paypage/vfitest. |

Update          Reset

FIGURE 46

117

Update Merchant Configuration Table

| Transaction Type | MCT Update |
|---|---|
| Merchant Name | tstore |
| Merchant e-mail | webmaster |
| Merchant URL | http://localhost/ |
| Merchant Postal Address | ? |
| Update | Reset |

FIGURE 47

**VeriFone** POS Point Of Sale

Order Number834100050

**Bill To**

**Account Number** VISA

| | |
|---|---|
| Name on Card | Good Through / |
| Address Line 1 | |
| Address Line 2 | |
| City | State/Province |
| Country | Zip/Postal Code |
| Email | Phone |

If you wish to have billing defaults set in your browser, check this box

## Total = $ 59.99

**By pressing the PAY button I agree to pay the above total amount
according to the card issuer agreement**

RETURN TO SHOPPING     PAY

FIGURE 48

RECEIVE
INCOMING
4930

AUTHENTIC?
4940

No

Yes

DECRYPT
MESSAGE
4950

No

PARSE
MESSAGE
4960

MESSAGE
CONFORM?
4980

No

LOG
&
ERROR
4970

Yes

TRANSLATE & SEND
4990

# FIGURE 49

INSTALL
CERT.
5000

CUSTOM.
5005

ADVISE
5010

SELECT
BANK
5015

Yes

VALID?
5020

◄ No

MATCH?
5025

No

PARSE
MESSAGE
5028

Yes

CONFIG.
CHANGES
5030

CHG. AUTH?
5035

No ►

VPOS UNCHG
5038

Yes

VPOS #
5040

DOWNLOAD
CUSTOM.
5050

# FIGURE 50

*FIG. 51*

**FIG. 52A**

FIG 52B

START — 5310

FORWARD-TRANSLATE TO PREPARE FOR TRANSMISSION — 5320

5135

TRANSLATION OK ? — 5330

N → RETURN ERROR — 5340

Y

INDICATE PROCEED-TO-HOST-COMMUNICATION — 5350

RETURN — 5360

*FIG. 53*

START — 5800

EXEC SQL INSERT — 5810

5230

RETRIEVE SQL RETURN CODE — 5820

COMMIT — 5830

RETURN — 5890

*FIG. 58*

START — 5400

GET
REQUEST
STRING — 5405          5145

GET
SQUENCE
NUMBER — 5410

DETERMINE
REQUEST
TIME — 5415

SEND TO HOST
AND WAIT
FOR RESPONSE — 5420

DETERMINE
RESPONSE
TIME — 5425

5430
COMM
OK?

Y

N

5435 — INDICATE
SUCCESS

5437 — SET
RESPONSE
STRING

INDICATE
ERROR — 5432

5439 — INDICATE
PROCEED-TO-
REVERSE-
XLATE

UDATE DB
WITH HOST
MSG STATUS — 5450

RETURN — 5490

**FIG. 54**

5500 — START

5510 — REVERSE-TRANSLATE RECEIVED RESPONSE

5520 — TRANSLATION OK?

5155

NO

YES

5530 — INDICATE SUCCESS

5540 — INDICATE ERROR

5550 — INDICATE PROCEED-TO-RESPOND

5590 — RETURN

*FIG. 55*

5900 — START

5910 — EXEC SQL SELECT

5245

5920 — RETRIEVE SQL RETURN CODE

5930 — OK?

N

Y

5935 — SET VARIABLES: REQUEST TIME RESPONSE TIME REQUEST STRING RESPONSE STRING SEQUENCE NO.

5940 — COMMIT

5990 — RETURN

*FIG. 59*

5600 — START

GET REQUEST TYPE — 5610

5205

5620 — REQ= AUTH ONLY? — Y

N — 5625

REQ= SALE? — Y    N

INITIALIZE REQUEST CONTAINER — 5640

INDICATE NOT SUPPORTED — 5630

A

5635 — RETURN

*FIG. 56A*

A

EXTRACT XID — 5650

EXTRACT MID — 5652

EXTRACT RRPID AND TID — 5654

EXTRACT RETRY COUNT — 5656

INITIALIZE MESSAGE — 5660

RETURN — 5690

*FIG. 56B*

FIG. 57

FIG. 60

FIG. 61

6200

Netscape-[vGATE]

FILE EDIT VIEW GO BOOKMARKS OPTIONS DIRECTORY WINDOW HELP

| ⇐ | ⇒ | HOME | EDIT | RE-LOAD | IMAGE | OPEN | PRINT | FIND | STOP |

LOCATION | http://fathom: 10000/ | ▼

What's New! | What's Cool! | Handbook | Net Search | Net Directory | Software

# vGATE

○ Configuration    ○ Reports    ○ Services    ○ About vGATE

About vGATE

○ Help

VeriFone

Copyright 1996 VeriFone, Inc.

Document: Done

## FIG.-62

| Mid | Merchant Name | Edit | Delete |
|---|---|---|---|
| 1111111 | Garden Excape Inc. | Edit | Delete |
| 3216805 | Internet Payment Consulting Ltd. | Edit | Delete |
| 7135267 | Legal Eagles Corporation | Edit | Delete |
| 2222222 | Paperback Software Inc. | Edit | Delete |
| 5555555 | Venezia Pizza | Edit | Delete |

**FIG.-63**

Netscape-[vGATE]

FILE EDIT VIEW GO BOOKMARKS OPTIONS DIRECTORY WINDOW HELP

⬅ ➡ HOME | EDIT | RE-LOAD | IMAGE | OPEN | PRINT | FIND | STOP

LOCATION | http://fathom: 10000/ | ▼

What's New! | What's Cool! | Handbook | Net Search | Net Directory | Software

# vGATE

◯ Configuration  ◯ Reports  ◯ Services  ◯ About vGATE

## Configuration

◯ Merchants

◯ Stale Message

◯ Host Communication

◯ Help

## Host Communication

This screen allows the user to configure the paramters for the vGATE to communicate with the Host adaptor device. The parameters needed are:

IP Address | 207.90.131.34 | — 6410

Port | 9999 | — 6420

| Save | — 6430

Document: Done

# FIG.-64

**FIG.-65**

/* Internet Transaction Gateway */
/* Database Schema Design */

-- NOTE: This design does not yet capture the "indexes" that will exist on these tables to aid in
-- query performance. When we have developed the full suite of queries that will use this schema,
-- indexes will be created.

Figure 66